(19) Europäisches Patentamt
European Patent Office
Office européen des brevets

(11) EP 3 695 723 A1

(12) EUROPEAN PATENT APPLICATION

(43) Date of publication:
19.08.2020 Bulletin 2020/34

(21) Application number: 20157281.5

(22) Date of filing: 22.12.2014

(51) Int Cl.:
*A01N 49/00* (2006.01) *A01N 25/02* (2006.01)
*A01P 1/00* (2006.01) *A01M 25/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 23.12.2013 GB 201322967

(62) Document number(s) of the earlier application(s) in accordance with Art. 76 EPC:
**14831050.1 / 3 086 643**

(71) Applicant: **Goode, Steven**
**Leominster, Hereford and Worcester HR6 9NE (GB)**

(72) Inventors:
- **GOODE, Steven**
**Leominster**
**Hereford and Worcester HR6 9NE (GB)**
- **INGHAM, Andrew**
**Keighley**
**Yorkshire BD21 4BH (GB)**

(74) Representative: **Linn, Samuel Jonathan**
**23 Bings Road**
**Whaley Bridge**
**Derbyshire SK23 7ND (GB)**

Remarks:
This application was filed on 13-02-2020 as a divisional application to the application mentioned under INID code 62.

# (54) VERMIN CONTROL COMPOSITIONS

(57) A liquid composition for killing a target verminous animal selected from the group consisting of rodents, marsupials, leporids and mustelids, the composition comprising:
(i) from 0.001 to 90% by weight of the composition of a toxicant component comprising one or more agents toxic to the target animal, the toxicant component being present in the composition in an amount sufficient to kill the target animal when a dose of the composition is applied to the skin of the target animal; and
(ii) a carrier system for the toxicant component,
wherein the carrier system (ii) comprises:
(a) from 1 to 99 % by weight of the carrier system of a liquid solvent or dispersant for the toxicant component, which solvent or dispersant is selected from one or more compounds from any of the following: alcohols, glycols, glycol ethers, glycerol formal, polyethylene glycols, liquid polyoxyethylene glycols, pyrrolidones, acetone, acetonitrile, amides, phthalic esters; and
(b) from 20 to 90% by weight of the carrier system of a dermal disruptant component for promoting or enhancing passage of the toxicant component into and/or through the skin of the target animal, wherein the dermal disruptant component comprises one or more substances selected from the following groups: sulfoxides, amides, hydrocarbons, ketones, ethers.

The compositions are sprayable and provide enhanced dermal penetration of the toxicant into and through the skin of the animal onto which the composition is delivered, e.g. in a trap or other apparatus.

EP 3 695 723 A1

**Description**

FIELD OF THE INVENTION

This invention relates to compositions for control of vermin. More particularly, though not exclusively, it relates to compositions for killing vermin such as rodents and other animals. The invention further relates to methods of vermin control using the compositions, and to apparatuses containing the compositions for use in such methods for controlling vermin, preferably by killing them.

BACKGROUND OF THE INVENTION

In many agricultural, social and public health fields there is a widespread need for control of vermin, which can be taken to include a wide variety of animals such as rodents and various other mammals or vertebrates classed as pests, including not only rodents but also various marsupials, leporids and mustelids.

Traps for capturing, disabling and/or killing vermin are well-known and in widespread use in many parts of the world, as are various pesticidal and rodenticidal compositions for use in vermin control by poisoning them using a wide range of chemical or biological agents. Because of frequent concerns over mis-targetting of pest-killing agents and risks to humans and other animals, e.g. domestic animals, from unwanted or inadvertent exposure to such agents, the use of unprotected poisons for vermin control is increasingly being phased out, and the employment of selective traps, often in conjunction with selective poisons, is becoming more and more commonplace.

Whilst vermin control for public health and agricultural reasons is acknowledged, there is an increasingly important need to consider animal welfare, and with this in mind recent years have seen various advances in more humane traps and agents for use in vermin control, especially by killing them more efficiently and with less suffering.

In certain social or agricultural contexts where control of vermin over wide geographical areas or places difficult to access is desirable, there is additionally often a need to consider the ease and frequency with which traps or other poison-baited apparatuses can be managed and monitored, e.g. not only to remove killed animals but also to replenish a supply of poison. Rates of use of such poison agents is therefore an important factor in efficient vermin control management, making it desirable to develop ever more efficient poisons, so they are effective at lower uptake quantities and thus overall rates of consumption, and to reduce costs of manufacture and deployment of such poisons as and where they are needed.

One known trap for use in capturing, disabling and/or killing vermin such as rodents is disclosed in our published International Patent Application WO2010/106352. The disclosed apparatus is in the form of a mechanical trap which contains, in combination, a poison agent for killing a target animal and a pheromone component for enticing the target animal into the trap, where a dose of the poison is then administered to the animal, typically onto its exterior and thus onto the animal's skin, to fulfil its intended killing purpose. The poison agent relies for its effective toxicity on its ability to penetrate the animal's skin and thereby to enter the animal's bloodstream, where it can perform its systemic function to kill the animal, the mechanism of which may depend on the chemical and/or biological nature of the agent, and also that of the animal, in question.

In another known disclosure, New Zealand Patent No. 548082 (Agnew), there are proposed topical pesticidal compositions for killing various non-human pest animals, which comprise a specific toxic agent, namely cholecalciferol or 25-hydroxycholecalciferol (otherwise known as vitamin $D_3$) in combination with at least one carrier, e.g. various alcohols (especially absolute ethanol), glycols or certain other solvent species, which acts to deliver the toxic agent transdermally to the target animal.

In our research following on from the above disclosures, we have found that the degree and efficiency of penetration of pesticidal toxic agents into and through an animal's skin and thus into its bloodstream may be expected to be an important factor in determining the efficiency with which a given toxic agent or a given dose thereof performs its intended systemic killing function on the target animal. Up to now, however, there has been little, even if any at all, published literature or consideration given to the degree to which given poisons or toxic agents are able to penetrate a target animal's skin or even how such levels of penetration may be improved or optimised for any given agent and/or dosage thereof that may be applied to the animal's exterior. Our recent studies have focused on this area, and have resulted in the making of the present invention.

In particular, through our studies we have surprisingly found that many known rodenticidal or vermicidal agents, when presented for use in known rat traps or other animal killing apparatuses, including the alcohol-based compositions containing cholecalciferol (or 25-hydroxycholecalciferol) as proposed in NZ548082 above, have hitherto been proposed in formulations which are far from ideal or optimum, in particular in terms of their efficacy in transdermal penetration of the toxicant component into the animal's bloodstream where it can perform its function.

It has therefore been an object of the present invention to provide improved means by which a vermicidal or other toxic agent can be delivered transdermally into a target animal, especially transdermally into its bloodstream, from a composition containing that toxic agent. We have surprisingly found that it is possible to improve or optimise such levels of transdermal delivery of toxic agents, or at least to ameliorate the newly-recognised shortcomings of known prior art toxic agent delivery compositions, by employment of a novel carrier system for the toxic agent.

## SUMMARY OF THE INVENTION

Accordingly, in a first aspect the present invention provides a composition for killing an animal, comprising:

(i) a toxicant component comprising one or more agents toxic to the animal; and
(ii) a carrier system for the toxicant component;
wherein the carrier system (ii) comprises:

(a) at least one solvent or dispersant for the toxicant component, and
(b) at least one dermal disruptant component.

Preferably the at least one dermal disruptant component of the carrier system is a material, and is present in such an amount, which promotes dermal penetration of the one or more toxic agents into and/or through the skin of the animal. Preferred such materials and amounts in the compositions of this aspect of the invention will be discussed in more detail hereinbelow in relation to preferred embodiments and examples.

In a second aspect the present invention provides a method of killing an animal, comprising delivering, preferably by topically applying, to the skin of the animal a composition according to the first aspect of the invention or any embodiment or example thereof.

In a third aspect the present invention provides a method of transdermally delivering to an animal, preferably into the bloodstream of an animal, one or more toxic agents, the method comprising applying to the skin of the animal a composition according to the first aspect of the invention or any embodiment or example thereof.

In a fourth aspect the present invention provides use of a composition according to the first aspect of the invention or any embodiment or example thereof as a vermicidal agent or composition.

In a fifth aspect the present invention provides use, for delivering one or more toxic agents transdermally to an animal, preferably into the bloodstream thereof, of a composition according to the first aspect of the invention or any embodiment or example thereof. More particularly, the use of this aspect comprises the use, for delivering one or more toxic agents transdermally to an animal, preferably into the bloodstream thereof, of a carrier system for the one or more toxic agents, the carrier system comprising:

(a) at least one solvent or dispersant for the one or more toxic agents, and
(b) at least one dermal disruptant component,

and the one or more toxic agents and the carrier system being provided as or in a composition for application to the skin of the animal.

In a sixth aspect of the present invention there is provided an apparatus for killing an animal by delivering one or more toxic agents to the skin thereof, the apparatus comprising:

(i) an enclosure into which the animal can enter;
(ii) container means containing a supply of a composition according to the first aspect of the invention or any embodiment or example thereof; and
(ii) delivery means for delivering to the skin of the animal an amount of the said composition.

Further features, embodiments and examples of the present invention in its various aspects will be apparent from the following detailed description of the invention, including the Examples which follow further below.

## DETAILED DESCRIPTION OF THE INVENTION AND EMBODIMENTS THEREOF

The compositions of the invention, and the methods and uses in which they are employed, may be used to kill a wide variety of animals, especially any animal classed as vermin or a pest. Typically the animal may be a vertebrate, especially a mammal, more preferably a relatively small mammal. The term "kill" or "killing" as used herein may encompass not only killing of the animal outright (either through relatively short or relatively long systemic toxicity action), but also disablement, rendering incapable, paralysing or rendering unconscious of the animal following which it may be finally dispatched by human intervention.

Animals the killing of which may be especially usefully achieved by use of the present invention include vermin such as rodents, e.g. rats or mice, and various other vermin species such as members of the groups classed as marsupials, leporids and mustelids. The invention may also be usefully employed for killing or incapacitating other species outside these groups.

The toxicant component

According to the invention the composition comprises a toxicant component which comprises one or more agents toxic to the animal which is to be killed, i.e. the target animal. Any suitable toxic agents or poisons may be used as the toxic agent(s).

In certain embodiments, however, it may be preferred that the one or more toxic agents is/are selected from toxicants that are specific to a target animal, i.e. are toxic substantially only to a target animal and substantially non-toxic to animals other than the target animal. In this manner selective killing of target species may be achieved without detriment or harm to other species which may come into contact with the toxicant component, possibly inadvertently, especially if a given apparatus for trapping and killing the target species is accessible by more than one species of animal.

A wide variety of known poisons or toxic agents may be used, either singly or in combination, as the toxicant component of compositions according to the invention. Suitable toxic agents for use in the invention may include various known poisons, toxins, or pathogenic agents, which may be naturally occurring or synthetic, and may be used singly or in combinations of two or more such agents.

Particularly preferred toxic agents for use in the invention may be fat-soluble (i.e. substantially water-insoluble) toxic agents, for the reason that this helps to prevent such toxic agent(s) leaking readily into the environment through being dissolved in water at or away from a given geographical location at which application of the toxic agent(s) onto a target animal occurs.

Examples of toxic agents that may be suitable for use in the invention include one or more of the following: cholecalciferol, 25-hydroxycholecalciferol, vitamin $D_3$, calciferol, ergocalciferol, anticoagulants, metal phosphides, alpha-naphthylthiourea, arsenic compounds, barium compounds, thallium compounds, bromethalin, chloralose (e.g. $\alpha$-chloralose), crimidine, 1,3-difluoro-2-propanol, endrin, fluoroacetamide, phosacetim, white phosphorus, pyrinuron, scilliroside, sodium fluoroacetate, strychnine, tetramethylenedisulfotetramine, hydrogen cyanide, sodium cyanide, potassium cyanide. Anticoagulants may include warfarin, coumatetralyl, brodifacoum, difenacoum, flocoumafen, chlorophacinone, pindone, diphacinone, difethialone and coumarin. Metal phosphide may include aluminium phosphide, calcium phosphide, magnesium phosphide and zinc phosphide. Other suitable toxic agents may include one or more biological agents, such as bacterial or viral toxins.

An especially preferred toxic agent for use in the invention, which may be especially useful for killing rodents such as rats, is cholecalciferol or its hydroxylated derivative 25-hydroxycholecalciferol (both of which compounds are precursors of vitamin $D_3$ and often termed as such).

The toxicant component may be present in the composition of the invention in any suitable amount. Preferably the amount of the toxicant component in the composition will be selected such as to be sufficient and effective to kill a target animal, preferably as a result of a single dose or a single application of the composition to the animal.

In preferred embodiments the amount of the toxicant component in the composition may be in the range of from about 0.001% up to about 90% by weight of the composition, more preferably in the range of from about 0.01% up to about 75% by weight of the composition, even more preferably in the range of from about 0.1% up to about 70% by weight of the composition, yet even more preferably in the range of from about 1% up to about 60% by weight of the composition.

In many practical embodiments, for use in a given apparatus according to the invention, the composition to be delivered thereby may preferably be formulated such that the concentration of the toxicant component in the composition is selected such that a given single dose or application of the composition delivers to the animal a required fatal amount of the toxicant component, and preferably not substantially more that that fatal amount. In this manner, for a given target animal only a dose of the toxicant component sufficient to kill the animal is delivered, and the composition may thus be formulated accordingly so that the concentration of the toxicant component therein is optimised for both fatal efficacy and economy.

In embodiments of the invention the toxicant component may be incorporated in the composition in any of various suitable physical forms. For example:

(i) the toxicant component may be dissolved in the solvent/dispersant component of the carrier system, or in any other components of the carrier system itself, in the manner of a solution, e.g. as dissociated ionic species therein; or

(ii) the toxicant component may be dispersed in the carrier system (or merely in the solvent/dispersant component thereof, or in any other components of the carrier system itself) as dispersed particles, e.g. in the manner of a suspension, emulsion or colloidal mixture or solution of the toxicant component or the toxicant component optionally together with one or more other components of the overall composition; or

(iii) the toxicant component may be incorporated in the composition or the carrier system thereof, possibly in merely the solvent/dispersant component thereof or any other components of the carrier system itself, in some other suitable physical form, possibly together with one or more other components of the overall composition. Such other physical forms which may be suitable may include for example particles or bodies of the nature of liposomes (e.g. formed from a bilayer comprising one or more phospholipids), micelles (e.g. comprising one or more surfactant(s) or phospholipid(s)), complexes (e.g. through physical interaction with another molecule, e.g. hydrogen bonding- or disulfide-linked), salts (e.g. comprising changing an associated ion with the toxicant component and/or the dermal disruptant component to change the toxicant component's solubility or dissolution characteristics), nanoparticles (e.g. comprising a precipitated nano-size layer with either or both of the toxicant component or dermal disruptant component, e.g. using poly(lactic-co-glycolic) acid - PLGA, polyvinyl alcohol - PVA of any molecular weight length), or pheroid(s) (e.g. vitamin F ethyl ester (2.8% w/v), Cremophor® EL (1% w/v) and D-$\alpha$-tocopherol (0.2% w/v)).

The carrier system

According to the invention the carrier system of the composition comprises:

(a) at least one solvent or dispersant for the toxicant component, and
(b) at least one dermal disruptant component.

In preferred compositions according to the invention the at least one solvent or dispersant and the at least one dermal disruptant component are different chemical species.

The solvent or dispersant

The solvent or dispersant for the toxicant component may be selected from any suitable one or more materials that act(s) as a solvent or dispersant for the toxicant component.

In preferred embodiments the solvent or dispersant comprises one or more liquid solvents and/or dispersants for the toxicant component, whereby the one or more toxic agents is/are dissolved and/or dispersed therein. Examples of suitable solvents include any of the following, either singly or in any combination of two or more of any thereof:

- alcohols, e.g. ethanol, isopropanol, methanol, benzyl alcohol,
- glycols, e.g. diethylene glycol, propylene glycol, butyl diglycol,
- glycol ethers, e.g. diethylene glycol monomethyl ether, diethylene glycol monoethyl ether, diethylene glycol mono-n-butyl ether,
- glycerol formal,
- polyethylene glycols,
- liquid polyoxyethylene glycols,
- pyrrolidones, e.g. N-methylpyrrolidone, 2-pyrrolidone,
- acetone,
- acetonitrile,
- amides, e.g. dimethylacetamide, dimethylformamide, monomethylacetamide,
- phthalic esters, e.g. diethyl phthalate.

An especially preferred solvent or dispersant is a solvent for the one or more toxic agents, in particular preferably ethanol.

The solvent or dispersant may be present in the carrier system of compositions according to the invention in any suitable amount, which is preferably that which is sufficient to dissolve or disperse the toxicant component in the overall composition. In some embodiments a suitable amount of the solvent or dispersant may be in the range of from about 1% to about 99% by weight of the carrier system *per se,* more preferably from about 5% to about 80 or 90% by weight of the carrier system *per se,* even more preferably from about 10 or 25% to about 60 or 70% by weight of the carrier system *per se.*

The dermal disruptant component

The dermal disruptant component used in compositions of the invention may be any substance, and present in any amount, which acts to interrupt or alter the physical and/or chemical nature of the skin of the animal, preferably the target animal, such that passage thereinto and/or therethrough of the toxicant component is promoted or enhanced, as compared to the absence of such a dermal disruptant component. Such dermal disruptants preferably do not damage the skin of the animal as such, in the sense that the skin is not damaged permanently or irreversibly or in such a way that skin cell death occurs. Instead, such dermal disruptants - as defined for use as this component of compositions of the invention - merely bring about a change in the skin's behaviour, especially substantially without causing pain, irritation, swelling of the skin or dermal cell death, such that some irreversible cellular exchange between individual lipid layers of the skin does indeed occur, as distinct from merely increased yet reversible cellular exchange between layers.

Our studies have shown that it is accompanying such merely disruptive, rather than damage-causing, changes in the skin's nature caused by the preferred dermal disruptants used in accordance with the invention, that enhanced levels and prolonging of toxicant movement or migration through the cells of the skin occurs. As a result, improved speed and efficiency of toxicant take-up into the bloodstream of the animal may be achieved, thereby producing enhanced toxicity effects from a given amount of toxicant.

We have found that a preferred class of substances which may be suitable for use as the dermal disruptant component are aprotic solvents. Preferred examples of such aprotic solvents that may be suitable as the dermal disruptant component in compositions of the invention may include any of the following, either singly or in any combination of two or more of the following:

- sulfoxides, e.g. dimethylsulfoxide (DMSO), decylmethylsulfoxide,
- amides, e.g. dimethylacetamide, dimethylformamide,
- hydrocarbons, e.g. hexane, toluene,
- ketones, e.g. acetone,
- ethers, e.g. diethyl ether.

An especially preferred dermal disruptant component is dimethylsulfoxide (DMSO).

The dermal disruptant component may be present in the carrier system of compositions according to the invention in any suitable amount that lead to the above dermal disruptant effects. In some embodiments a suitable amount of the dermal disruptant component may be in the range of from about 1% to about 99% by weight of the carrier system *per se,* more preferably from about 10 or 20% to about 95% by weight of the carrier system *per se,* even more preferably from about 20, 30 or 40% to about 70, 80 or 90% by weight of the carrier system *per se*.

Our studies have found that such relatively high levels of such dermal disruptant components in compositions according to the invention are especially effective and useful for promoting or enhancing passage through the skin of a target animal of a toxicant component, without substantially damaging the skin in ways that otherwise would be expected to hinder take-up and passage therethrough of the toxicant molecules.

The dermal disruptant component (b) of the carrier system (ii) may preferably be present in compositions of the invention in the same phase as the other compositional components thereof, especially in the same phase as the solvent or dispersant component (a) of the carrier system (ii) (optionally also as the toxicant component (i)). For instance, the various aforementioned components of the composition may be present in or as a substantially single-phase, uniform or homogeneous solution or dispersion, emulsion or colloidal composition.

Alternatively the dermal disruptant component (b) of the carrier system (ii) may be present in compositions of the invention as or in a separate, distinct or different phase from the other compositional components thereof, especially from the solvent or dispersant component (a) of the carrier system (ii) (and optionally also from the toxicant component (i)). For instance, one of the solvent or dispersant component (a) or dermal disruptant component (b) of the carrier system (ii) (either optionally with the toxicant component (i)) may be present in the composition as a solution phase component, whereas the other of the solvent or dispersant component (a) or the dermal disruptant component (b) of the carrier system (ii) (either optionally with the toxicant component (i)) may be provided as a dispersion, emulsion or colloidal phase component distinct from the solution phase component.

Further alternatively or additionally, and as mentioned above, the various components of the carrier system for the toxicant component, including possibly the dermal disruptant component, may be present in the compositions of the invention such that the compositions comprise at least one phase being of the nature of liposomes, micelles, complexes, salts, nanoparticles or pheroid(s).

Optional additional components of the composition

In some embodiments of the invention the vermicidal composition may be provided in combination with one or more attractant chemical compounds, such as one or more pheromones (e.g. sex pheromones). Such pheromones or other attractants may be provided as an additional component of the composition *per se*, or alternatively it may be provided separately, that is to say, outside the composition, e.g. for delivery independently of and/or in proximity to or in or around the same apparatus as, the vermicidal composition of the invention itself.

Where the one or more pheromones or other attractant compounds is/are provided as an additional component of the composition *per se,* it may be included in any suitable amount, e.g. in a range of from about 0.0001% up to about 1, 2, 3, 4 or even 5% by weight of the composition, more preferably from about 0.001% up to about 0.01 or 0.05 or even 0.1% by weight of the composition.

When used, the one or more attractant compounds, e.g. pheromones, may be selected so as to be specific to a given target species of animal at which the vermicidal composition is aimed at attracting. Thus, suitable attractant compounds may include one or more of any of the following:

(i) Pheromones, such as relatively high molecular weight (e.g. in the region of about 200,000 to about 300,000) lipid-based pheromones, preferably specific to one or more relevant target mammals or vertebrates, especially rodents, e.g. those specific to rats or mice; or
(ii) Such pheromones specific to one or more other animals selected from the groups: marsupials, leporids and mustelids; or
(iii) Attractant chemical compounds, such as relatively low molecular weight (e.g. of the order of a few hundred, such as in the region of around 500), and again preferably specific to one or more relevant target animals, such as mammals or vertebrates, especially rodents.

Specific examples of suitable attractant compounds or pheromones may include any of the following: squalene, 2-heptanone, 4-ethyl phenol, *E*,*E*-β-farnesene, *E*-α-farnesene, *R, R*-dehydro-*exo*-brevicomin and *S*-2-*sec*-butyl-dihydrothiazole.

In compositions according to the invention one or more additional optional adjunct components may be included therein, as desired or as necessary, preferably in minor amounts, e.g. not more than about 1, 2, 5 or 10% by weight of the total composition. Such optional additional components may include one or more of any of the following:

(i) Dermal penetration enhancers:

- For example one or more substances known for use to promote or facilitate passage into and/or through skin of one or more active substances. Suitable examples of such dermal penetration enhancers may include one or more, or any combination of two or more, of the following:
- fatty acids, e.g. oleic acid, linoleic acid, linolenic acid, lauric acid,
- 2-pyrrolidone,
- propylene glycol,
- alcohols, e.g. ethanol, isopropanol, methanol, benzyl alcohol, fatty alcohols (such as saturated or unsaturated $C_8$ to $C_{14}$ alcohols),
- glycols, e.g. diethylene glycol, propylene glycol, butyl diglycol,
- glycol ethers, e.g. diethylene glycol monomethyl ether, diethylene glycol monoethyl ether, diethylene glycol mono-*n*-butyl ether,
- glycerol formal,
- polyethylene glycols,
- liquid polyoxyethylene glycols,
- pyrrolidones, e.g. N-methylpyrrolidone (NMP), 2-pyrrolidone (2P),
- acetone,
- acetonitrile,
- amides, e.g. dimethylacetamide, dimethylformamide, monomethylacetamide, N,N-diethyl-meta-toluamide (DEET),
- phthalic esters, e.g. diethyl phthalate,
- phospholipids, e.g. phosphatidylcholine, hydrogenated soy bean phospholipids,
- natural oils, e.g. emu oil,
- azone (1-dodecylazacycloheptan-2-one or laurocapram),
- terpenes and terpenoids,
- essential oils, e.g. eucalyptus oil, chenopodium and ylang ylang,
- urea,
- water.

In embodiments where a dermal penetration enhancer from the preferred list above is the same substance as a preferred solvent or dispersant component already present in the composition as an essential component of the carrier system for the toxicant component, that substance may serve both functions.
(ii) Wetting agents:

- For example one or more surfactants (e.g. anionic, cationic, amphoteric, zwitterionic or non-ionic surfactants).

(iii) Viscosity modifiers:

- For example one or more thickeners or thinning components, especially a viscosity enhancer, in particular one or more substances preferably substantially soluble in predominantly organic materials (i.e. preferably substantially not water soluble) and able to increase the viscosity thereof (i.e. in comparison with the viscosity of the material(s) without the said substance(s)), for example a polyethylene glycol, e.g. PEG200.

(iv) Co-solvents:

- For example one or more protic or aprotic solvents, e.g. water.

(v) Other adjuncts:

- For example one or more emulsifiers, stabilisers, preservatives, emollients, perfumes, colorants or dyes, pH adjusting agents, gel-forming agents, foam-forming agents, pharmaceuticals.

(vi) Delivery-facilitating components:

- For example one or more aerosol propellants, examples of which are well-known in the art.

Delivery apparatus for delivering the compositions

According to an aspect of the invention, an apparatus for killing an animal by delivering one or more toxic agents to the skin thereof comprises:

(i) an enclosure into which the animal can enter;
(ii) container means containing a supply of a composition according to the first aspect of the invention or any embodiment or example thereof; and
(ii) delivery means for delivering to the skin of the animal an amount of the said composition.

Such an apparatus may be of any known type, construction and operation. One suitable such apparatus is that disclosed and illustrated in our earlier International Patent Application WO2010/106352, the content of which is incorporated herein by reference. Various other constructions and designs of delivery apparatuses for delivering toxicants such as vermicides or pesticides to target animals are also known in the art and applicable for use with the compositions of the present invention, as will be readily apparent and available to persons skilled in the art.

Thus, in a preferred such apparatus for use for delivering compositions according to this invention, the enclosure may preferably be an enclosure of a trap, into which a target animal may enter, optionally with the aid of being attracted thereinto by means of bait or an attractant compound or pheromone provided in or delivered into the interior of the enclosure.

The delivery means may preferably comprise a spray, aerosol or other dispensing means, by which an appropriate amount or dose, e.g. a single dose sufficient alone to kill a target animal, of the preferably liquid composition is delivered onto the exterior, especially topically onto the skin of the target animal once it is inside the enclosure. Suitable constructions and operation mechanisms for such spray, aerosol or other dispensing means are well-known in the art, e.g. from WO2010/106352 (the disclosure of which is incorporated herein by reference) or other known vermin control apparatuses in which a toxicant, e.g. a pesticide, is delivered to a target animal.

Any suitable volume or weight of the composition may be applied as the said amount or dose, and may be selected for example based on the concentration of the toxicant component in the composition and/or the size and/or nature of the delivery means. By way of non-limiting example, a dose of the order of e.g. from about 0.1 ml (or g) up to about 5 or 10 ml (or g), more preferably from about 0.5 ml (or g) up to about 2, 3, 4 or 5 ml (or g) may be suitable or typical for deployment of many embodiment compositions according to the invention.

The composition itself may be delivered in the form of a liquid, e.g. as a spray or aerosol, or alternatively in the form of a gel or a foam. Suitable gel-forming or foaming agents may be employed for the latter purposes, as will be well-known and readily available within the knowledge of persons skilled in the art.

The container means is preferably linked to the delivery means in order to provide a supply of the composition thereto as and when required, and may be of any suitable known type in the context of known vermin control apparatuses in which a toxicant is delivered to a target animal.

Preparation of compositions according to the invention

Compositions in accordance with the invention may be prepared by conventional methods using conventional apparatus and laboratory techniques.

In particular, in many embodiments the various components of the compositions may be simply mixed together using known preparative chemistry techniques, as are widely available and well understood and used by persons skilled in the art.

In other embodiments, where for example the composition comprises one or more phases in the form of solution, suspension, emulsion, colloidal mixture or solution, liposomes, micelles, complexes, nanoparticles or pheroid(s), the various components of the various phases may likewise be prepared and combined to form the final composition by known preparative chemistry techniques widely available and well understood and used by persons skilled in the art.

Specific examples of preparative techniques suitable for use in making compositions according to the invention are given in the Examples that follow hereinbelow.

The following Examples are presented to further illustrate aspects of the invention and preferred features and embodiments thereof, and are not to be construed as limiting the scope of the invention, which is as defined in the appended claims.

In the accompanying drawings:

Figure 1 shows a comparison of various chemical penetration enhancers for the delivery of cholecalciferol through a synthetic membrane;
Figure 2 shows the measured penetration rates of cholecalciferol when dissolved in different ratios of DMSO and ethanol;
Figure 3 shows the degradation of cholecalciferol when sealed in amber bottles and placed in an accelerated stability cabinet 25°C ± 2°C/60% RH ± 5%;
Figure 4 shows the results obtained from the freezing point investigations of DMSO and ethanol co-solvents;
Figure 5 shows the viscosity enhancing effects on the penetration enhancer of a preferred thickening agent as well as that of cholecalciferol itself;
Figure 6 shows a comparison of chemical penetration enhancers for the delivery of cholecalciferol through a synthetic membrane in a cellulose tubing *in-vitro* model;
Figure 7 shows the penetration enhancement of cholecalciferol with different ratios of DMSO and ethanol in the same model as Figure 6;
Figure 8 shows a comparison of chemical penetration enhancers for the delivery of cholecalciferol through a synthetic membrane in a diffusion cell *in-vitro* model;
Figure 9 shows the dose response relationship relating diffusion rate to cholecalciferol concentration using the diffusion cell model as in Figure 8;
Figure 10 shows the survival rates for chemical penetration enhanced transdermal cholecalciferol formulations:

Figure 10(a) shows the survival graph for 20% (w/v) cholecalciferol in 90:10 DMSO/ethanol;
Figure 10(b) shows the survival graph for 20% (w/v) cholecalciferol in 90:10 DMSO/oleic acid;
Figure 10(c) shows the survival graph for 40% (w/v) cholecalciferol in 70:30 DMSO/ethanol;
Figure 10(d) shows the survival graph for 20% (w/v) cholecalciferol in 100% ethanol;
Figure 10(e) shows the survival graph for 40% (w/v) cholecalciferol in 100% ethanol;
Figure 10(f) shows the mortality and time until end point summary for all the formulations of Figures 10(a) to 10(e);

Figure 11 shows distress scoring charts for each set of 5 animals exposed to each of the formulations used in Figure 10:

Figure 11(a) shows the distress scoring for experimental set 1;
Figure 11(b) shows the distress scoring for experimental set 2;
Figure 11(c) shows the distress scoring for experimental set 3;
Figure 11(d) shows the distress scoring for experimental set 4;
Figure 11(e) shows the distress scoring for experimental set 5;

Figure 12 shows the average distress at endpoint for all animals, as used in Figure 11;
Figure 13 shows survival analysis for the fixed dose procedure:

Figure 13(a) is the survival graph for 9% and 20% (w/v) cholecalciferol formulations; the other formulations were not included as they exhibited 0% mortality;

Figure 13(b) is the mortality and average time until endpoint for all formulations;

Figure 14 shows the distress scoring and rat weight for each of the 5 formulations tested in the fixed dose procedure protocol;
Figures 15 and 16 show the results of corresponding *in-vitro* experiments to those of Example 2 that were carried out on a variety of alternative toxicants, in order to demonstrate the degree to which their ability to be delivered through a synthetic membrane was promoted by an exemplary composition of the invention;
Figure 17 is a perspective view of a first embodiment of delivery apparatus or vermin trap useful for delivering to a target animal a composition according to the invention;
Figure 18 is a part-sectional view of the apparatus or trap of Figure 17;
Figure 19 is a perspective end view of a second embodiment of delivery apparatus or vermin trap useful for delivering to a target animal a composition according to the invention;
Figure 20 is a perspective side view of the apparatus or trap of Figure 19;
Figure 21 is a perspective end view of a third embodiment of delivery apparatus or vermin trap useful for delivering to a target animal a composition according to the invention; and
Figure 22 is a perspective side view of the apparatus or trap of Figure 21.

## EXAMPLES

### Example 1 - Composition

A one-shot volume of 1ml of a rodenticidal composition in accordance with the invention was prepared, by simple mixing of the components listed, with the following formulation:

| Ingredient | Amount |
|---|---|
| Vitamin $D_3$ (cholecalciferol) | 0.09 g |
| Ethanol* | 0.40 ml |
| DMSO* | 0.40 ml |
| PEG200 | 0.15 ml |
| Water** | 0.04 ml |

** composition made up to 1ml with 50:50 ration of Ethanol/DMSO.*
*** the amount of water present may not be a preferred component of the composition, but it is irremovable without significant cost implications, so is tolerated*

The composition had a viscosity of 4.02 centipoise, and a pH of 7.

### Example 2 - *In-vitro* optimisation of transdermal cholecalciferol delivery

(A) Introduction

Cholecalciferol (vitamin $D_3$), being toxic to small nocturnal mammals in low doses, yet to which humans and birds have a relatively high upper tolerance limit, makes it an effective rodenticide which is safer for humans and many non-target vertebrate or mammalian species. *In-vitro* studies, making use of synthetic membranes, were conducted to test and optimise transdermal cholecalciferol delivery using a variety of chemical penetration enhancers potentially useful as dermal disruptants. Physical parameters of the formulations, such as freezing point, viscosity, solubility and stability were also investigated in order to propose both effective and functional transdermal formulations suitable for use in the invention.

(B) Materials and methods

B.1 Materials

European Pharmacopeia grade cholecalciferol and dimethylsulfoxide (DMSO) were purchased from Fagron UK Ltd (UK). The penetration enhancers ethanol and oleic acid were purchased from Fisher Scientific UK Ltd (Loughborough, UK), while 2-pyrrolidone (2P) was purchased from Sigma-Aldrich Co (St. Louis, MO, USA). All were laboratory reagent grade. The receiver phase for the *in-vitro* studies was composed of ethanol (Fisher Scientific UK Ltd (Loughborough, UK)), polyethylene glycol (mwt 200, Sigma-Aldrich Co (St. Louis, MO, USA)) and water. The cellulose membranes (Visking tubing) were purchased from Fisher Scientific UK Ltd (Loughborough, UK). The thermocouples used for the freezing point studies were Ktype (RS Components Ltd, Northants, UK), while the temperature measurements were recorded with a data logger (RS Components Ltd, Northants, UK).

B.2 Methods

B.2.1 *In-vitro* optimisation studies

Regenerated cellulose dialysis tubing was used for the synthetic membrane (Corrigan, O. I., Farvar, M. A., & Higuchi, W. I. (1980), "Drug membrane transport enhancement using high energy drug polyvinylpyrrolidone (PVP) co precipitates", International Journal of Pharmaceutics, 5, 229-238); Haigh, J. M., & Smith, E. W. (1994), "The selection and use of natural and synthetic membranes for in vitro diffusion experiments", European Journal of Pharmaceutical Sciences, 2(5-6), 311-330); Wang, T., Kasichayanula, S., & Gu, X. (2006), "In vitro permeation of repellent DEET and sunscreen oxybenzone across three artificial membranes", International Journal of Pharmaceutics, 310(1-2), 110-7; doi:10.1016/j.ijpharm.2005.11.039); Wissing, S. A, & Müller, R. H. (2002), "Solid lipid nanoparticles as carrier for sunscreens: in vitro release and in vivo skin penetration", Journal of Controlled Release: official journal of the Controlled Release Society, 81(3), 225-33). The tubing was cut into strips and sealed on one side. For each formulation 1 ml was dispensed into the dialysis tubing, the tubing was then placed in a 50 ml centrifuge tube containing 45 ml of receiver phase. As cholecalciferol is a hydrophobic compound and is practically insoluble in water an aqueous ethanol (1:9 (v/v)) receiver phase containing 6% (v/v) PEG 200 was used. Sampling of the receiver phase was performed every hour for the first 4 hours then every 2 hours after that. At each sampling point 5 ml of the receiver phase was removed and replaced with stock receiver phase. Of the 5 ml extracted 1 ml was diluted serially 8 times (256-fold dilution) before analysis with HPLC. The temperature of the receiver phase was maintained at 26°C by the immersion of the centrifuge tubes in a heated water bath. For each formulation 3 replicates were employed.

B.2.1.1 Penetration enhancers and formulation preparation

A total of 5 penetration enhancers were selected to improve the movement of cholecalciferol through the membrane: DMSO, oleic acid, ethanol, 2P and water. Chemical penetration enhancers such as DMSO (Stoughton, R. B., & Fritsch, W. (1964), "Influence of Dimethylsulfoxide (DMSO) on Human Percutaneous Absorption", Arch Dermatol, 90(5), 512-517) have been shown to increase the penetration of compounds such as antiviral agents, steroids and antibiotics (Williams, A. C., & Barry, B. W. (2012), "Penetration enhancers", Advanced Drug Delivery Reviews, 64, 128-137; doi:10.1016/j.addr.2012.09.032). DMSO disrupts the lipid channels of the stratum corneum prompting intercellular passage of the penetrant. Organic solvents such as ethanol increase penetration by similar means while extracting the lipids from the horny layer. Fatty acids such as oleic acid have also been shown to improve dermal penetration (Larrucea, E., Arellano, a, Santoyo, S., & Ygartua, P. (2001), "Combined effect of oleic acid and propylene glycol on the percutaneous penetration of tenoxicam and its retention in the skin", European Journal of Pharmaceutics and Bio pharmaceutics: Official Journal of Arbeitsgemeinschaft für Pharmazeutische Verfahrenstechnik e.V., 52(2), 113-9; Meshulam, Y., Kadar, T., Wengier, A., Dachir, S., & Levy, A. (1993), "Transdermal penetration of physostigmine: Effects of oleic acid enhancer", Drug Development Research, 28(4), 510-515; Moreira, T. S., de Sousa, V. P., & Pierre, M. B. R. (2010), "A novel transdermal delivery system for the anti-inflammatory lumiracoxib: influence of oleic acid on in vitro percutaneous absorption and in vivo potential cutaneous irritation", AAPS PharmSciTech, 11(2), 621-9; doi:10.1208/s12249-010-9420-1) by creating reservoirs in the stratum corneum in which the penetrant can move through.

B.2.1.2 Membrane preparation

Cellulose membranes were cleaned before use in 1 L of cleaning solution consisting of 2% sodium bicarbonate (Sigma-Aldrich Co (St. Louis, MO, USA)) and 1 mM of ethylenediaminetetraacetic acid (EDTA) in distilled water. The cellulose membrane was placed in the solution while the temperature was brought up to 80°C, the solution was then maintained at that temperature for 30 m. After cleaning, the membranes were rinsed thoroughly with distilled water and kept in a bath of distilled water for a maximum of 5 days prior to use. This is in accordance with the manufacturer's guidelines (Medicell International Ltd, 2004).

B.2.1.3 Data analysis

For each formulation used in the *in-vitro* study the drug flux ($J_s$) of the formulation was calculated. This value was obtained with the following equation after the accumulative drug concentration in the receiver chamber was plotted against time (Barry, B. W. (1983), "Dermatological Formulations", pp. 49-94, New York, NY, Marcel Dekker Inc.; Gwak, H. S., & Chun, I. K. (2002), "Effect of vehicles and penetration enhancers on the in vitro percutaneous absorption of tenoxicam through hairless mouse skin", International Journal of Pharmaceutics, 236(1-2), 57-64):

$$J_s = \frac{1}{A}\left(\frac{dQ}{dt}\right)_{ss}$$

where A refers to the cross sectional area ($cm^2$), and $(dQ/dt)_{ss}$ is the rate of drug permutation at across the membrane over time (mg/h). By plotting the line constructed by the accumulative amount of drug received in the receiver chamber over time $(dQ/dt)_{ss}$ can be determined by calculating the gradient of the line at steady state (i.e. when the relationship is linear). In addition to this the lag time is typically calculated. However due to the nature of the synthetic membrane the lag time is considered instantaneous for all formulations.

B.2.1.4 HPLC analysis

The quantitative analysis of all cholecalciferol formulations was performed by high performance liquid chromatography (Prominence Modular HPLC (Shimadzu Corporation, Japan)) using a diode array. The wavelength of detection was set at 265 nm. A Luna 3μ $NH_2$ 100A column (Phenomenex, Cheshire, UK), dimensions: 150 x 4.6 mm was used with a $NH_2$ 3mm ID security guard and holder. The total flow rate was 2 ml/min and the run time was 6 min. The mobile phase consisted of 99:1 (v/v) hexane/isopropanol. During the first 3 min of the run a gradient ratio of 1:99 to 50:50 (v/v) was used after which the mobile phase reverted to its original ratio. The concentration of cholecalciferol was calculated for each assay by using an equation derived from the slope of the standard curve prepared for the cholecalciferol ($r^2$ = 0.999) at 265 nm.

B.2.2 Physical optimisation

In addition to the determination of an appropriate chemical penetration enhancer, it is also necessary to optimise the physical properties of the formulation so that it is both effective and practical. To this end a set of physical parameters have been identified in which to assess and hone the formulation, namely: stability, freezing point, viscosity and solubility. It is deemed that the optimisation of these parameters will allow the chosen chemical penetration enhancer to work most effectively.

B.2.2.2 Stability studies

The stability of cholecalciferol in the chosen penetration enhancer is an important consideration when analysing the physical properties of the formulation. An unstable formulation which causes cholecalciferol to degrade would result in delivery of sub-lethal doses. Cholecalciferol is sensitive to light, heat and air and is reported to be unstable in solvents which do not contain antioxidants (British Pharmacopoeia (2012), "Cholecalciferol", British Pharmacopoeia). Crystalline cholecalciferol degrades in conditions which promote oxidisation (Huber, W., & Barlow, O. W. (1943), "Chemical and biological stability of crystalline vitamins D2 and D3 and their derivatives", Journal of Biological Chemistry, 149, 125-137); investigations into the degradation of the crystalline form suggest a 35% and 85% decrease in potency when kept at 40°C/45% RH and 40°C/85% RH respectively over 7 days (Grady, L. T., & Thakker, K. D. (1980), "Stability of solid drugs: Degradation of ergocalciferol and cholecalciferol at high humidity and elevated temperatures", Journal of Pharmaceutical Sciences, 69(9), 1099-1102). Conversely, cholecalciferol solutions in surfactants and oils are said to be stable over long periods at 40°C. In order to assess the stability of cholecalciferol when combined with the chosen penetration enhancers an accelerated stability study was performed. In total, 6 formulations with varying types and concentration of penetration enhancers were stored in an accelerated stability cabinet at 25°C ± 2°C/60% RH ± 5%. Each formulation contained 10% (w/v) cholecalciferol. Each formulation was made up a day before the intended start date of the stability study and left in a water bath/shaker overnight at 25°C to allow adequate time for the cholecalciferol to dissolve. Amber bottles were used to prevent photo-degradation and parafilm was used to seal round the screw lid to prevent oxidative degradation from the air. At each sampling point the lid was removed and 200 μl taken; the sample was serially diluted 8 times (256-fold) before analysis with HPLC.

B.2.2.2.1 Freezing point studies

In terms of the practical use of the rodenticide formulation containing cholecalciferol it is necessary to determine the freezing point of the formulation. The rodenticide will be exposed to a wide variety of temperatures, potentially rendering the rodenticide ineffective if an unwanted change of phase occurs. To determine the maximum freezing point of formulations containing the penetration enhancer, formulations were frozen in a -80°C freezer. A 1 ml volume of each of the 8 chosen formulations was place in individual wells of a 96 well plate. The freezing curve and corresponding freezing point was monitored using K-type thermocouples. This process was repeated 3 times and the averages calculated. Deionised water and DMSO were used to determine the accuracy in the thermocouples.

B.2.2.3 Viscosity studies

Topical applications can take many forms from liquids to powders. However when the purpose of the application is to increase the bioavailability of the active ingredient to the skin, theory dictates that gel like formulations release agents well (Aulton, M. E. (2007), "Aulton's Pharmaceutics: the design and manufacture of medicines", Edinburgh; New York: Churchill Livingstone). Contrary to this, in the case of cholecalciferol, a simple mixture with ethanol allowed adequate permeation across the skin. Ethanol has a relatively low density of 0.805-0.812 g/$cm^3$ (British Pharmacopiea, (2013), "Ethanol (96 per cent)", retrieved January 29, 2013, from http://www.pharmacopoeia.co.uk/bp2013/ixbin/bp.cgi?a=display&r=5r9wlLbW9es&n= 457&id=7614&tab=search) resulting in a "runny" formulation. In order to optimise the formulation it is deemed necessary to increase the viscosity. In order to increase the viscosity a thickening agent is required. Thus, on identification of the optimum penetration enhancer a series of thickening agents were tested for suitability and thickening effect. Viscosity measurements were taken with an Automated Micro Viscometer (Anton Paar, St Albans, UK) using a 1.6 diameter capillary column. Before measurements were taken the density of each formulation was calculated by adding a known volume of solution to a balance (Sartorius Mechatronics UK Ltd, Surrey, UK) while recording the mass. In addition to the viscosity measurement of the thickening agent, the thickening effect of cholecalciferol was also quantified. Temperatures at the time of measurement of both density and viscosity were recorded with a thermometer and ranged between 20 - 21°C.

B.2.2.4 Solubility studies

The solubility of cholecalciferol for the proposed formulations was tested with reference to the British Pharmacopeia in which a solubility less than 1 ml/g is classed as very soluble while a solubility between 1-10 ml/g is classed as freely soluble. To determine first whether cholecalciferol is very soluble in the relevant formulations 0.99 ml of the formulation was added to 1 g of cholecalciferol. The solution was then placed in a water bath and maintained at 20°C for 24 h. Following a visual inspection of the solutions 3 samples of each solution were serially diluted 12 times (4096 dilution) before analysis with HPLC. The concentration of cholecalciferol in the solution was then determined and recorded. If analysis or visual inspection suggested that the cholecalciferol was not fully dissolved an additional 1 ml of formulation was added and the testing process repeated until all 3 measures performed on the HPLC were in agreement.

(C) Results

C.1 *In-vitro* optimisation

Figure 1 shows the results obtained from the *in-vitro* investigations into a suitable penetration enhancer, i.e. carrier system, for cholecalciferol. All formulations used 10% (w/v) cholecalciferol; a total of 1 ml was used for each formulation as shown in Table 1 below. The area of diffusion was approximately 40 $cm^2$.

The results suggest that the 90:10 (v/v) mixture of DMSO/ethanol results in the quickest diffusion of cholecalciferol through the membrane. The remaining penetration enhancers suggest similar rates of penetration. Interestingly the second best performing formulation was the 90:10 (v/v) DMSO/oleic acid combination, which also had a high proportion of DMSO. Thus it is deemed that the co-solvent of DMSO/ethanol should be investigated further.

**Table 1:** Drug flux comparisons for chemical penetration enhancement of cholecalciferol.

| Formulations | Drug flux ($J_s$) (mg/$cm^2$h) |
|---|---|
| 90:10 (v/v) DMSO/ethanol | 0.25 +/- 0.019 |
| 90:10 (v/v) DMSO/oleic acid | 0.18 +/- 0.022 |
| 90:10 (v/v) ethanol/water | 0.16 +/- 0.023 |
| ethanol | 0.13 +/- 0.0035 |
| 2P | 0.083 +/- 0.017 |

Referring to Figure 2, this shows the measured penetration rates of cholecalciferol when dissolved in different ratios of DMSO and ethanol. From the previous experiment DMSO and ethanol was considered to cause an increased penetration rate of cholecalciferol. However, the optimal ratio is unclear, so a second experiment was conducted in which different ratios of DMSO/ethanol were used.

Figure 2 shows the penetration enhancement of cholecalciferol with different ratios of DMSO and ethanol. All solutions contain 10% (w/v) cholecalciferol; a total of 1 ml was used for each formulation as set out in Table 1A below.

**Table 1A**

| Formulations | Drug flux ($J_s$)(mg/cm$^2$h) |
|---|---|
| 90:10 (v/v) DMSO/ethanol | 0.21 +/- 0.023 |
| 80:20 (v/v) DMSO/ethanol | 0.19 +/- 0.012 |
| 70:30 (v/v) DMSO/ethanol | 0.23 +/- 0.014 |
| 60:40 (v/v) DMSO/ethanol | 0.15 +/- 0.028 |
| 50:50 (v/v) DMSO/ethanol | 0.19 +/- 0.011 |

The results of Figure 2 suggest that there is not a significant difference between the penetration enhancement of cholecalciferol when dissolved in different ratios of DMSO and ethanol ranging from 50:50 (v/v) to 90:10 (v/v).

C.2 Stability studies

Referring to Figure 3, this shows the results of an accelerated stability study of cholecalciferol when dissolved in varying ratios of DMSO and ethanol. All formulations contain 10% (w/v) cholecalciferol. Figure 3 shows the degradation of cholecalciferol when sealed in amber bottles and placed in an accelerated stability cabinet 25°C ± 2°C/60% RH ± 5%. Varying ratios of DMSO and ethanol were used to see if the inclusion of DMSO caused increased degradation of cholecalciferol.

The results suggest that over a 50 day period there is a 27.11 % (+/-1.29 %) degradation of cholecalciferol across all formulations, of which 16.83 % (+/- 1.48 %) of the degradation occurred during the first 10 days. The inclusion of DMSO does not induce a faster degradation when compared to previously published ethanol formulation (Agnew, W. R. (2011), "Topical Pesticide Formulation", United States Patents).

C.3 Freezing point studies

These *in-vitro* studies suggested that a mixture of DMSO and ethanol was the most effective penetration enhancer, i.e. carrier system, for the movement of cholecalciferol through a synthetic membrane. The accepted freezing points for ethanol and DMSO are -114.6 and 18.3°C respectively. While DMSO in high concentration is very effective as a penetration enhancer it is not practical to use in high amounts. The commercial application of this formulation dictates that the formulation must remain in its liquid phase over a range of temperatures due to its outdoor use. Ethanol on the other hand has a very low freezing point thus freezing point of combinations of the 2 solvents was investigated to determine the ratio at which the formulation becomes practical.

Figure 4 displays the results obtained form the freezing point investigations. These results indicate maximum freezing points as the addition of a solute (the active ingredient in this case) will result in freezing point depression. In addition to these measurements the experimental set up measured the freezing point of deionised water at 0.32 +/- 0.11°C.

Formulations containing 50/50 (v/v) and 60/40 (v/v) DMSO/ethanol mixtures resulted in freezing points of -35.45 +/- 1.26°C and -20.06 +/-1.83°C respectively. The remaining mixtures tested all froze at or above -7°C.

C.4 Viscosity studies

A selection of natural gums and semi synthetic materials were used as additives to the formulation. Typically these compounds make ideal thickening agents, as they can have a significant effect on viscosity in relatively small concentrations. However, as cholecalciferol is a lipophilic compound the solvent used is organic, meaning that many water-soluble thickening agents may not be suitable, or at least may not be so optimal or preferred. Table 2 below shows a selection of natural gums and semisynthetic materials which were unsuitable or relatively less preferred for the formulation. Table 2 shows tested materials which are not so suitable for use as thickening agents.

**Table 2**

| Thickening Agent | Concentrations tested (%w/v) | Solubility |
|---|---|---|
| Methyl-cellulose | 0.1-1% | Practically insoluble |
| Ethyl-cellulose | 1 | Practically insoluble |
| Hydroxyethyl-cellulose | 1 | Practically insoluble |
| Guar Gum | 0.1-1% | Practically insoluble |
| Xantham Gum | 0.1-1% | Practically insoluble |

A more preferable alternative to these materials is polyethylene glycol; it can be bought in a range of molecular weights and, to a degree, is soluble in organic solvents.

Figure 5 below shows the viscosity enhancing effects of PEG 200 to the penetration enhancer as well as the thickening effect of cholecalciferol itself, and shows the effect of cholecalciferol and the thickening agent on the chemical penetration enhancer. All viscosity measurements are percentage solute in 50:50 DMSO/ethanol and have a SD of +/- 0.003 mPa.s.

Table 3 below suggests the combined thickening effects of both the cholecalciferol and PEG 200 on the viscosity of the formulation. The maximum amount of PEG 200 was determined to be 15% (v/v) which allowed the use of the 50:50 DMSO/ethanol penetration enhancer and facilitated sufficient solubility of the cholecalciferol.

**Table 3:** Viscosity measurements for formulations containing cholecalciferol and PEG 200, the chosen thickening agent.

| Combination Formulations | Density (g/cm$^3$) | Viscosity (mPa.s) |
|---|---|---|
| Ethanol<br>20% (w/v) cholecalciferol | 0.792 | 2.01 |
| 50:50 (v/v) DMSO/ethanol<br>15% (v/v) PEG200<br>1.5% (w/v) cholecalciferol | 0.959 | 1.76 |
| 50:50 (v/v) DMSO/ethanol<br>1 5% (v/v) PEG200<br>9% (w/v) cholecalciferol | 0.952 | 2.58 |
| 50:50 (v/v) DMSO/ethanol<br>15% (v/v) PEG200<br>20% (w/v) cholecalciferol | 0.953 | 4.02 |

Higher molecular weight PEGs could have been used but an increase in molecular weights causes an increase in freezing point. Thus PEG 200 was identified as a preferred thickening agent.

C.5 Solubility studies

Table 4 below shows the approximate solubility and the corresponding classification for both the penetration enhancer (50:50 (v/v) DMSO/ethanol) and the penetration enhancer including the proposed thickening agent (15% (v/v) PEG 200). Ethanol is also included in the table as a reference. The results suggest that there is a drop in solubility when PEG 200 is added to the formulation.

**Table 4:** Solubility classifications for the proposed penetration enhancer and thickening agent.

| Formulation | Approximate solubility (ml/g) | Solubility (class) |
|---|---|---|
| Ethanol (96 per cent) | - | Freely soluble |
| 50/50 (v/v) DMSO/ethanol | > 3 +/- 0.05 | Freely soluble |

(continued)

| Formulation | Approximate solubility (ml/g) | Solubility (class) |
|---|---|---|
| 50/50 (v/v) DMSO/ethanol 15% (v/v) PEG 200 | > 3.7 +/- 0.06 | Freely soluble |

Approximate solubility is calculated by initially adding 0.99 ml of solvent to 1 g of cholecalciferol followed by HPLC analysis on 3 separate samples taken from the solution. The process was repeated until the HPLC analysis of the 3 samples suggested similar concentrations at which point the total volume added was divided by the amount of cholecalciferol in the vial as calculated by HPLC. Classification for ethanol is taken from the British Pharmacopeia (British Pharmacopoeia (2013), "Co/ecalciferol", retrieved January 30, 2013, from http://www.pharmacopoeia.co. uk/bp2013/ixbin/bp.cgi?a=display&r=jFUIqg0blYj&n= 3&id=7803&tab=search*).*

(D) Discussion

Agnew (Agnew, W. R. (2010), *"Topical pesticide formulation",* WO2010/071450 A1, World Intellectual Property Organization) proposed a trans-dermal formulation in which ethanol containing 20% (w/v) cholecalciferol was shown to be effective *in-vivo.* The current research has used *in-vitro* methods to suggest improved formulations which cause an increased cholecalciferol drug flux.

The results suggest that formulations containing high percentages of DMSO (50-90%) increased the measured drug flux through an artificial membrane. Initial tests suggested an increased drug flux compared to ethanol (0.13 +/- 0.0035 mg/cm$^2$h) when 90:10 (v/v) DMSO/ethanol (0.25 +/- 0.019 mg/cm$^2$h) or 90:10 (v/v) DMSO/oleic acid (0.18 +/- 0.022 mg/cm$^2$h). Further tests suggest that this increase in drug flux was present in lower concentration of DMSO in ethanol (0.19 +/- 0.011 for 50:50 (v/v) DMSO/ethanol). Thus a combination of DMSO and ethanol was chosen as the preferred chemical penetration enhancer, i.e. carrier system, as it displayed an improved flux when compared to previously published ethanol formulations.

The addition of water to the ethanol formulation (0.16 +/- 0.023 mg/cm$^2$h), and the formulation composed of 2P (0.083 +/- 0.017 mg/cm$^2$h) did not suggest substantial differences between the formulation comprised solely of ethanol (0.13 +/- 0.0035 mg/cm$^2$h). Due to this, these chemical penetration enhancers were excluded from the remainder of the studies. While these penetration enhancers have been successful in other studies, particularly oleic acid (Larrucea, E., Arellano, a, Santoyo, S., & Ygartua, P. (2001), "Combined effect of oleic acid and propylene glycol on the percutaneous penetration of tenoxicam and its retention in the skin", European Journal of Pharmaceutics and Biopharmaceutics: Official Journal of Arbeitsgemeinschaft für Pharmazeutische Verfahrenstechnik e.V, 52(2), 113-9; Meshulam, Y., Kadar, T., Wengier, A., Dachir, S., & Levy, A. (1993), "Transdermal penetration of physostigmine: Effects of oleic acid enhancer", Drug Development Research, 28(4), 510-515; Moreira, T. S., de Sousa, V. P., & Pierre, M. B. R. (2010), "A novel transdermal delivery system for the anti-inflammatory lumiracoxib: influence of oleic acid on in vitro percutaneous absorption and in vivo potential cutaneous irritation", AAPS PharmSciTech, 11(2), 621-9, doi:10.1208/s12249-010-9420-1), the results suggest that DMSO is a better alternative for cholecalciferol. These results, in part, may be a result of the artificial membrane used. Oleic acid and 2P are suggested to work by creating reservoirs in the stratum corneum facilitating greater sized pathways for the penetrant to move through, while water is suggested to work by hydrating the skin allowing increased drug flux of hydrophilic compounds. In an artificial membrane such as the cellulose membrane used in this experiment these mechanisms of penetration do not occur; however, as cholecalciferol is hydrophobic (practically insoluble in water) it is able to freely move through the lipid membranes of the stratum corneum. The most advantageous mechanism for cholecalciferol is thus potentially disruption of the membrane. Arguably, this situation is replicated with the cellulose membrane, in which the DMSO increases the pore sizes of the membranes facilitating quicker diffusion of cholecalciferol into the receiver phase.

DMSO, while widely accepted as a penetration enhancer, is not typically used in trans-dermal delivery of pharmaceutical products. It is a mild skin irritant and produces an unpleasant taste in the mouth. However, the purpose of this formulation is for use as a rodenticide. Thus these factors, although important, must be considered relative to effectiveness. An alternative chemical penetration enhancer may negate these initial problems only to prolong the action of the cholecalciferol.

In addition to the chemical problems associated with DMSO there may also be physical problems. The freezing point of DMSO is 18.3°C making it a liquid at room temperature, but a solid below it. For the desired use the rodenticide must be useable in a wide variety of environments, one of those being cold conditions. This may be particularly problematic when the intended target is a nocturnal species: thus an overnight drop in temperature would render a high percentage DMSO formulation ineffective. In order to lower the freezing point of the formulation a range of DMSO/ethanol ratios were investigated to determine a ratio which both allows penetration enhancement and makes use of ethanol's lower freezing point (-114.6°C). To this end a ratio of 50:50 (v/v) DMSO/ethanol was highlighted and taken forward for further trials as the basis of a preferred formulation.

Drug permeation theory dictates that formulations of gel like consistency allow mating to the contour of the skin increasing the bioavailability of the active ingredient. It was thus deemed desirable to increase the viscosity of the formulation to improve the drug flux. Ranges of thickening agents were tested to increase viscosity. However, determination of a suitable agent was problematic in formulation composed almost entirely of organic solvents. PEG 200 was eventually highlighted as a preferred thickening agent. However, in order to have noticeable effects on viscosity a high percentage of 15% (v/v) was required. This amount is particularly high when natural gums significantly increase viscosity with concentrations in the range 0.1-1% (w/v).

The last two parameters investigated serve as objective exercises with scope for improvement. Solubility of cholecalciferol in ethanol is defined as freely soluble meaning that a between 1-10 ml/g can be used to fully dissolve the solute. Agnew's (Agnew, W. R. (2010), *"Topical pesticide formulation",* WO2010/071450 A1, World Intellectual Property Organization) proposed formulation requires a high amount of cholecalciferol at 20% (w/v), and it is then important that a loss of solubility is not invoked when changes to the formulation are made. In this regard, all formulations tested suggest that cholecalciferol is freely soluble suggesting that the manipulation of the formulae would not prevent delivery of an effective amount.

Finally, for a commercial product, the stability of the product must be assured for a defined amount of time. In respect to this parameter, the results suggest that there is a 27.11 % (+/-1.29 %) drop in potency after 50 days at 25°C ± 2°C/60% RH ± 5%. Although cholecalciferol is sensitive to light, heat an air; the use of ambered bottles eliminates photo-degradation as the reason for the drop in potency. It is proposed that either oxidation or heat, or combinations of the two are responsible for diminished potency. There are various options available which could be employed to negate these problems, for example countering oxidative degradation by means of manufacturing practices such as packing under nitrogen or some other inert gas, or a chemical approach could be taken in which an antioxidant is added.

(E) Conclusions

The results from this *in-vitro* study into optimisation of cholecalciferol suggest that a carrier system comprising DMSO and ethanol increases the drug flux of cholecalciferol through an artificial membrane when compared to previously published ethanol formulations (0.19 +/- 0.011 $mg/cm^2h$ for 50:50 (v/v) DMSO/ethanol compared with 0.13 +/- 0.0035 $mg/cm^2h$ for ethanol).

Parameters such as freezing point and viscosity have also been tailored to make the formulation both effective and functional. The ratio of DMSO and ethanol has been manipulated to achieve a freezing point of -35.45 +/- 1.26°C (50/50 (v/v) DMSO/ethanol) without solute, while the addition of 15% PEG200 increased the viscosity of the formulation to 2.58 mPa.s for formulations containing 9% (w/v) cholecalciferol. The solubility classification of freely soluble (1-10 ml/g) has been maintained for the formulation allowing an effective dose to be dissolved in the solution.

Example 3 - *In-vitro in-vivo* model for rat skin uptake of cholecalciferol

(A) Introduction

This Example presents two *in-vitro* models and the corresponding *in-vivo* data designed to optimise the delivery of cholecalciferol though the dermis.

(B) Materials and methods

B.1 Materials

European Pharmacopeia grade cholecalciferol was purchased from Fagron UK Ltd (Newcastle on Tyne, UK). The penetration enhancers ethanol, oleic acid and dimethylsulfoxide (DMSO) were purchased from Fisher Scientific UK Ltd (Loughborough, UK), while 2-pyrrolidone was purchased from Sigma-Aldrich Co (St. Louis, MO, USA); all were laboratory reagent grade. Methyl cellulose (Fisher Scientific UK Ltd (Loughborough, UK)) and polyethylene glycol (mwt 200, PEG 200) (Sigma-Aldrich Co (St. Louis, MO, USA)) were used as viscosity modifying agents. The receiver phase for the *in-vitro* studies was composed of ethanol (Fisher Scientific UK Ltd (Loughborough, UK)), polyethylene glycol (mwt 200, Sigma-Aldrich Co (St. Louis, MO, USA)) and deionised water. Regenerated cellulose dialysis membrane (Visking tubing, Fisher Scientific UK Ltd (Loughborough, UK)) was used for the synthetic membrane (Corrigan, O. I., Farvar, M. A., & Higuchi, W. I. (1980), "Drug membrane transport enhancement using high energy drug polyvinylpyrrolidone (PVP) co-precipitates", International Journal of Pharmaceutics, 5, 229-238; Haigh, J. M., & Smith, E. W. (1994), "The selection and use of natural and synthetic membranes for in vitro diffusion experiments", European Journal of Pharmaceutical Sciences, 2(5-6), 311-330; Wang, T., Kasichayanula, S., & Gu, X. (2006), "In vitro permeation of repellent DEET and sunscreen oxybenzone across three artificial membranes", International Journal of Pharmaceutics, 310(1-2), 110-7, doi:10.1016/j.ijpharm.2005.11.039; Wissing, S. a, & Müller, R. H. (2002), "Solid lipid nanoparticles as carrier for sunscreens: in vitro release and in vivo skin penetration", Journal of Controlled Release: Official Journal of the Controlled Release Society, 81(3), 225-33).

B.2 Methods

B.2.1 Permeation studies

B.2.1.1 Cellulose tubing *in-vitro* model

The tubing was cut into strips and sealed on one side. For each formulation 1 ml was dispensed into the dialysis tubing, the tubing was then placed in a 50 ml centrifuge tube containing 45 ml of receiver phase. As cholecalciferol is a hydrophobic compound, and is practically insoluble in water, an aqueous ethanol (10:90 (v/v)) receiver phase containing 6% (v/v) PEG 200 was used. Sampling of the receiver phase was performed every hour for the first 4 hours then every 2 hours after that. At each sampling point 5 ml of the receiver phase was removed and replaced with stock receiver phase. Of the 5 ml, 200 μl was extracted and diluted before analysis with HPLC. The temperature of the receiver phase was maintained at 26°C +/- 2°C by the immersion of the centrifuge tubes in a heated water bath. For each formulation 3 replicates were employed.

B.2.1.2 Diffusion cell *in-vitro* model

The membrane was cut into 5x5 cm squares and placed between the donor and receiver chambers of a static diffusion cell (Ingham Group, Aston University, UK). For each formulation 15 ml of receiver solution was placed in to the receiver chamber while 5ml of the assay was dispensed into the donor. An aqueous ethanol (10:90 (v/v)) receiver phase containing 6% (v/v) PEG 200 was used. Sampling of the receiver phase was performed every hour for the first 5 hours then every 2 hours after that. At each sampling point 5 ml of the receiver phase was removed and replaced with stock receiver phase. Of the 5 ml, 200 μl was extracted and diluted before analysis with HPLC. The temperature of the receiver phase was maintained at 37°C +/- 2°C by a heated stirring plate.

B.2.1.3 Formulations

Two batches of 5 formulations were tested with the cellulose tubing model. The first set of 5 formulations investigated a range of chemical penetration enhancers at various concentrations to determine the optimum chemical penetration enhancer. The second batch of 5 formulations investigated a range of DMSO/ethanol co-solvents.

Two batches of formulations were tested with the diffusion cell model; the first set investigated a range of penetration enhancers at various concentrations to determine the optimum chemical penetration enhancer. The second batch varied cholecalciferol concentration.

B.2.1.4 Chemical Penetration Enhancement

Chemical penetration enhancers such as DMSO (Stoughton, R. B., & Fritsch, W. (1964), "Influence of dimethylsulfoxide (DMSO) on human percutaneous absorption", Arch Dermatol, 90(5), 512-517) have been shown to increase the penetration of compounds such as antiviral agents, steroids and antibiotics (Williams, A. C., & Barry, B. W. (2012), "Penetration Enhancers", Advanced Drug Delivery Reviews, 64, 128-137). DMSO and the sulfoxide family disrupt the stratum corneum prompting intercellular passage of the penetrant. Organic solvents such as ethanol increase penetration by extracting the lipids from the horny layer. Fatty acids such as oleic acid have also been shown to improve dermal penetration (Larrucea, E., Arellano, A., Santoyo, S., & Ygartua, P. (2001), "Combined effect of oleic acid and propylene glycol on the percutaneous penetration of tenoxicam and its retention in the skin", European Journal of Pharmaceutics and Biopharmaceutics, 52(2), 113-9; Meshulam, Y., Kadar, T., Wengier, A., Dachir, S., & Levy, A. (1993), "Transdermal penetration of physostigmine: Effects of oleic acid enhancer", Drug Development Research, 28(4), 510-515; Moreira, T. S., de Sousa, V. P., & Pierre, M. B. R. (2010), "A novel transdermal delivery system for the anti-inflammatory lumiracoxib: influence of oleic acid on in vitro percutaneous absorption and in vivo potential cutaneous irritation", AAPS PharmSciTech, 11(2), 621-9) by creating reservoirs in the stratum corneum in which the penetrant can move through. DMSO, ethanol, water, 2-pyrrolidone and oleic acid were chosen as potential penetration enhancers.

B.2.1.5 Membrane preparation

Cellulose membranes were cleaned before use in 1 L of cleaning solution consisting of 2% (w/v) sodium bicarbonate (Sigma-Aldrich Co (St. Louis, MO, USA)) and 1 mM of ethylenediaminetetraacetic acid (EDTA) in distilled water. The cellulose membrane was placed in the solution while the temperature was brought up to 80°C, the solution was then maintained at that temperature for 30 m. After cleaning, the membranes were rinsed thoroughly with distilled water and kept in a bath of distilled water for a maximum of 5 days prior to use. This is in accordance with the manufacturer's guidelines (Medicell International Ltd, 2004).

B.2.1.6 Data analysis

For each formulation used in the *in-vitro* study the drug flux ($J_s$) of the formulation was calculated. This value was obtained with the following equation after the cumulative drug concentration in the receiver chamber was plotted against time (Barry, B. W. (1983), "Dermatological Formulations", pp. 49-94, New York, NY, Marcel Dekker Inc.; Gwak, H. S., & Chun, I. K. (2002), "Effect of vehicles and penetration enhancers on the in vitro percutaneous absorption of tenoxicam through hairless mouse skin", International Journal of Pharmaceutics, 236(1-2), 57-64):

$$J_s = \frac{1}{A}\left(\frac{dQ}{dt}\right)_{ss}$$

where A refers to the cross-sectional area ($cm^2$), and $(dQ/dt)_{ss}$ is the rate of drug permutation at across the membrane over time (mg/h). By plotting the line constructed by the cumulative amount of drug received in the receiver chamber against time $(dQ/dt)_{ss}$ can be determined by calculating the gradient of the line at steady state (i.e. when the relationship is linear). A diffusion area of 40 $cm^2$ was used for the cellulose tubing calculations while an area of 2.54 $cm^2$ was used for the diffusion cell method. Lag time is typically calculated in these types of experiment. However due to the nature of the synthetic membrane the lag time is considered instantaneous for all formulations.

B.2.1.7 HPLC analysis

The quantitative analysis of all cholecalciferol formulations was performed by high performance liquid chromatography (Prominence Modular HPLC (Shimadzu Corporation, Japan)) using a UV diode array. The wavelength of detection was set at 265 nm. A Luna 3μ $NH_2$ 100A column (Phenomenex, Cheshire, UK), dimensions: 150 x 4.6 mm was used with a $NH_2$ 3 mm ID security guard and holder was used. The total flow rate was 2 ml/min and the run time was 6 min. The mobile phase consisted of 99:1 (v/v) hexane/isopropanol (HPLC grade). During the first 3 min of the run a gradient ratio of 99:1 to 50:50 (v/v) hexane/isopropanol was used after which the mobile phase reverted to its original ratio of 99:1 (v/v) hexane/isopropanol. The concentration of cholecalciferol was calculated for each assay by using an equation derived from the slope of the standard curve prepared for cholecalciferol ($r^2$ = 0.999) at 265 nm.

B.2.2 In-vivo studies

B.2.2.1 Animal husbandry

All *in-vivo* investigations were undertaken at Cellvax Pharma (Paris, France). The experimental protocol was approved by the Ministere de L'enseignement Superieur de la Recherche (ComEth Anses/ENVA/UPEC 16). Male Sprague Dawley rats (Harlan, France) aged between 7-10 weeks were used in the protocol. Each rat weighed between 250 - 350 g and were of SOPF (Specific and Opportunistic Pathogen Free) status. Animals were housed in polyethylene cages in a climate and light controlled environment. Hours of lighting were between 7:00 - 19:00, the temperature and humidity was maintained at 21 +/-1 °C and 70% RH respectively. Animals had a constant supply of food and water. In the case of the initial chemical penetration enhancement study (Protocol 1) animals were housed singularly. In the dose response study (Protocol 2) the animals were housed in groups of 2's and 3's and fur shaving was used to identify each animal. All animals were acclimatised to the laboratory for at least one week prior to the start of the experiment.

B.2.2.2 Protocol 1 (Screening Test)

The screening test protocol is based upon the guidelines set out by the European Plant Protection Organisation (EPPO) incorporated in the Efficacy Evaluation of Rodenticides (PP 1/113(2)) (EPPO, 1998). For the testing of a novel rodenticide: screening tests are suggested in which 5 male laboratory strains of either Rattus norvegicus or Mus musculus are used. A total of 5 formulations were tested on 5 animals each.

The procedure for the application of the transdermal rodenticide was based upon the Organisation for Economic Co-operation and Development (OECD) guidelines 434 (OECD, 2004) in which the formulation is applied to a 10 $cm^2$ area on the scruff of the animal. While this protocol advises to shave the area of application site, and to cover the site, these measures were not incorporated in the current study as an "in-use" application was preferred.

B.2.2.3 Protocol 2 (Fixed Dose Procedure)

On identification of the optimum chemical penetration enhancing composition it is then necessary to determine the optimum dose of active ingredient. The number of animals and test conditions were again based on the screening test suggested in the Efficacy Evaluation of Rodenticides (PP 1/113(2)) (EPPO, 1998). The OECD give specific guidelines on the calculation of acute dermal toxicity (OECD guideline 402) (OECD, 1987) in which the LD 50 is calculated from the dose response curve for the active ingredient. However, the Directive advises against this protocol so a fixed dose procedure is used (OECD guidelines 420, 434) (OECD, 2001, 2004) which administers doses equivalent to 5, 50, 300 and 2000 mg/kg.

B.2.2.4 Data Analysis

The Directive states that in order for a rodenticide to be considered for rodent control it must be proven to be "sufficiently effective". The EPPO guidelines on efficacy evaluation indicate that for screening tests only formulations which demonstrate 100% mortality are likely to be effective as a rodenticide.

In addition to mortality, animal distress was monitored 2-3 times per day during a 5 day period, animals were then monitored 2 times per day for a further 9 days. Formulations which exhibit less than 100% mortality were regarded as ineffective. The distress of the animal during the protocol was monitored using a distress scoring chart proposed by Wolfensohn et al (Wolfensohn, S., & Lloyd, M. (2003), "Handbook of Laboratory Animal Management and Welfare" (3rd ed.), Blackwell Publishing Ltd.), a section on provoked response was added to this chart as it was felt this would be an important aspect for future field trials.

In the fixed dose procedure weight data was collected to gauge the effect of sub-lethal doses on the animals. Following completion of the fixed dose procedure the rodenticide was given a classification based upon the LD 50 cut-off values as dictated by OECD (OECD, 2001, 2004).

(C) Results

C.1 Permeation results

To investigate the effect of chemical penetration enhancers on the delivery of cholecalciferol through rat dermis two in-vitro models were constructed. The following results suggest the cumulative amount of cholecalciferol in the receiver phase plotted against time. The tables corresponding to each figure are the calculated drug flux determined from the gradient at steady state.

C.1.1 Cellulose tubing *in-vitro* model

C.1.1.1 Chemical penetration enhancement

Figure 6 shows the cumulative amount of cholecalciferol collected from the receiver phase plotted against time. A total of 5 penetration enhancing chemicals were chosen from the literature: DMSO, ethanol, oleic acid, 2-pyrrolidone and water. The results suggest that the 90:10 (v/v) mixture of DMSO/ ethanol results in the greatest diffusion rate of cholecalciferol through the membrane. The remaining penetration enhancers suggest similar rates of penetration. Both formulations containing DMSO demonstrate the highest calculated drug flux.

Figure 6 shows a comparison of chemical penetration enhancers for the delivery of cholecalciferol through a synthetic membrane. All formulations (shown in Table 5 below) used 10 % (w/v) cholecalciferol; a total of 1 ml was used for each formulation. The area of diffusion was approximately 40 $cm^2$.

**Table 5:** Drug flux comparisons for chemical penetration enhancement of cholecalciferol.

| Formulations | Drug flux ($J_s$) ($mg/cm^2h$) |
|---|---|
| 90: 10 (v/v) DMSO/ethanol | 0.25 +/- 0.019 |

(continued)

| Formulations | Drug flux ($J_s$) (mg/cm$^2$h) |
|---|---|
| 90:10 (v/v) DMSO/oleic acid | 0.18 +/- 0.022 |
| 90: 10 (v/v) ethanol/water | 0.16 +/- 0.023 |
| ethanol | 0.13 +/- 0.0035 |
| 2P | 0.083 +/- 0.017 |

C.1.1.2 DMSO/ethanol co-solvent penetration enhancement

Referring to Figure 7, this shows the measured penetration rates of cholecalciferol when varying ratios of DMSO and ethanol are used as penetration enhancers (as shown in Table 6 below). All solutions contain 10% (w/v) cholecalciferol; a total of 1 ml was used for each formulation. From the previous experiment, a DMSO and ethanol co-solvent was found to increase drug flux. However the optimal ratio is unclear, so a second experiment was conducted in which different ratios of DMSO/ethanol were used.

**Table 6:** Drug flux comparisons for DMSO/ethanol co-solvent penetration enhancement of cholecalciferol.

| Formulations | Drug flux ($J_s$)(mg/cm$^2$h) |
|---|---|
| 90:10 (v/v) DMSO/ethanol | 0.21 +/- 0.023 |
| 80:20 (v/v) DMSO/ethanol | 0.19 +/- 0.012 |
| 70:30 (v/v) DMSO/ethanol | 0.23 +/- 0.014 |
| 60:40 (v/v) DMSO/ethanol | 0.15 +/- 0.028 |
| 50:50 (v/v) DMSO/ethanol | 0.19 +/- 0.011 |

The results suggest that there is no significant difference between the penetration enhancement of cholecalciferol when different ratios of DMSO and ethanol ranging from 50:50 (v/v) to 90:10 (v/v) are used as the penetration enhancer.

C.1.2 Diffusion cell in-vitro model

C.1.2.1 Chemical penetration enhancement

Referring to Figure 8, this shows the diffusion of cholecalciferol through a synthetic membrane using the diffusion cell arrangement. Figure 8 shows the comparison of chemical penetration enhancers for the delivery of cholecalciferol through a synthetic membrane. A total of 5 ml of formulation was dispensed into the donor phase. Dashed lines represent the linear line of best fit from which drug flux was calculated. A combination of cholecalciferol concentrations and chemical penetration enhancers were used, as shown in Table 7 below. Based on the results from the cellulose tubing in-vitro model formulations containing high percentages of DMSO were investigated, while ethanol formulations served as comparators.

The results suggest that for both cholecalciferol concentrations (20% and 40% (w/v)) an ethanol vehicle increased drug flux compared to a DMSO/ethanol co-solvent.

**Table 7:** Drug flux comparison of cholecalciferol formulations as obtained with the diffusion cell model.

| Formulations | Drug flux ($J_s$) (mg/cm$^2$h) |
|---|---|
| 90:10 (v/v) DMSO/oleic acid<br>20% (w/v) cholecalciferol | 3.46 +/- 0.033 |
| 90:10 (v/v) DMSO/ethanol<br>20% (w/v) cholecalciferol | 1.23+/-0.02 |
| 70:30 (v/v) DMSO/ethanol<br>40% (w/v) cholecalciferol | 4.88 +/- 0.079 |
| Ethanol<br>20% (w/v) cholecalciferol | 6.74 +/- 0.22 |

(continued)

| Formulations | Drug flux ($J_s$) (mg/cm$^2$h) |
|---|---|
| Ethanol<br>20% (w/v) cholecalciferol | 2.57 +/- 0.16 |

C.1.2.3 Dose response

Referring to Figure 9, this shows the dose response relationship relating diffusion rate to cholecalciferol concentration using the diffusion cell model. A total of 5 ml was added to each donor chamber. All formulations had the indicated amount of cholecalciferol and used a vehicle consisting of 15 % (v/v) PEG 200 made up to volume using a 50/50 co-solvent of DMSO/ethanol.

Figure 9 suggests the dose response relationship as determined by the diffusion cell *in-vitro* model. A range of cholecalciferol concentrations were investigated (as shown in Table 8 below) comprising 20%, 9%, 1.5% and 0.15% (w/v). The concentrations were taken from the fixed dose procedure for determining oral toxicity (OECD guidelines 420) (OECD, 2001). The results suggest that the 20% (w/v) cholecalciferol concentration produced the greatest drug flux. For all formulations a 50:50 (v/v) DMSO/ethanol co-solvent was used containing 15% (v/v) PEG 200.

**Table 8:** Drug flux comparisons of formulations containing varying concentration of cholecalciferol obtained with the diffusion cell model.

| Formulations | Drug flux ($J_s$) (mg/cm$^2$h) |
|---|---|
| 20% (w/v) cholecalciferol | 5.04 +/- 0.1 |
| 9% (w/v) cholecalciferol | 3.51 +/- 0.18 |
| 1.5% (w/v) cholecalciferol | 0.99 +/- 0.058 |
| 0.15% (w/v) cholecalciferol | 0.11 +/- 0.007 |

C.2 *In-vivo* results

The following results are the *in-vivo* investigations used to validate the *in-vitro* models and to gauge the efficacy of the formulations, in reference to the Directive 98/8/EC (European Commission, 1998). Two investigations were conducted: a screening protocol, used to determine if the formulation is "sufficiently effective", and a fixed dose procedure designed to refine the amount of cholecalciferol required for an effective dose.

C.2.1 Screening test

A total of 5 formulations were implemented in the screening protocol. These formulations demonstrated high drug flux when compared to other chemical penetration enhancers during *in-vitro* investigations. Two of the formulations used a DMOS/ethanol co-solvent, as indicated by the cellulose tubing model; two of the formulations used ethanol as indicated by the diffusion cell model while the remaining formulation consisted of DMSO and oleic acid, as highlighted in both *in-vitro* models. Two variations of cholecalciferol concentration were implemented: 40% (w/v) in ethanol and 70:30 (v/v) DMSO/ethanol co-solvent, while 20% (w/v) was used with ethanol, 90:10 (v/v) DMSO/ethanol and 90:10 (v/v) DMSO/oleic acid. A thickening agent (methyl cellulose) was added to all formulations containing DMSO, 1% (w/v) was added to the 90:10 (v/v) DMSO/ethanol and the 70:30 (v/v) DMSO/ethanol formulations, while 0.75% (w/v) was added to the 90:10 (v/v) DMSO/oleic acid formulation. Mortality and time until endpoint was recorded for each formulation. Each formulation was dosed to 5 animals. A volume of 1 ml was dosed to each animal.

Referring to Figure 10, this shows the survival rates for chemical penetration enhanced transdermal cholecalciferol formulations: (a) survival graph for 20% (w/v) cholecalciferol in 90:10 DMSO/ethanol, (b) Survival graph for 20% (w/v) cholecalciferol in 90:10 DMSO/oleic acid, (c) Survival graph for 40% (w/v) cholecalciferol in 70:30 DMSO/ethanol, (d) Survival graph for 20% (w/v) cholecalciferol in 100% ethanol, (e) Survival graph for 40% cholecalciferol in 100% ethanol, all experiments used n = 5, (f) Mortality and time until endpoint summary for all formulations.

Figure 10 shows the survival rates and for each of the 5 formulations designed to improve the transport of cholecalciferol through rat skin. The results suggest that only formulations which contained DMSO produced 100% mortality. In line with the EPPO guidelines these formulations can be considered for further investigations. The ethanol formulations containing 20% and 40% (w/v) cholecalciferol caused 20% and 60% mortality respectively; these formulations would then be ineffective as a rodenticide and warrant no further investigation. The results suggest that the inclusion of DMSO has improved the penetration of cholecalciferol causing 100% mortality within 5 days of application when compared with the ethanol formulations. In order to assess the effect of the formulation on the animals, and to quantify any distress or suffering, an assessment of distress was made 2-3 times a day using a distress scoring chart. The chart considered 5 key areas in which distress could be displayed these areas are: general appearance, appearance of application site, natural behaviour, provoked behaviour and food and water intake. Each of these areas was given a mark out of 3 allowing a maximum distress of 15. A score of 0 suggests that the formulation had no effect. A score of 1-5 is indicative of minor changes in behaviour; a score of 5-10 is suggestive of moderate changes while a score of over 10 suggests significant changes in behaviour such as pilo-erection and comatose state.

Referring to Figure 11, this shows distress scoring charts for each set of 5 animals exposed to each of the formulations: Figure 11(a) shows the distress scoring for experimental set 1, Figure 11(b) shows the distress scoring for experimental set 2, Figure 11(c) shows the distress scoring for experimental set 3, Figure 11(d) shows the distress scoring for experimental set 4, and Figure 11(e) shows the distress scoring for experimental set 5.

Figure 11 shows the quantification of distress as obtained with the distress scoring chart. As the animals were dosed sequentially the graphs indicate the distress for each animal and formulation for the indicated round of dosing. The results suggest the average distress at endpoint ranged between 5 and 10, apart from the 20% (w/v) cholecalciferol in ethanol which had an average distress of 2. However this formulation only produced 20% mortality. The results suggest that moderate changes in behaviour are exhibited by the rodent such as a reduction in mobility and reduced food and water intake.

Figure 12 shows the average distress at endpoint for all animals. In all cases 0 is no distress and 15 is maximum distress in which the animal exhibits pilo-erection, greatly reduced movement and reduced food and water intake. The endpoint also includes the end of the experiment, in which the case of 20% (w/v) cholecalciferol in ethanol suggested low distress as only 20% of the animals experienced mortality.

C.2.2 Fixed dose procedure

A total of 5 formulations were used for the fixed dose procedure in which the cholecalciferol concentration was varied in reference to the OECD guidelines 420 (OECD, 2001) to determine the GHS classification and the minimum dose required to remain effective. Concentrations comprised of 20%, 9%, 1.5% and 0.15% (w/v) were dosed in 1 ml volumes of 50:50 (v/v) DMSO/ethanol co-solvent formulations containing 15% (v/v) PEG 200. A negative control was also employed consisting of 15% (v/v) PEG 200 in a 50:50 DMSO/ethanol co-solvent. Mortality, time until death and distress was recorded for every animal. The co-solvent penetration enhancer of DMSO/ethanol was used as the results from the screening protocol suggested that this formulation warranted further investigation. The addition of PEG 200 to the formulation was designed to thicken the formulation and aid in adherence to the animal.

Referring to Figure 13, this shows survival analysis for the fixed dose procedure. Figure 13(a) shows the survival graph for 9% and 20% (w/v) cholecalciferol formulations; the other formulations were not included as they exhibited 0% mortality. Figure 13(b) shows mortality and average time until endpoint for all formulations; formulations: 0%, 0.15% and 1.5% all showed no signs of mortality.

Figure 13 shows the survival analysis, mortality and time until death obtained during the fixed dose procedure. Of the 5 formulations investigated only the 9% and 20% (w/v) cholecalciferol demonstrated 100% mortality thus suggesting these formulations are sufficiently effective for consideration as a rodenticide according to the Directive. These formulations also exhibit a reduced time until endpoint when compared to the DMSO/ethanol co-solvents dosed in the screening protocol (100% mortality within 5 days for 90:10 DMSO/ethanol 20% (w/v) cholecalciferol, 100% mortality within 3 days for 50:50 DMSO/ethanol 9% (w/v) cholecalciferol). The negative control did not yield any fatalities thus it can be concluded that the cholecalciferol is responsible for the lethal action.

Referring to Figure 14, this shows distress scoring and rat weight for each of the 5 formulations tested in the fixed dose procedure protocol. All rats were dosed with 1 ml of formulation with the indicated amount of cholecalciferol: Figure 14(a) shows the distress scoring and average rat weight for the control group; Figure 14(b) shows the distress scoring and average rat weight for the group exposed to 0.15% (w/v), minor levels of distress shown while rats demonstrated an increase in weight; Figure 14(c) shows the distress scoring and average rat weight for the group exposed to 1.5% (w/v) cholecalciferol, rats exhibit an increase in distress and a reduction in weight before a small increase in weight suggesting signs of recovery; Figure 14(d) shows the distress scoring and average rat weight for the group exposed to 9% (w/v) cholecalciferol, the results suggest a sharp increase in distress after 24 hours and a marked drop in weight; and Figure 14(e) shows the distress scoring and average rat weight for the group exposed to 20% (w/v); the results suggest a sharp increase in distress and drop in average rat weight after 24 hours.

Distress quantification was performed as in the screening protocol, additional weight data was also taken to greater inform of cholecalciferol effects. The negative control and the 0.15% (w/v) cholecalciferol dose suggests no and minor changes in behaviour, this is coupled with an increase in weight suggesting that food and water in take was healthy. The 9% (w/v) and 20% (w/v) exhibited significant changes in behaviour. However only minor changes were observed during the first day followed by a quick deterioration. The 9% (w/v) cholecalciferol dose exhibited a 100% mortality within 3 days. The 1.5% (w/v) cholecalciferol dose showed moderate changes in behaviour however, analysis of the average weight suggests and increase in weight after 5 days. This would suggest that animals were beginning to recover. Due to the evident toxicity exhibited at this dose this range the formulation would be classified as GHS category 2 (OECD Guidelines 434 - Proposal for a new draft guideline 434 - Acute Dermal Toxicity - Fixed Dose Procedure).

(D) Discussion

Previous reports on the *in-vivo* delivery of cholecalciferol suggests that ethanol is an effective penetration enhancer and carrier agent (Agnew, W. R. (2010), *"Topical pesticide formulation",* WO2010/071450 A1, World Intellectual Property Organization; Agnew, W. R. (2011), *"Topical pesticide formulation",* US2011/0257135 A1, United States Patent). The use of ethanol is logical as cholecalciferol is "freely soluble" in the organic solvent (British Pharmacopoeia. (2012), "Colecalciferol", British Pharmacopoeia) allowing high amounts of cholecalciferol to be carried in the formulation. The high concentration of cholecalciferol promotes transdermal delivery by creating a high diffusion gradient across the dermis. However, these reports base the findings on a single application, on a rat of unknown weight, and therefore the published data is insufficient to serve as prove of efficacy according to the EPPO guidelines (EPPO, 1998) and thus the Directive.

To further investigate the transdermal delivery of cholecalciferol for use as a rodenticide two *in-vitro* models were developed to screen formulations. Both models used apparatus described in previously published investigations. The cellulose tubing model, as described in (Aulton, M. E. (2007), "Aulton's Pharmaceutics: The design and manufacture of medicines", Edinburgh; New York, Churchill Livingstone; Barry, B. W. (1983), "Dermatological Formulations", pp. 49-94, New York, NY, Marcel Dekker Inc.), was used initially, followed by further investigations using diffusion cell apparatus as used in a number of investigations. A drug flux of 0.25 +/-0.019 mg/cm$^2$h was achieved for cholecalciferol in a DMSO/ethanol co-solvent (10% w/v cholecalciferol) when the cellulose tubing model was used. The ethanol formulation proposed by Agnew (Agnew, W. R. (2010), *"Topical pesticide formulation",* WO2010/071450 A1, World Intellectual Property Organization; Agnew, W. R. (2011), *"Topical pesticide formulation",* US2011/0257135 A1, United States Patent) was also tested using this model. It produced a lower drug flux of 0.13 +/-0.0035 mg/cm$^2$h (10% w/v cholecalciferol). However the opposite was observed when these formulations were tested using the diffusion cell model (a drug flux of 3.46 +/- 0.033 mg/cm$^2$h for 90:10 v/v DMSO/ethanol and 2.57 +/- 0.16 mg/cm$^2$h for ethanol with a 20% (w/v) cholecalciferol concentration). The diffusion cell model also suggested higher drug flux for ethanol formulations when compared to DMSO/ethanol co-solvent over two cholecalciferol concentrations (20% and 40% w/v). Potentially, the difference between models is due to the area of diffusion. The cellulose tubing model had a diffusion area of 40 cm$^2$ where as the diffusion cell model had a reduced area of 2.54 cm$^2$. DMSO facilitates diffusion by disrupting the membrane and increasing pore size. While the increased diffusion area within the cellulose bag may have been sufficient to differentiate DMSO formulations it was not sufficient in the diffusion cell model. Alternative driving mechanisms may have been present in the diffusion cell model resulting in the conflicting results between models.

In addition to the *in-vitro* data, *in-vivo* investigations were performed to validate either model and to generate the required laboratory efficacy data for the Directive. The EPPO guidelines (P1/113(2)) (EPPO (1998), "Efficacy evaluation of rodenticides Laboratory tests for evaluation of the toxicity and acceptability of rodenticides and rodenticide preparations" (PP1/113(2))) state that in order for a rodenticide to be deemed "sufficiently effective" a 100% mortality must be observed during the screening protocol. The screening protocol served to both compare DMSO co-solvents with ethanol formulations and determine whether these formulations warranted further investigations. Ethanol formulations containing 20% and 40% (w/v) cholecalciferol exhibited 20% and 60% mortality respectively during the screening protocol; while all formulations containing DMSO displayed 100% mortality (90:10 (v/v) DMSO/ethanol, 70:30 (v/v) DMSO/ethanol and 90:10 (v/v) DMSO/oleic acid). All formulations caused mortality within 5 days of application and produced moderate changes in behaviour. In line with the EEPO guidelines the ethanol based formulations would not be considered for use as a rodenticide as they do not produce sufficient mortality. The difference between these investigations and that of Agnew (Agnew, W. R. (2010), *"Topical pesticide formulation",* WO2010/071450 A1, World Intellectual Property Organization; Agnew, W. R. (2011), *"Topical pesticide formulation",* US2011/0257135 A1, United States Patent) may lie in the different species of rodent. In this study Sprague Dawley rodents were used which weigh between 250-350 g where as a Norway rat (Rattus norvegious) of unknown weight was used in Agnew patent which generally weigh less than lab strains. The result of which would be a mean a 20% (w/v) cholecalciferol dose would be more potent for a rodent weighing less. The *in-vivo* results from the screening protocol also suggest that the cellulose tubing *in-vitro* model gives a closer correlation to *in-vivo* results.

A second protocol was implemented based on fixed dose procedure stated in OECD guidelines 420 (OECD (2001), OECD Guidelines 420 - Acute Oral Toxicity - Fixed Dose Procedure) in which 4 doses of cholecalciferol were administered. This investigation was designed to both determine the GHS category the rodenticide would fall within and determine the efficacy of reduced doses. The lower dose of 0.15% (w/v) cholecalciferol showed no evidence of toxicity, as did the negative control suggesting that it is in fact the substantial dose of cholecalciferol responsible for the lethal effect. Evident toxicity was displayed in rodents dosed with 1.5% (w/v) cholecalciferol in 15% (v/v) PEG 200 made up to 1 ml with 50:50 (v/v) DMSO/ethanol. This would suggest an acute dermal toxicity GHS category of 2 (OECD guideline 434) (OECD (2004), OECD Guidelines 434 - Proposal for a new draft guideline 434 - Acute Dermal Toxicity - Fixed Dose Procedure). The 9% (w/v) cholecalciferol dose resulted in 100% mortality suggesting that this particular formulation would be sufficiently effective for use as a commercial rodenticide. This particular dose also produced 100% mortality within 3 days quicker than that found in the screening study. However distress scoring suggests that the rodents quickly deteriorated 24 h after dosing.

The *in-vivo* investigations suggest that the cellulose tubing in-vitro model is a truer indicator for formulation comparison as this model and the in-vivo investigations suggest DMSO was suggested to have the higher drug flux and the most effective. DMSO and oleic acid have not been previously tested with cholecalciferol. They have however been shown to improve penetration (Williams, A. C., & Barry, B. W. (2012), "Penetration Enhancers", Advanced Drug Delivery Reviews, 64, 128-137) of compounds such as anti-inflammatory drugs (Gwak, H. S., & Chun, I. K. (2002), "Effect of vehicles and penetration enhancers on the in vitro percutaneous absorption of tenoxicam through hairless mouse skin", International Journal of Pharmaceutics, 236(1-2), 57-64; Larrucea, E., Arellano, A., Santoyo, S., & Ygartua, P. (2001), "Combined effect of oleic acid and propylene glycol on the percutaneous penetration of tenoxicam and its retention in the skin", European Journal of Pharmaceutics and Biopharmaceutics, 52(2), 113-9; Meshulam, Y., Kadar, T., Wengier, A., Dachir, S., & Levy, A. (1993), "Transdermal penetration of physostigmine: Effects of oleic acid enhancer", Drug Development Research, 28(4), 510-515; Moreira, T. S., de Sousa, V. P., & Pierre, M. B. R. (2010), "A novel transdermal delivery system for the anti-inflammatory lumiracoxib: influence of oleic acid on in vitro percutaneous absorption and in vivo potential cutaneous irritation", AAPS PharmSciTech, 11(2), 621-9). While DMSO is a proven penetration enhancer it is not typically used because of associated effects, on penetration through the skin it causes an unpleasant taste in the mouth discouraging its use. While this might be a concern for many transdermal applications, in the context of its use as a rodenticide the time till death and humaneness of the formulation must be the priority. In this regard, both permeation studies and *in-vivo* results suggest it is the most effective penetration enhancer investigated for cholecalciferol justifying further investigations.

Finally, the results suggest that a transdermal delivery of cholecalciferol has the potential to provide an alternative to anticoagulant baiting methods. While baiting approaches have been used successfully they depend on the rodent ingesting lethal amounts of the bait. This ingestion is not guaranteed and is a likely contributor to the development of anticoagulant resistance. A one dose transdermal application is potentially a more efficient manner in which to deliver the toxin; an optimised minimum dose can be administered reducing waste and unnecessary exposure to the environment. The difficulty in this approach is the application of the rodenticide. However, devices have been suggested which could make use of dermal delivery (Goode, S. L. (2010), *"Vertebrate Trap",* WO2010/106352 A1, World Intellectual Property Organization). With this in mind transdermal delivery of cholecalciferol thus becomes a feasible alternative to anticoagulant baits.

(E) Conclusions

The objective of this research was to determine a suitable chemical penetration enhancer to facilitate transdermal delivery of cholecalciferol for the purposes of rodenticidal use.

Through both *in-vitro* and *in-vivo* investigations a 1 ml dose of 50:50 (v/v) DMSO/ethanol, 15% (v/v) PEG 200 vehicle containing 9 % (w/v) cholecalciferol (equivalent to a dose of 257 mg/kg for a 0.350 kg rat) was proven to be sufficiently effective as judged by laboratory efficacy guidelines suggested in Directive 98/8/EC. This dose was found to cause 100% mortality within 3 days of application in 5 animals. Dosing was performed by applying the 1 ml formulation onto the scruff of the animal thus offering an alternative method of application to rodenticidal baiting approaches commonly used with anticoagulants.

In parallel to the laboratory efficacy evaluation a fixed dose procedure was also employed to determine the GHS classification for formulation. Evident toxicity was determined in 5 animals at a 1.5% (w/v) cholecalciferol dose in a 1 ml application leading to a category 2 classification.

Previous to the *in-vivo* investigation two *in-vitro* models were developed to screen potential formulations. The cellulose tubing model suggested a DMSO/ethanol co-solvent would facilitate high cholecalciferol flux while a diffusion cell model suggested an ethanol formulation would increase flux. The cellulose tubing model had a higher correlation with *in-vivo* data suggesting that it is a more accurate mode.

The research suggests that the transdermal delivery of cholecalciferol would be classed as sufficiently effective according to the Directive, thus offering an alternative to anticoagulant baits which differs both in active ingredient and manner of delivery.

Example 4 - Alternative Toxicants

Corresponding *in-vitro* experiments to those of Example 2 were carried out on a variety of alternative toxicants, in order to demonstrate the degree to which their ability to be delivered through a synthetic membrane was likewise promoted by use of compositions according to the invention. The toxicants tested were the anticoagulant Warfarin, and Difenacoum.

The results are shown in Figures 15 and 16 and Table 9 below:

**Table 9:**

| Formulation | Drug Flux (*Js*)(mg/cm$^2$/h) |
|---|---|
| 2.5% (w/v) Warfarin<br>15% (v/v) PEG 200<br>50:50 DMSO/ethanol | 1.59 +/- 0.23 |
| 0.006% (w/v) Difenacoum<br>15% (v/v) PEG 200<br>50:50 DMSO/ethanol | 0.033 +/- 0.002 |
| 10% (w/v) Cholecalciferol<br>15% (v/v) PEG 200<br>50:50 DMSO/ethanol | 0.19 +/- 0.011 |

The above results suggest that Warfarin has the highest drug flux. However Warfarin is most effective in small daily doses.

Example 5 - Examples of delivery apparatuses

Some practical examples of delivery apparatuses that may be used for delivering compositions of the invention onto target animals for the purpose of killing them are illustrated in Figures 17 to 22 of the accompanying drawings. These apparatuses correspond to several of the exemplary embodiments of vertebrate trap as disclosed in our earlier International Patent Application WO2010/106352, but are included here by way of illustrative, non-limiting examples only. It is to be understood that any known delivery apparatus or rodent (or other animal) trap that operates by delivering a dose or amount of a pesticidal or vermicidal (or other poisonous agent(s)-containing) composition to the animal may be used for delivering compositions of the present invention in a like or corresponding manner.

Figure 17 shows a vertebrate trap that is, in this embodiment, a rodent trap 1 comprising an enclosure 2 and a pressurized propellant or carrier gas container 3. The container 3 further contains a supply of a vermicidal composition according to the invention, ready for delivery into the enclosure 2 for application onto a surface of an animal that enters therein. The enclosure 2 comprises a hollow tubular member having a first open end 4 and a second open end 5. The enclosure 2 is mounted on a base 6 by supports 7 and 8. The gas container 3 is mounted onto the enclosure 2 by a clip 10 that is secured to the enclosure 2.

The container 3 includes a nozzle 11. The nozzle 11 is connected to a conduit or tube 12 by a connector element 13. The connector element 13 is removably connected to the nozzle 11 by e.g. a screw-threaded connection, or some other suitable connection means.

The container 3 further includes a pressure sensor 17 that is able to sense the pressure of the gas in the container 3, and a radio transmitter 18 that can transmit to e.g. a base, control or monitoring station (not shown) a radio signal indicating the pressure of the gas in the container 3. It will however be appreciated that any other suitable forms of sensor and transmitter may be used.

The enclosure 2 further includes a GPS receiver 19 in combination with a radio transmitter 20, wherein the transmitter 20 is arranged to transmit to the base, control or monitoring station a radio signal indicating the location of the trap. Again, it will be appreciated that any alternative suitable location-determining means and associated transmitter may be used.

Turning to Figure 18, which shows a part-sectional view of the enclosure 2 of the trap of Figure 17, the conduit 12 is connected to a release chamber 14 that is located beneath the enclosure 2. The release chamber 14 is in communication with the interior of the enclosure 2 via a vent 15. The vent 15 comprises a laminar member having a plurality or apertures therethrough to allow the contents of the pressurized container 3 to enter the enclosure 2 via the chamber 14. The chamber 14 also houses a release member 16 that controls the flow of the contents of container 3 into the chamber 14. The release member 16 is connected to an actuator (not shown) that moves in response to instructions received from an activation device (not shown). The enclosure 2 further includes a detector 21 that is a motion sensor for detecting the presence of vertebrates such as rodents. However, it will be appreciated that any appropriate detector may be used.

The above trap, or composition delivery apparatus, of Figures 17 and 18 may be modified in various ways: For example, the tubular member of the enclosure 2 may comprise an arched central section located between a first open end section thereof and a second open end section thereof. An example of such a construction is shown in the context of the embodiment shown in Figure 22 of the drawings and discussed further below. Another exemplary modification is one in which one or (preferably) both of the open end sections of the tubular member of the enclosure 2 may include one or more barrier bars 31, 32, e.g. extending from one lateral side of the end section to the other lateral side thereof. Such barrier bars may be mounted for example within bores that extend through the walls of the end sections of the tubular member. The barrier bars are preferably positioned such that animals larger than a rodent are substantially prevented from entering the enclosure 2. An example of such a construction employing such barrier bars is shown in the context of the embodiments shown in Figures 19 and 22 of the drawings and discussed further below.

Figures 19 and 20 show a second embodiment of the rodent trap 1. Like reference numerals have been used for like features for both embodiments. In the second embodiment, the pressurized gas container 3 is received within a port 50 formed in the base 6. The port 50 includes a screw-threaded aperture to securely receive the screw-threaded nozzle 11 of the container 3. The conduit or tube 12 extends from the port 50 to a release chamber 14 (hidden from view in these Figures). Further, in this embodiment the vent 15 is replaced with a discharge orifice 51 located in the wall of the enclosure 2 and connected to the release chamber 14 by an orifice conduit 52. The barrier bars 31 and 32 extend vertically and are located adjacent each end of the enclosure 2.

In the third embodiment shown in Figures 21 and 22, the base 6 is replaced with an actuator housing 70. The housing includes a port 71 for receiving the nozzle 11 of the container 3. As in the previous embodiments, the port 71 includes a screw-threaded aperture that engages with the complementary screw-threaded nozzle 11 of the container 3. The housing 70 includes a channel (not shown) for transferring the contents of the container - comprising the vermicidal composition according to the invention - to a release chamber located beneath the enclosure 2.

In use, the container 3 containing the composition of the invention is connected to either the connector 13 or port 50 or 71. The controller of the trap is adapted to actuate the release member periodically such that a dose of the composition from the container 3 is released into the enclosure 2 via the release chamber 14 and vent 15 or orifice 51. Where e.g. an attractant or pheromone component is included in the composition, since that component is preferably airborne, it may thus emanate from the enclosure 2 into the atmosphere therearound in order to attract rodents to the trap. Alternatively or additionally, some other suitable form of bait may be placed inside the enclosure in order to entice a rodent into the trap.

As or when a rodent enters the enclosure 2 it will actuate the first sensor, which sends a signal to the controller. Provided that the first sensor remains actuated, activation of the second sensor causes the controller to move the release member such that the vermicidal composition flows from the pressurized container 3 into the enclosure 2. The controller is adapted to actuate the release member for a predetermined amount of time, which corresponds to a sufficient dose to fatally poison the rodent. Once the predetermined period of time has expired the release member returns to its original position to block conduit 12 and prevent further composition from entering the enclosure 2. The controller is programmed to wait a predetermined period of time before it once again acts on the signals received from the first sensor and the second sensor. This will allow time for the rodent to leave the trap, thereby preventing more toxicant component of the composition than necessary to kill it being delivered to the animal.

As mentioned above, various alternative types, constructions and arrangements of delivery apparatuses from those described above may be employed for delivering compositions, or practising methods or uses, according to the present invention and various embodiments thereof in its various aspects.

It is to be understood that the above description of preferred embodiments, features and aspects of the invention, and the illustrative examples thereof, has been by way of non-limiting example only, and various modifications may be made from that which has been specifically described and discussed whilst remaining within the scope of the invention as defined in the appended claims.

Embodiments of the invention in its various aspects may be further understood by reference to the following numbered paragraphs:

1. A composition for killing an animal, comprising:

   (i) a toxin component comprising one or more agents toxic to the animal; and
   (ii) a carrier system for the toxin component;
   wherein the carrier system (ii) comprises:

      (a) at least one solvent or dispersant for the toxin component, and

(b) at least one dermal disruptant component.

2. A composition according to paragraph 1, wherein the at least one dermal disruptant component of the carrier system is a material, and is present in such an amount, which promotes dermal penetration of the toxin into and/or through the skin of the animal.
3. A composition according to paragraph 1 or paragraph 2, wherein the animal to be killed is a target animal and the one or more toxic agents is/are selected from toxins that are specific to the target animal and substantially non-toxic to animals other than the target animal.
4. A composition according to any one of paragraphs 1 to 3, wherein the toxin component is substantially water-insoluble.
5. A composition according to any preceding paragraph, wherein the one or more toxic agents is/are selected from one or more of the following: cholecalciferol, 25-hydroxycholecalciferol, calciferol, ergocalciferol, anticoagulants, metal phosphides, alpha-naphthylthiourea, arsenic compounds, barium compounds, thallium compounds, bromethalin, chloralose, crimidine, 1,3-difluoro-2-propanol, endrin, fluoroacetamide, phosacetim, white phosphorus, pyrinuron, scilliroside, sodium fluoroacetate, strychnine, tetramethylenedisulfotetramine, hydrogen cyanide, sodium cyanide, potassium cyanide, and bacterial or viral toxins.
6. A composition according to paragraph 5, wherein the toxic agent is cholecalciferol or 25-hydroxycholecalciferol (vitamin $D_3$).
7. A composition according to any preceding paragraph, wherein the toxin component is present in the composition in an amount of from about 0.001% up to about 90% by weight of the composition.
8. A composition according to paragraph 7, wherein the toxin component is present in the composition in an amount of from about 1% up to about 60% by weight of the composition.
9. A composition according to any preceding paragraph, wherein the concentration of the toxin component in the composition is selected such that a given single dose or application of the composition delivers to the animal a fatal amount of the toxin component, and not substantially more that that fatal amount.
10. A composition according to any preceding paragraph, wherein the dermal disruptant component comprises an aprotic solvent.
11. A composition according to paragraph 10, wherein the dermal disruptant component comprises one or more substances selected from the following groups: sulfoxides, amides, hydrocarbons, ketones, ethers.
12. A composition according to paragraph 11, wherein the dermal disruptant component is dimethylsulfoxide (DMSO).
13. A composition according to any preceding paragraph, wherein the dermal disruptant component is present in the composition in an amount of from about 1% to about 99% by weight of the carrier system *per se.*
14. A composition according to paragraph 13, wherein the dermal disruptant component is present in the composition in an amount of from about 20, 30 or 40 to about 70, 80 or 90% by weight of the carrier system *per se.*
15. A composition according to any preceding paragraph, wherein the solvent or dispersant of the carrier system is present in an amount of from about 1% to about 99% by weight of the carrier system *per se.*
16. A composition according to paragraph 15, wherein the solvent or dispersant of the carrier system is present in an amount of from about 10 or 25% to about 60 or 70% by weight of the carrier system *per se.*
17. A composition according to any preceding paragraph, further comprising one or more pheromones (e.g. sex pheromones) or other attractant chemical compounds.
18. A composition according to any preceding paragraph, further comprising one or more adjunct components selected from any of the following:

(i) Dermal penetration enhancers;
(ii) Wetting agents;
(iii) Viscosity modifiers;
(iv) Co-solvents;
(v) Other adjuncts selected from one more emulsifiers, stabilisers, preservatives, emollients, perfumes, colourants or dyes, pH adjusting agents, gel-forming agents, foam-forming agents, pharmaceuticals;
(vi) Delivery-facilitating components, selected from one or more aerosol propellants.

19. A composition according to paragraph 18, wherein the composition comprises one or more dermal penetration enhancers selected from any of the following:

- fatty acids, 2-pyrrolidone, propylene glycol, alcohols, glycols, glycol ethers, glycerol formal, polyethylene glycols, liquid polyoxyethylene glycols, pyrrolidones, acetone, acetonitrile, amides, phthalic esters, phospholipids, natural oils, azone, terpenes and terpenoids, essential oils, urea, water.

20. A composition according to any preceding paragraph, wherein the composition is for killing a verminous animal selected from the group consisting of rodents, marsupials, leporids and mustelids.

21. A method of killing an animal, comprising delivering, preferably topically applying, to the skin of the animal a composition according to any one of paragraphs 1 to 20.

22. A method of transdermally delivering to the bloodstream of an animal one or more toxic agents, the method comprising applying to the skin of the animal a composition according to any one of paragraphs 1 to 20.

23. Use of a composition according to any one of paragraphs 1 to 20 as a vermicidal agent or composition.

24. Use, for delivering one or more toxic agents transdermally to the bloodstream of an animal, of a composition according to any one of paragraphs 1 to 20.

25. Use, for delivering one or more toxic agents transdermally to the bloodstream of an animal, of a carrier system for the one or more toxic agents, the carrier system comprising:

(a) at least one solvent or dispersant for the one or more toxic agents, and
(b) at least one dermal disruptant component,
and the one or more toxic agents and the carrier system being provided as or in a composition for application to the skin of the animal.

26. An apparatus for killing an animal by delivering one or more toxic agents to the skin thereof, the apparatus comprising:

(i) an enclosure into which the animal can enter;
(ii) container means containing a supply of a composition according to any one of paragraphs 1 to 20; and
(ii) delivery means for delivering to the skin of the animal an amount of the said composition.

27. A composition, or a method, or a use of a composition, or a use of a carrier system, substantially as described herein.

## Claims

1. A liquid composition for killing a target verminous animal selected from the group consisting of rodents, marsupials, leporids and mustelids, the composition comprising:

   (i) from 0.001 to 90% by weight of the composition of a toxicant component comprising one or more agents toxic to the target animal, the toxicant component being present in the composition in an amount sufficient to kill the target animal when a dose of the composition is applied to the skin of the target animal; and
   (ii) a carrier system for the toxicant component,
   wherein the carrier system (ii) comprises:

   (a) from 1 to 99 % by weight of the carrier system of a liquid solvent or dispersant for the toxicant component, which solvent or dispersant is selected from one or more compounds from any of the following: alcohols, glycols, glycol ethers, glycerol formal, polyethylene glycols, liquid polyoxyethylene glycols, pyrrolidones, acetone, acetonitrile, amides, phthalic esters; and
   (b) from 20 to 90% by weight of the carrier system of a dermal disruptant component for promoting or enhancing passage of the toxicant component into and/or through the skin of the target animal, wherein the dermal disruptant component comprises one or more substances selected from the following groups: sulfoxides, amides, hydrocarbons, ketones, ethers.

2. A composition according to claim 1, wherein the one or more toxic agents is/are selected from toxicants that are specific to the said target animal and substantially non-toxic to animals other than the said target animal.

3. A composition according to claim 1 or claim 2, wherein the toxicant component (i) is substantially water-insoluble.

4. A composition according to any preceding claim, wherein the one or more toxic agents is/are selected from one or more of the following: cholecalciferol, 25-hydroxycholecalciferol, vitamin $D_3$, calciferol, ergocalciferol, anticoagulants, metal phosphides, alpha-naphthylthiourea, arsenic compounds, barium compounds, thallium compounds, bromethalin, chloralose, crimidine, 1,3-difluoro-2-propanol, endrin, fluoroacetamide, phosacetim, white phosphorus, pyrinuron, scilliroside, sodium fluoroacetate, strychnine, tetramethylenedisulfotetramine, hydrogen cyanide, sodium cyanide, potassium cyanide, and bacterial or viral toxins.

**5.** A composition according to claim 4, wherein the one or more toxic agents is/are selected from one or more of the following: cholecalciferol, 25-hydroxycholecalciferol, vitamin $D_3$, warfarin, difenacoum.

**6.** A composition according to any preceding claim, wherein the toxicant component (i) is present in the composition in an amount of from 0.01% up to 75% by weight of the composition, optionally in an amount of from 0.1% up to 70% by weight of the composition, further optionally in an amount of from 1% up to 60% by weight of the composition.

**7.** A composition according to any preceding claim, wherein the concentration of the toxicant component (i) in the composition is selected such that a single said dose of the composition contains an amount of the said toxicant component which is sufficient to be fatal to the said target animal, but which amount is not substantially more than a minimum such fatal amount.

**8.** A composition according to any preceding claim, wherein the dermal disruptant component (b) comprises one or more sulfoxides.

**9.** A composition according to claim 8, wherein the dermal disruptant component (b) comprises dimethylsulfoxide (DMSO).

**10.** A composition according to any preceding claim, wherein the dermal disruptant component (b) is present in the composition in an amount of from 30 to 80%, optionally from 40 to 70%, by weight of the carrier system (ii).

**11.** A composition according to any preceding claim, wherein the solvent or dispersant (a) of the carrier system (ii) is present in the composition in an amount of from 10 or 25% to 60 or 70% by weight of the carrier system (ii).

**12.** A composition according to any preceding claim, further comprising one or more pheromones or other attractant chemical compounds.

**13.** A composition according to any preceding claim, further comprising up to 10% by weight of the total composition of one or more adjunct components selected from any of the following:

(i) Dermal penetration enhancers;
(ii) Wetting agents;
(iii) Viscosity modifiers;
(iv) Co-solvents;
(v) One or more emulsifiers, stabilisers, preservatives, emollients, perfumes, colourants or dyes, pH adjusting agents, gel-forming agents, foam-forming agents, pharmaceuticals;
(vi) Delivery-facilitating components selected from one or more aerosol propellants.

**14.** A method of killing a target verminous animal selected from the group consisting of rodents, marsupials, leporids and mustelids, the method comprising delivering to the skin of the target animal a liquid composition according to any one of claims 1 to 13.

**15.** An apparatus for killing a target verminous animal selected from the group consisting of rodents, marsupials, leporids and mustelids, by delivering one or more toxic agents to the skin thereof, the apparatus comprising:

(i) an enclosure into which the target animal can enter;
(ii) container means containing a supply of a liquid composition according to any one of claims 1 to 13; and
(iii) delivery means for delivering to the skin of the target animal a said dose amount of the said composition.

**Chemical penetration enhancement**

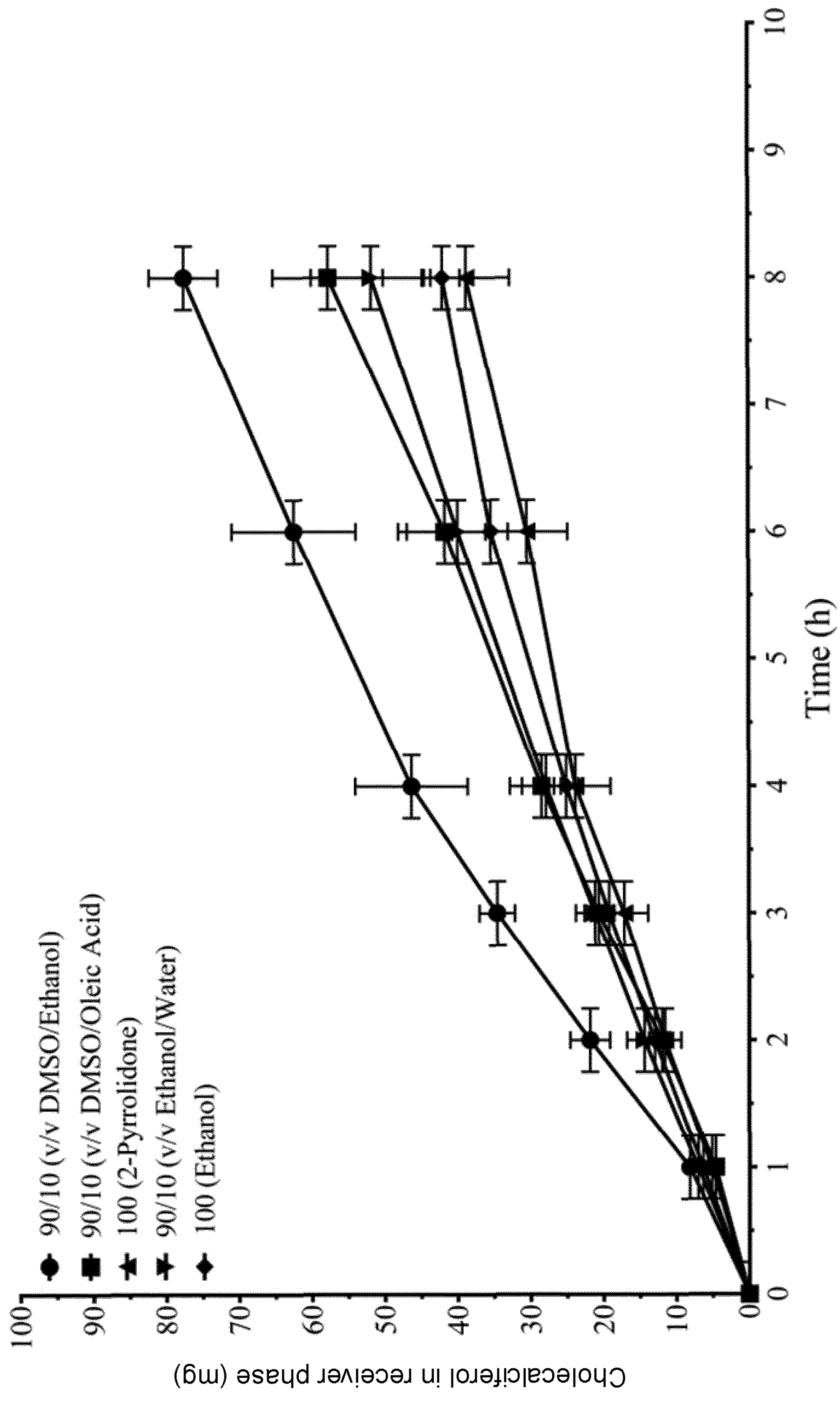


**Fig. 1**

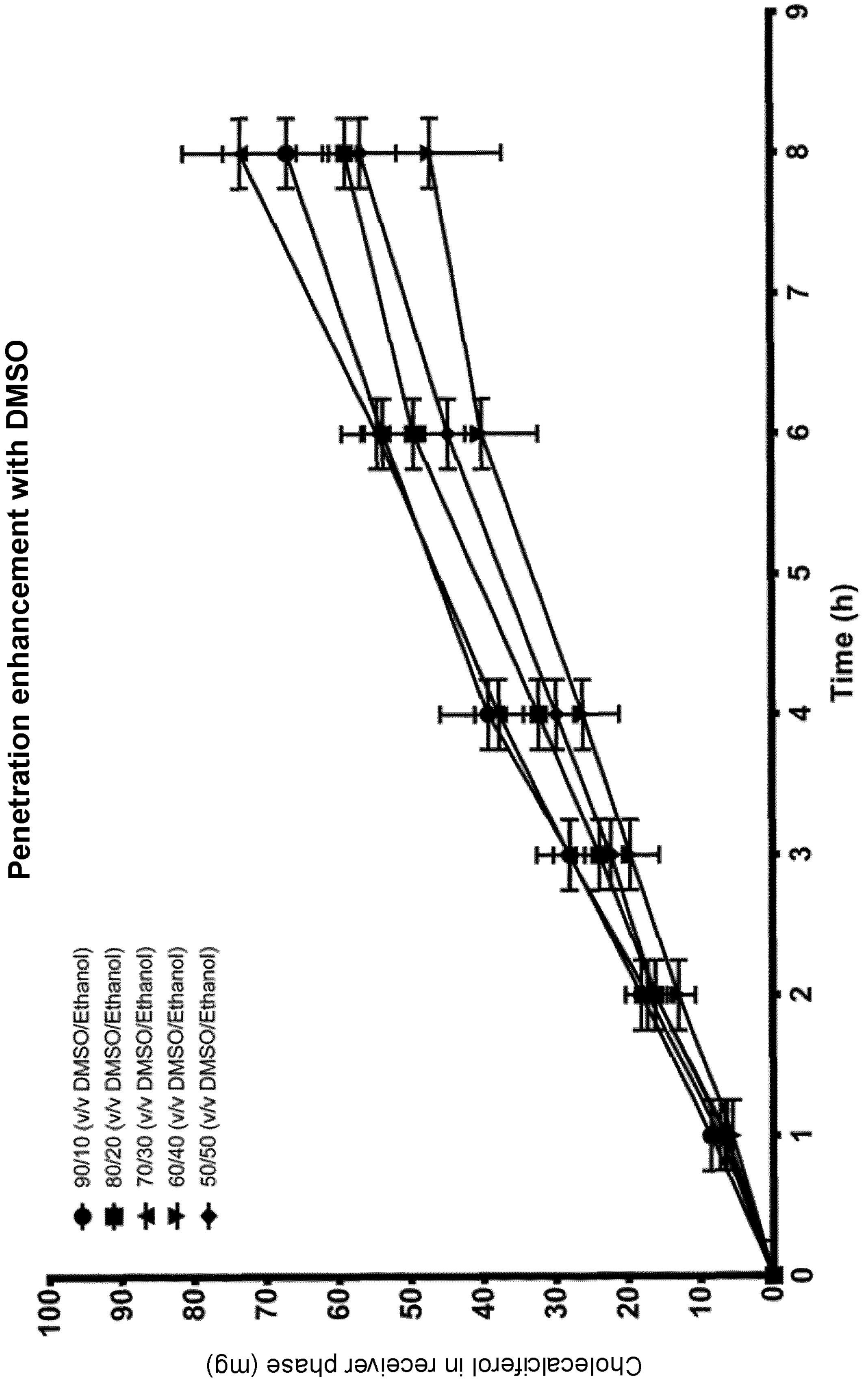

Penetration enhancement with DMSO
90/10 (v/v DMSO/Ethanol)
80/20 (v/v DMSO/Ethanol)
70/30 (v/v DMSO/Ethanol)
60/40 (v/v DMSO/Ethanol)
50/50 (v/v DMSO/Ethanol)
Cholecalciferol in receiver phase (mg)
0
10
20
30
40
50
60
70
80
90
100
Time (h)
0
1
2
3
4
5
6
7
8
9


Fig. 2

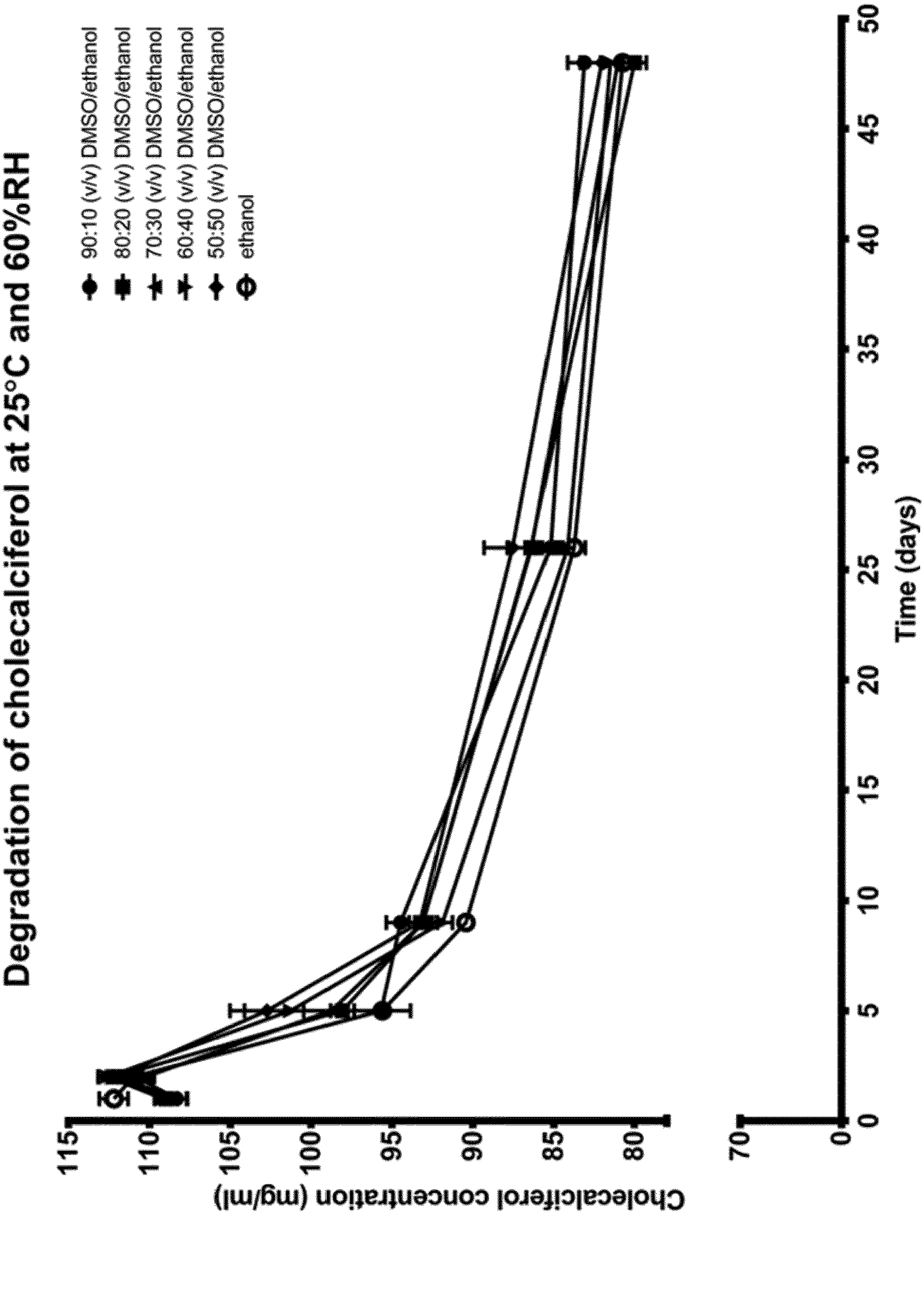
Degradation of cholecalciferol at 25°C and 60%RH
90:10 (v/v) DMSO/ethanol
80:20 (v/v) DMSO/ethanol
70:30 (v/v) DMSO/ethanol
60:40 (v/v) DMSO/ethanol
50:50 (v/v) DMSO/ethanol
ethanol
Cholecalciferol concentration (mg/ml)
115
110
105
100
95
90
85
80
70
0
Time (days)
0
5
10
15
20
25
30
35
40
45
50

Fig. 3

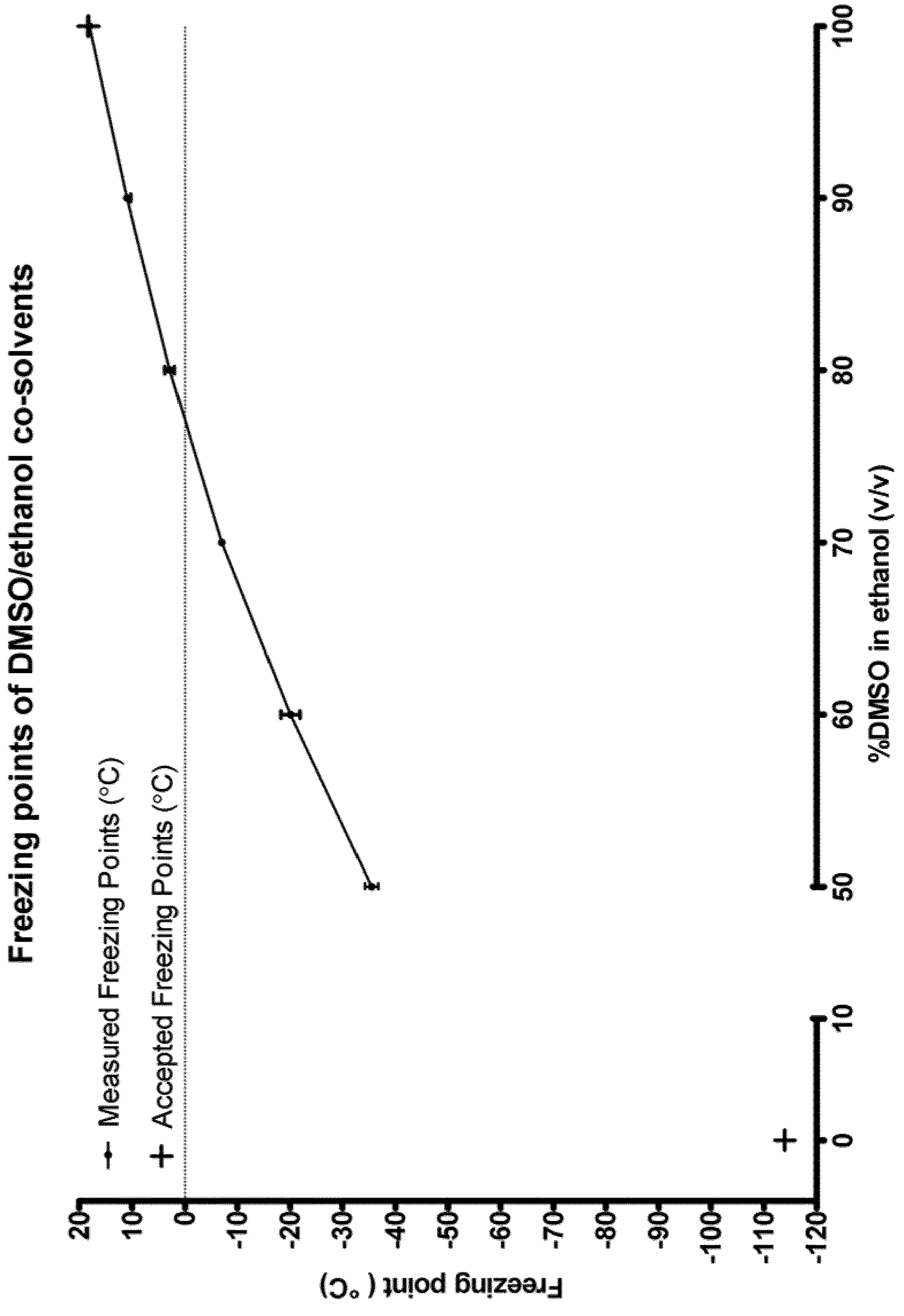
Freezing points of DMSO/ethanol co-solvents
Measured Freezing Points (°C)
Accepted Freezing Points (°C)
Freezing point ( °C)
20
10
0
-10
-20
-30
-40
-50
-60
-70
-80
-90
-100
-110
-120
0
10
50
60
70
80
90
100
%DMSO in ethanol (v/v)

Fig. 4

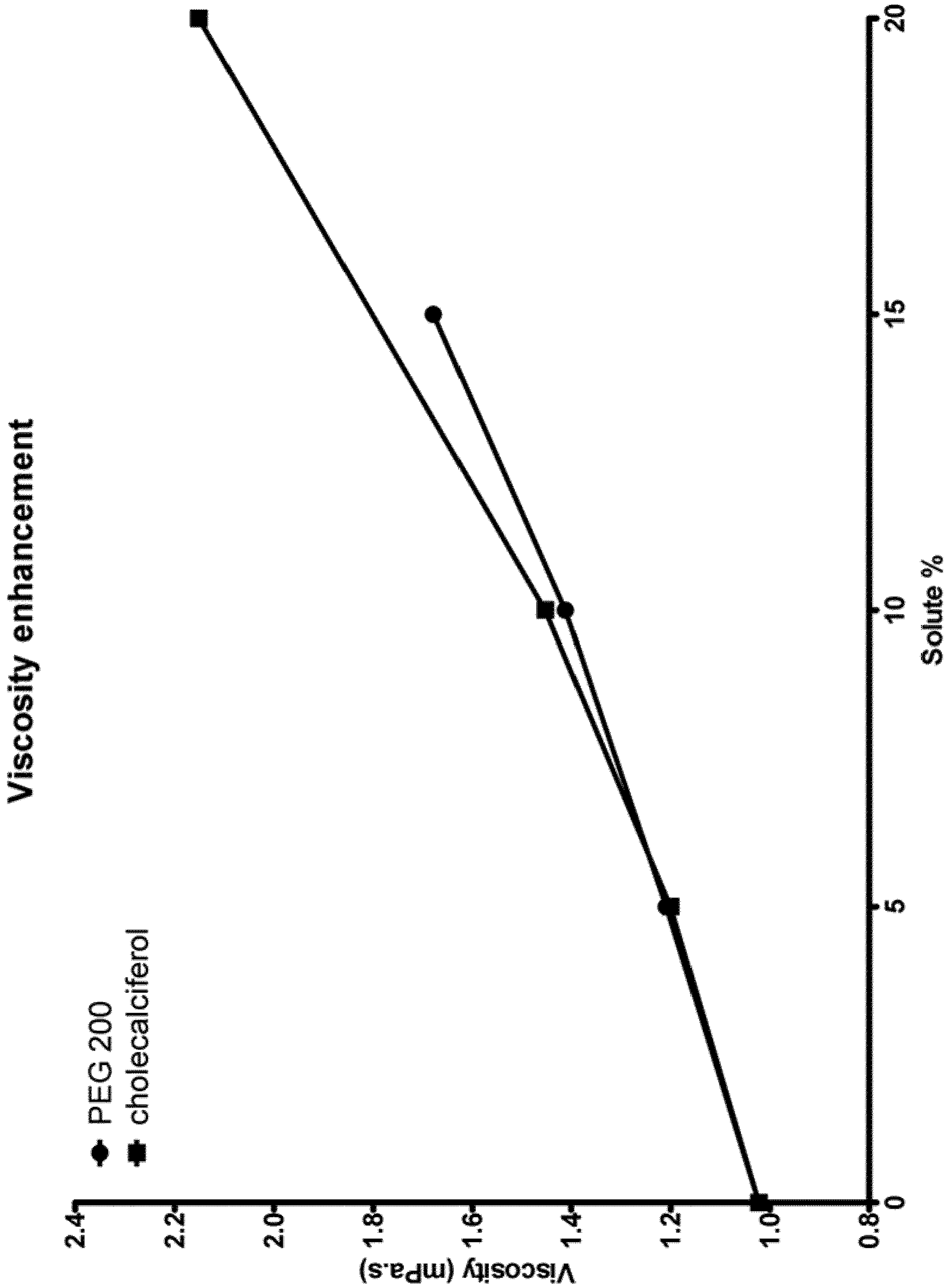
Viscosity enhancement
PEG 200
cholecalciferol
Viscosity (mPa.s)
2.4
2.2
2.0
1.8
1.6
1.4
1.2
1.0
0.8
0
5
10
15
20
Solute %

**Fig. 5**

*In-vitro* model (Cellulose tubing): Comparison of chemical penetration enhancers

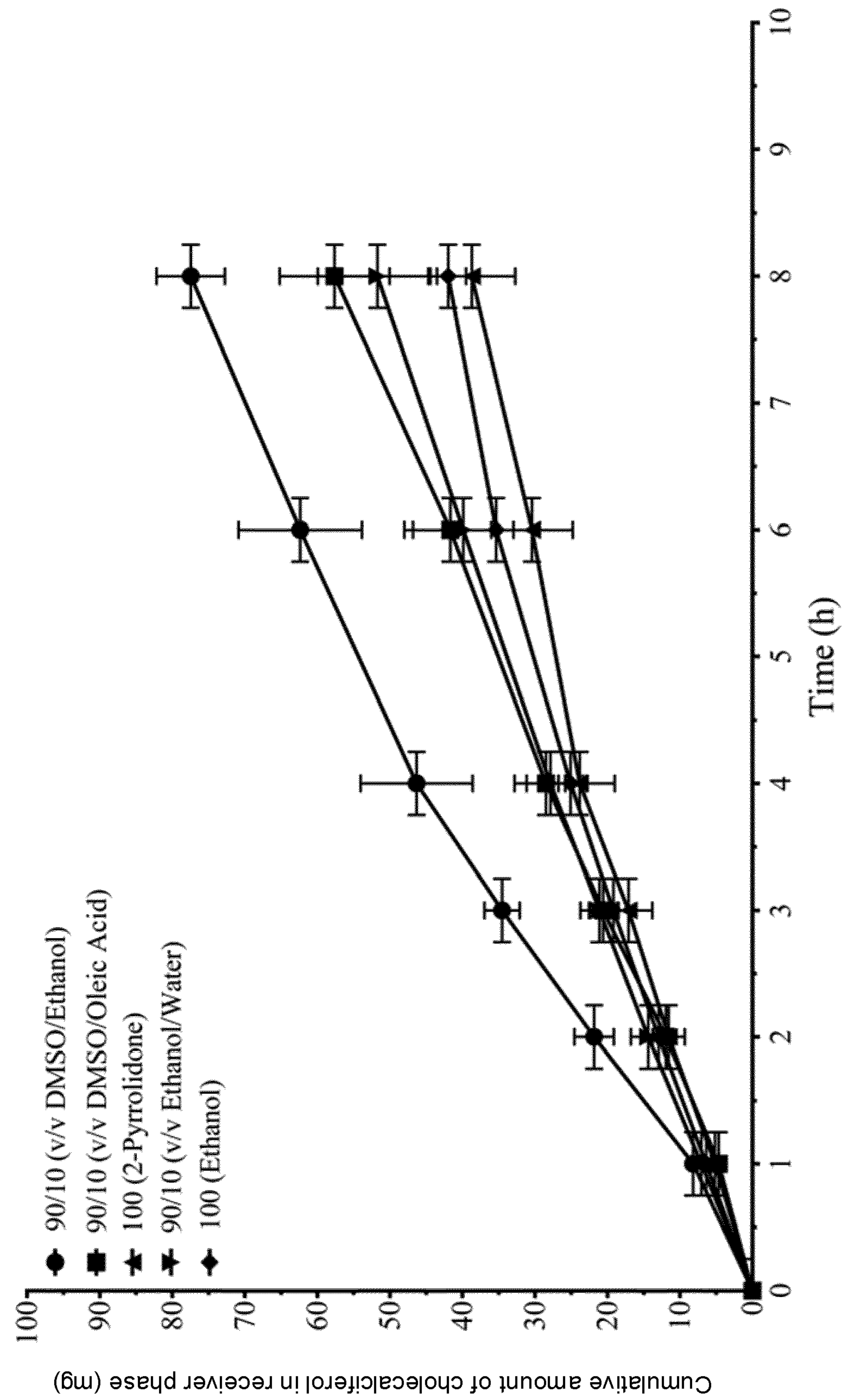


**Fig. 6**

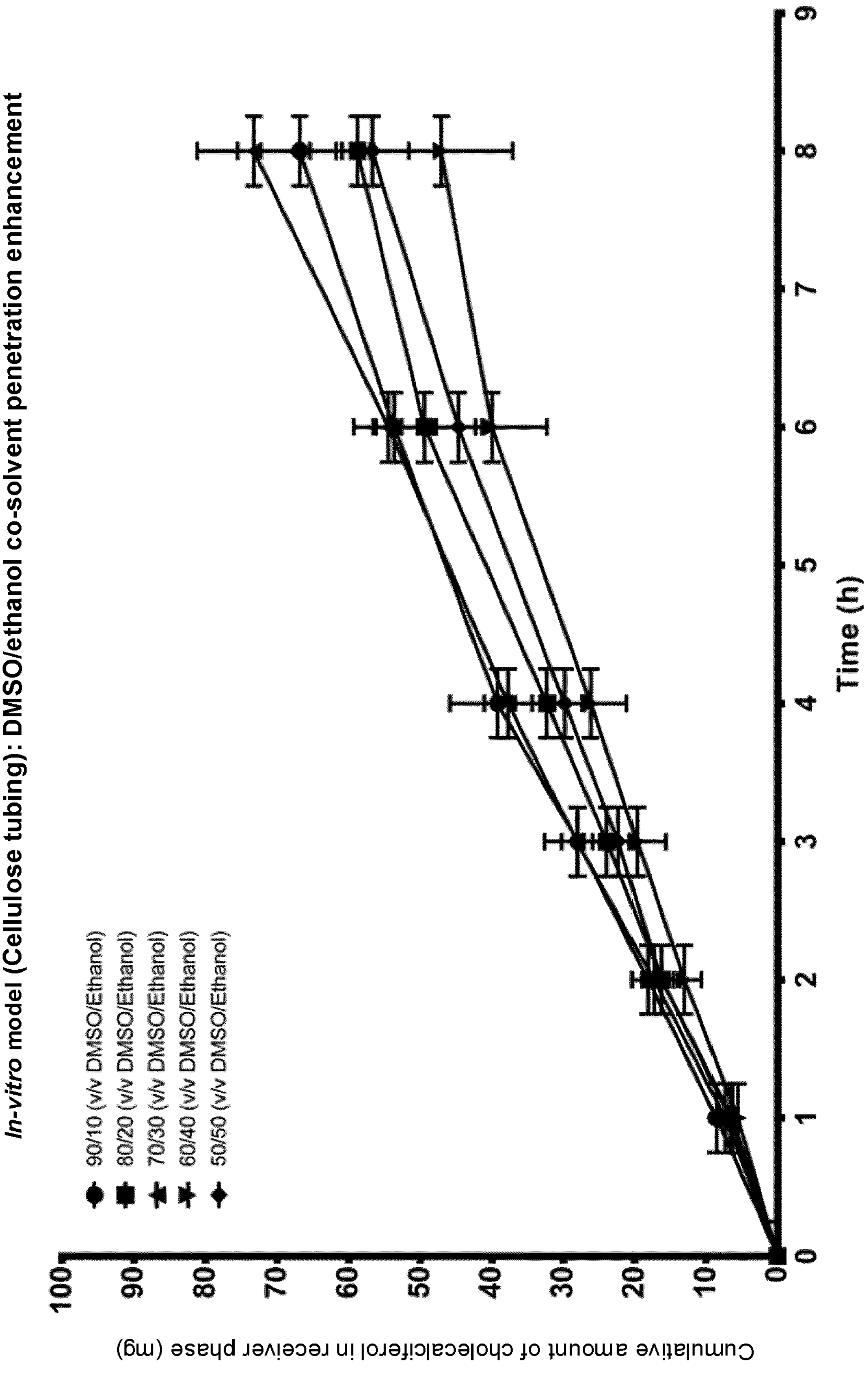

*In-vitro* model (Cellulose tubing): DMSO/ethanol co-solvent penetration enhancement
90/10 (v/v DMSO/Ethanol)
80/20 (v/v DMSO/Ethanol)
70/30 (v/v DMSO/Ethanol)
60/40 (v/v DMSO/Ethanol)
50/50 (v/v DMSO/Ethanol)
Cumulative amount of cholecalciferol in receiver phase (mg)
100
90
80
70
60
50
40
30
20
10
0
0
1
2
3
4
5
6
7
8
9
Time (h)


Fig. 7

*In-vitro* model (Diffusion cell): Comparison of chemical penetration enhancers

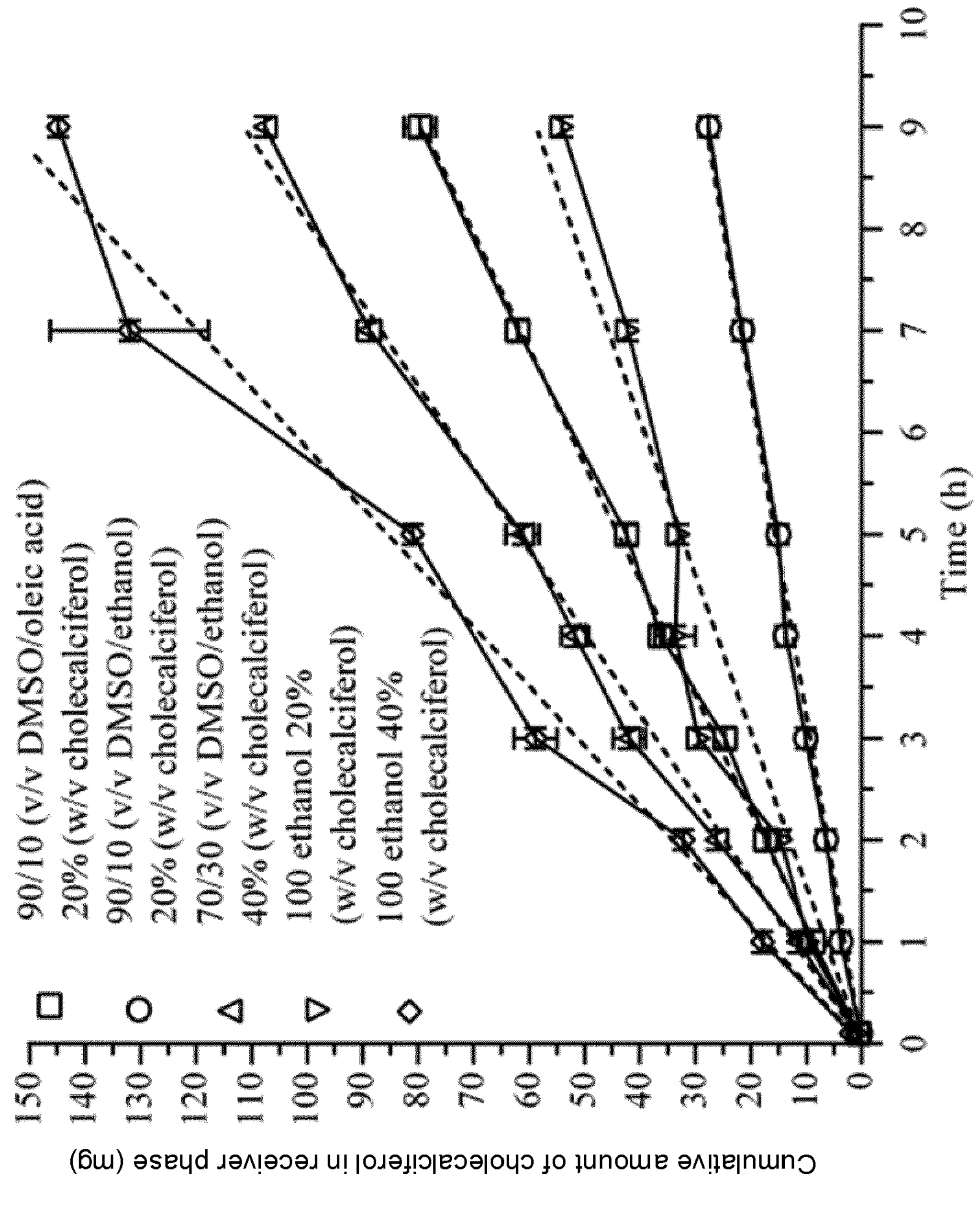


Fig. 8

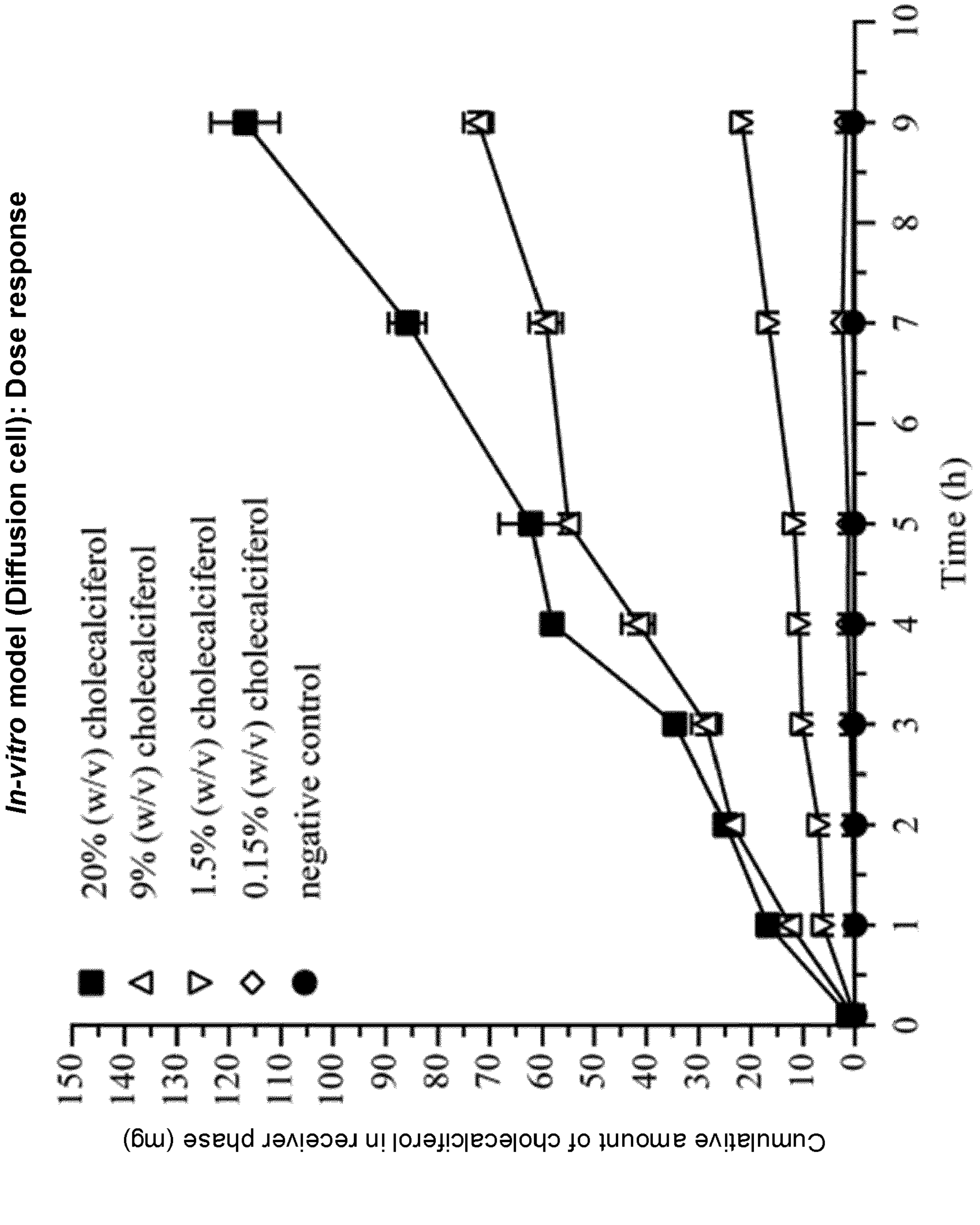

*In-vitro* model (Diffusion cell): Dose response
20% (w/v) cholecalciferol
9% (w/v) cholecalciferol
1.5% (w/v) cholecalciferol
0.15% (w/v) cholecalciferol
negative control
Cumulative amount of cholecalciferol in receiver phase (mg)
150
140
130
120
110
100
90
80
70
60
50
40
30
20
10
0
0
1
2
3
4
5
6
7
8
9
10
Time (h)


Fig. 9

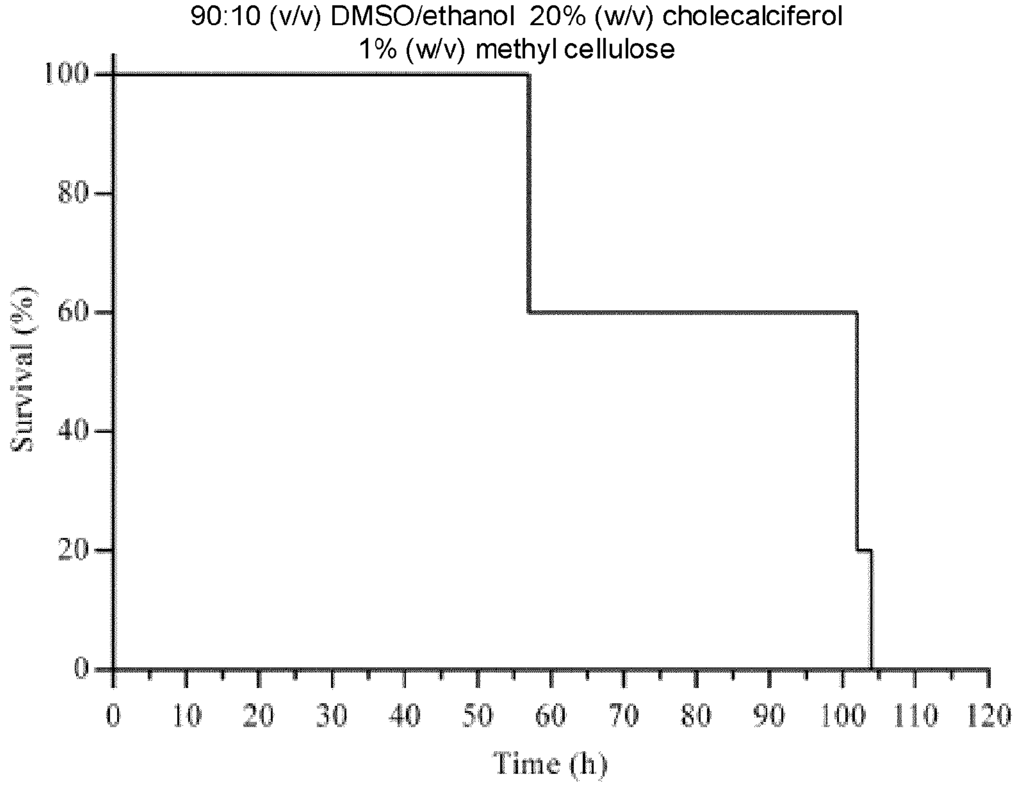


Fig. 10(a)

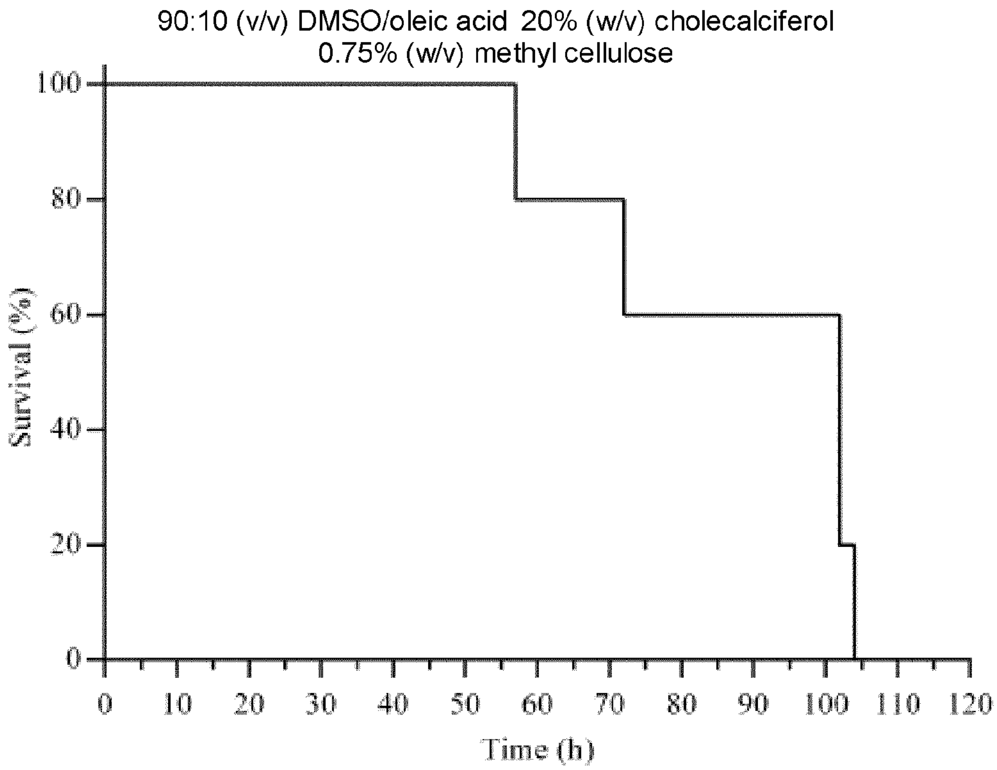


Fig. 10(b)

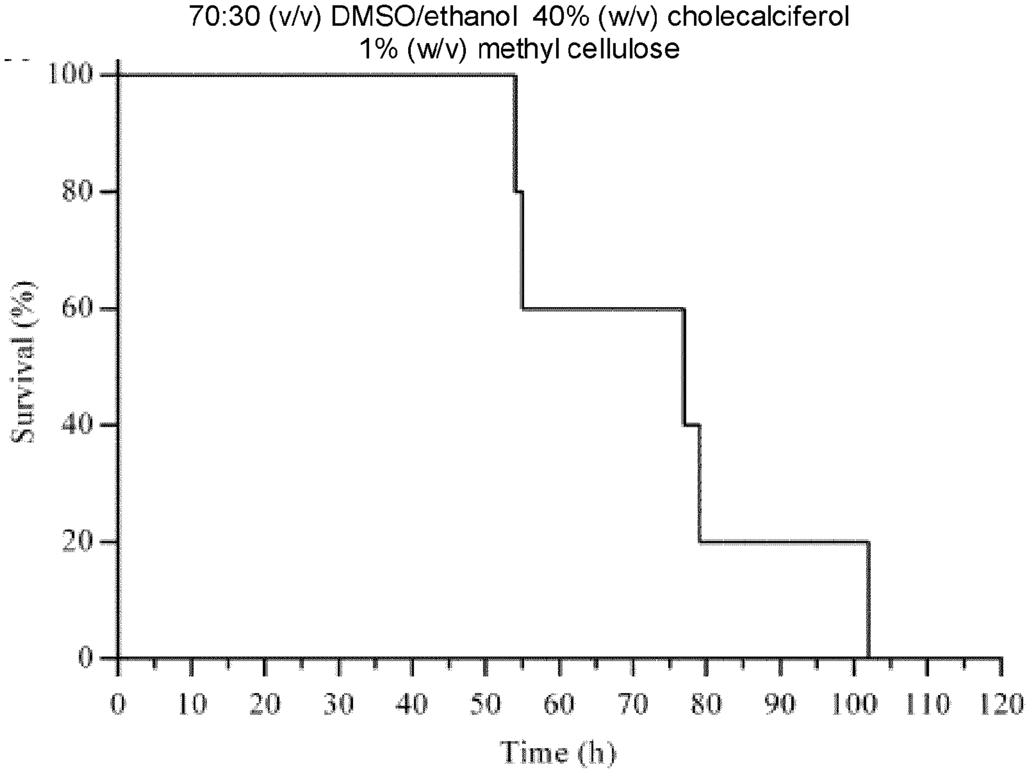


**Fig. 10(c)**

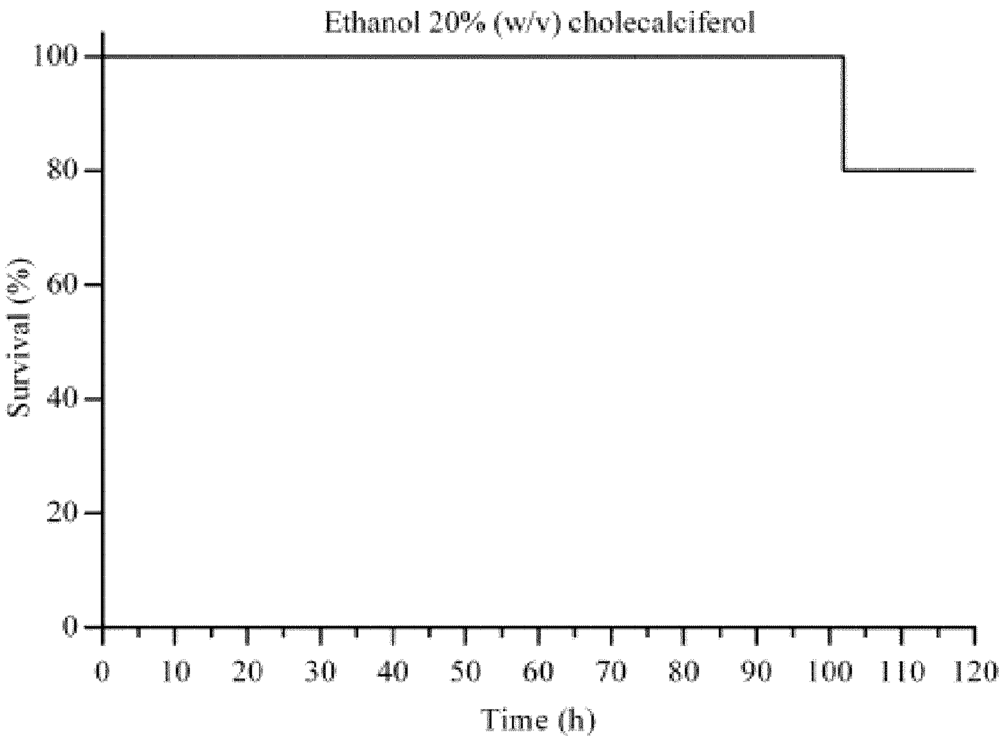


**Fig. 10(d)**

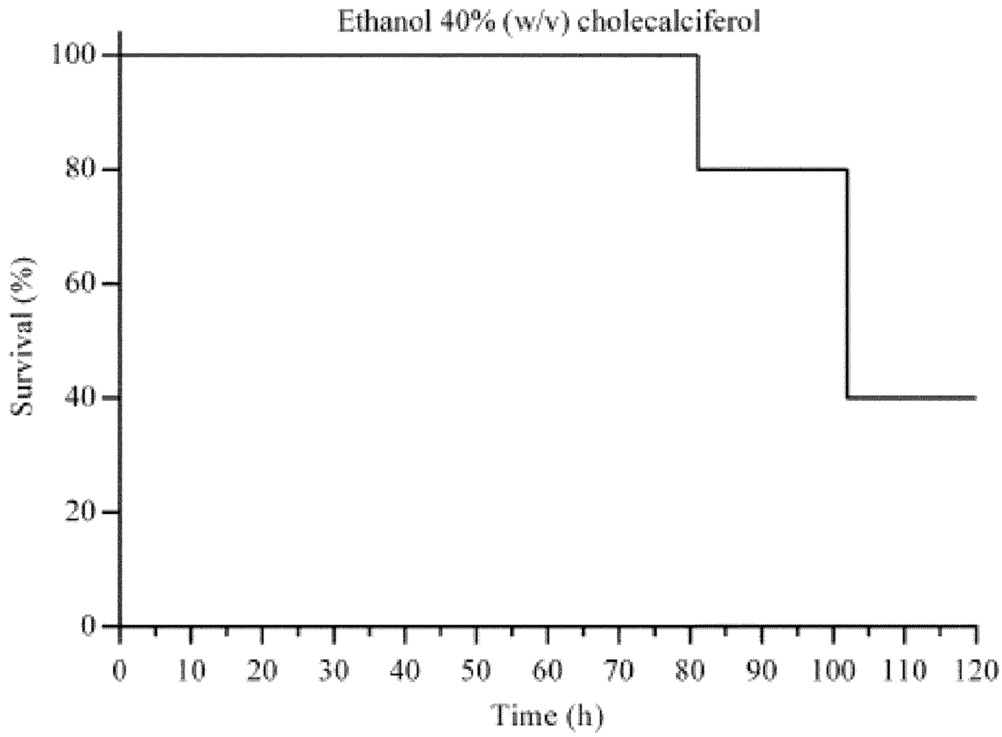


Fig. 10(e)

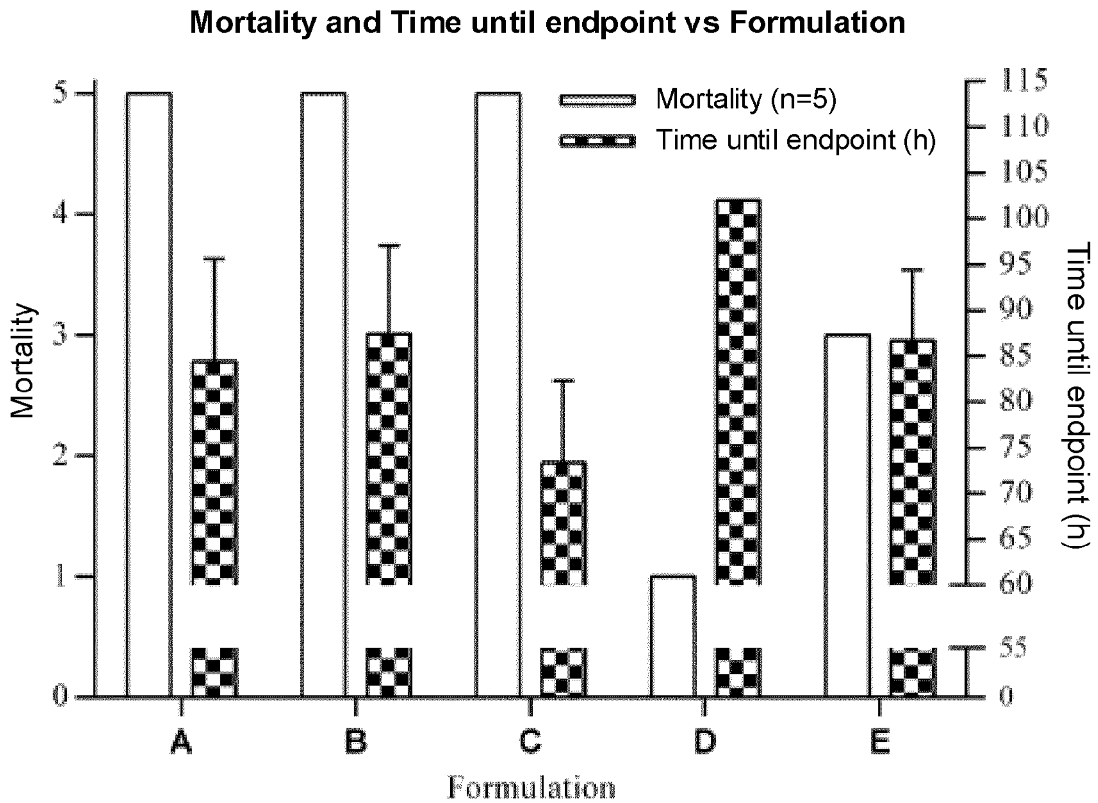


Fig. 10(f)

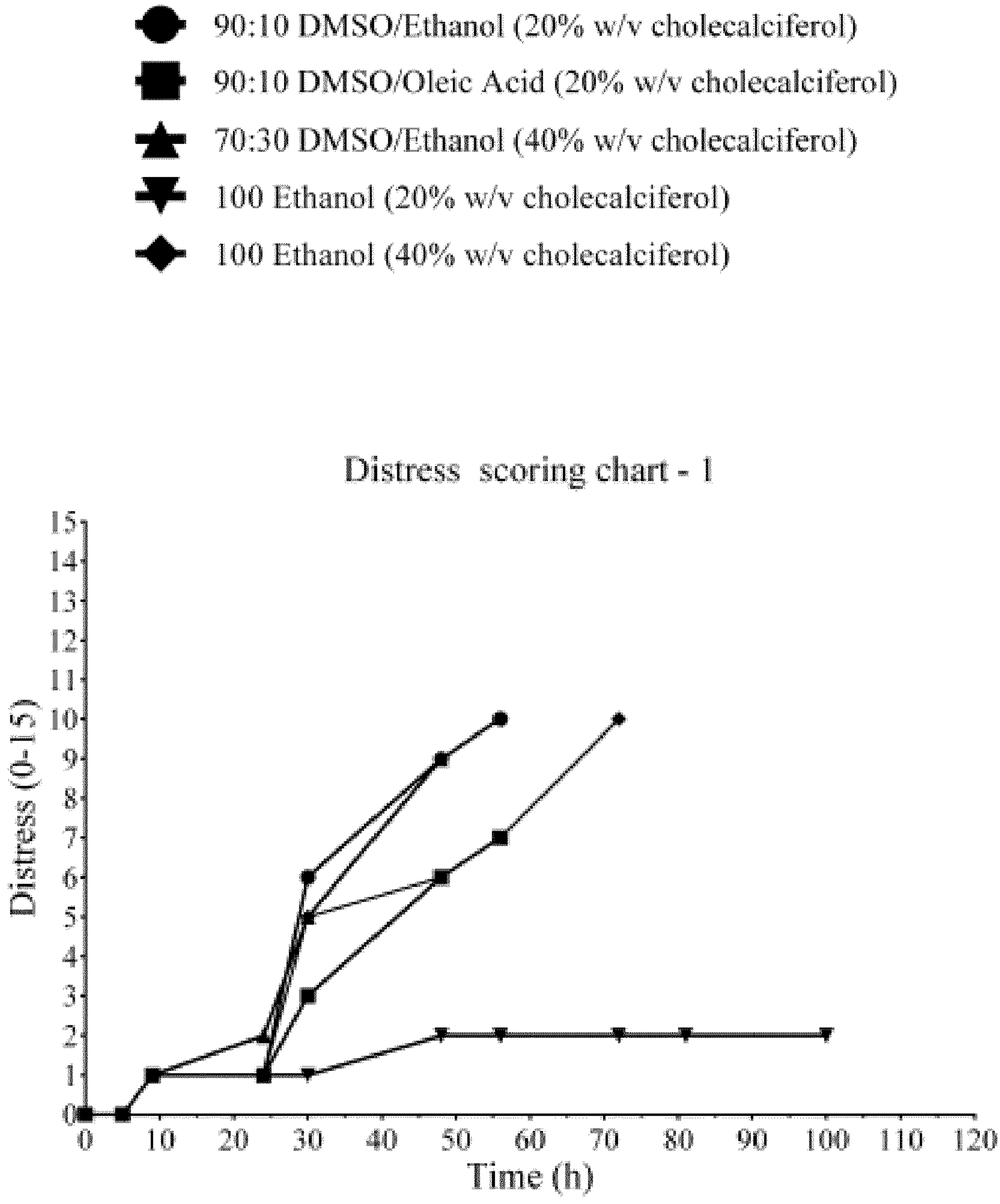
90:10 DMSO/Ethanol (20% w/v cholecalciferol)
90:10 DMSO/Oleic Acid (20% w/v cholecalciferol)
70:30 DMSO/Ethanol (40% w/v cholecalciferol)
100 Ethanol (20% w/v cholecalciferol)
100 Ethanol (40% w/v cholecalciferol)
Distress scoring chart - 1
Distress (0-15)
0 1 2 3 4 5 6 7 8 9 10 11 12 13 14 15
0 10 20 30 40 50 60 70 80 90 100 110 120
Time (h)

**Fig. 11(a)**

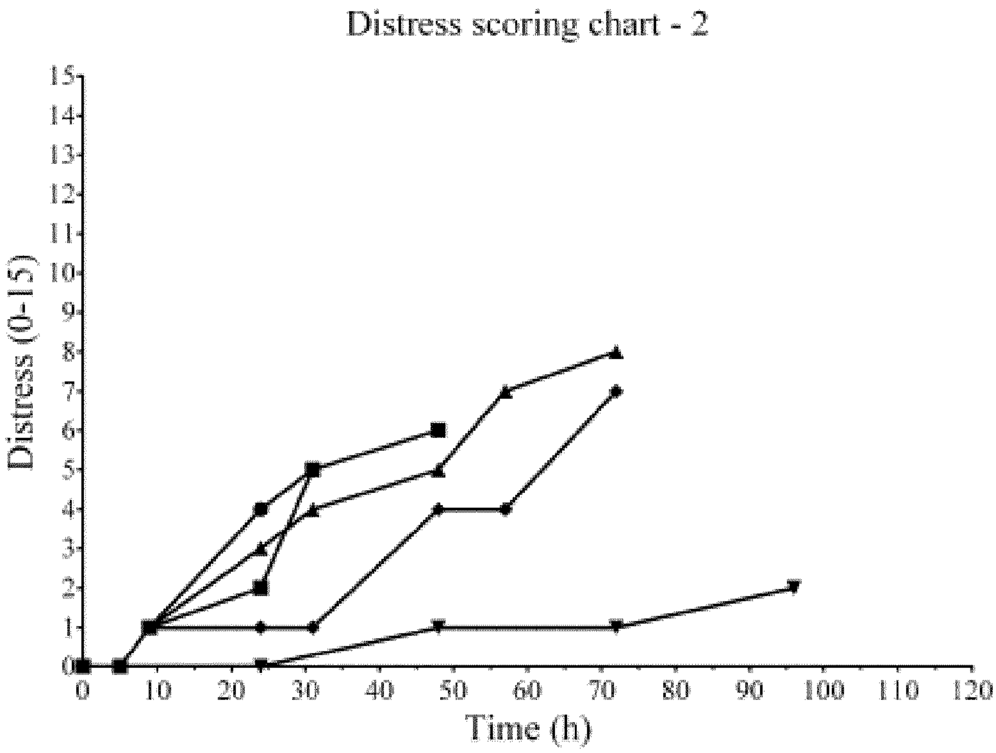


**Fig. 11(b)**

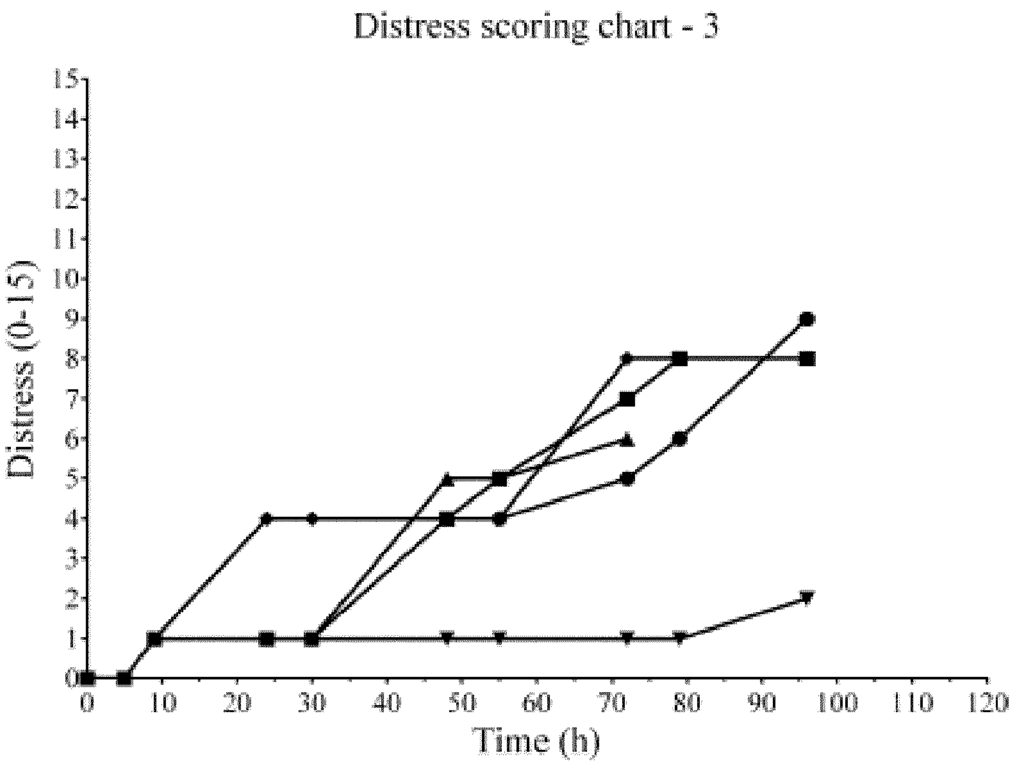


**Fig. 11(c)**

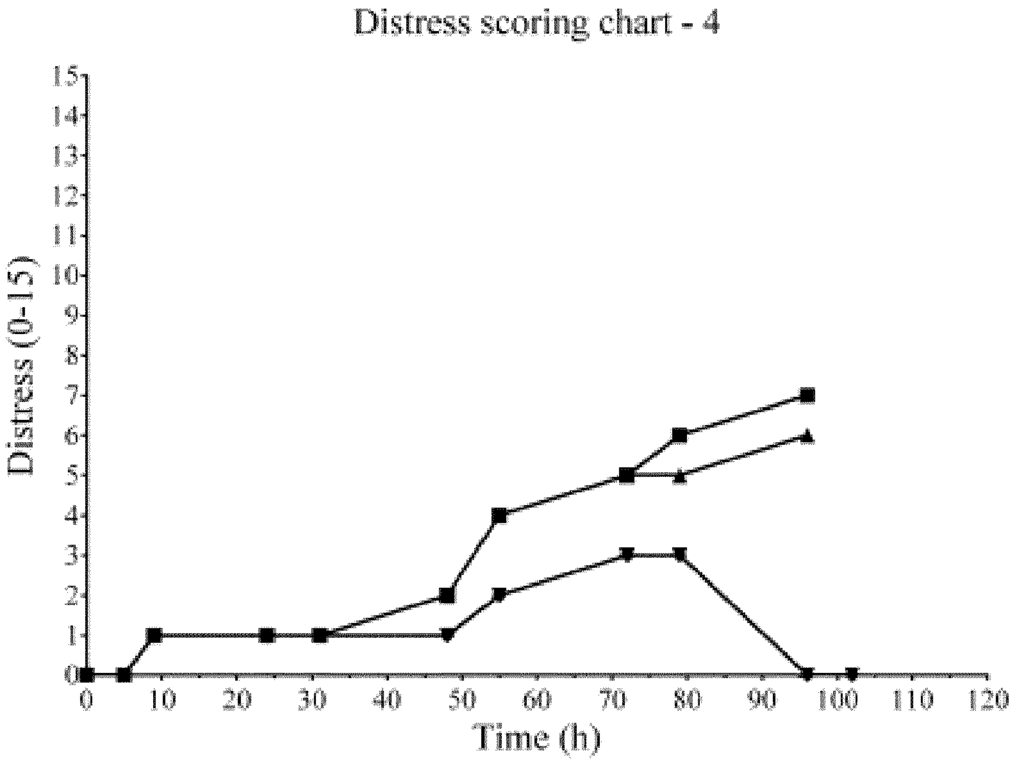


Fig. 11(d)

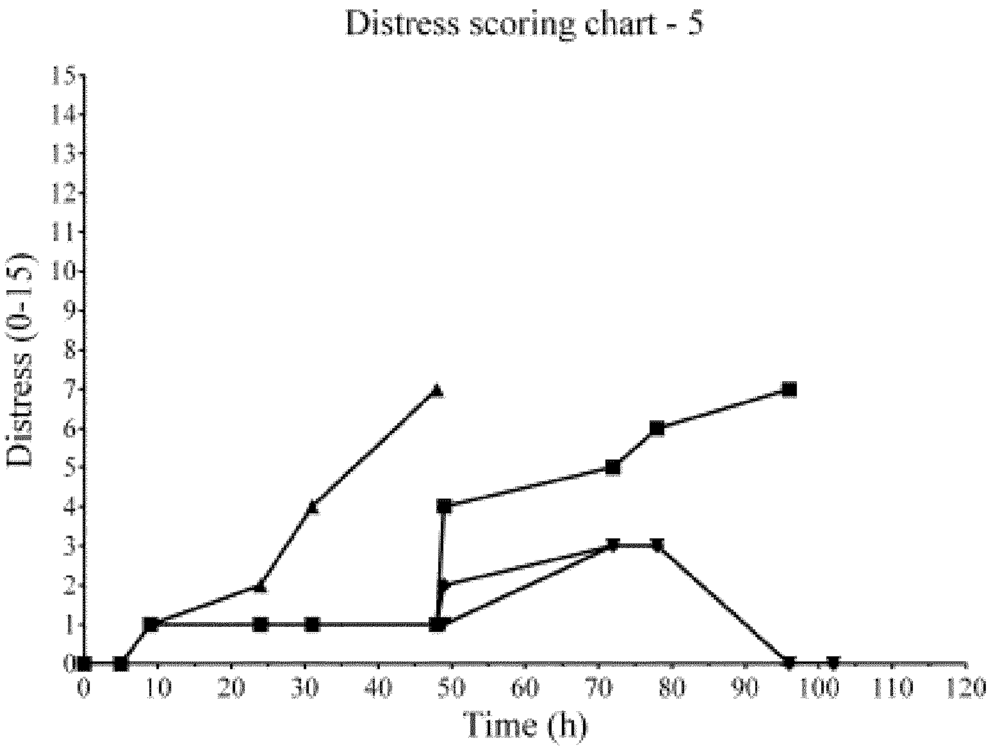


Fig. 11(e)

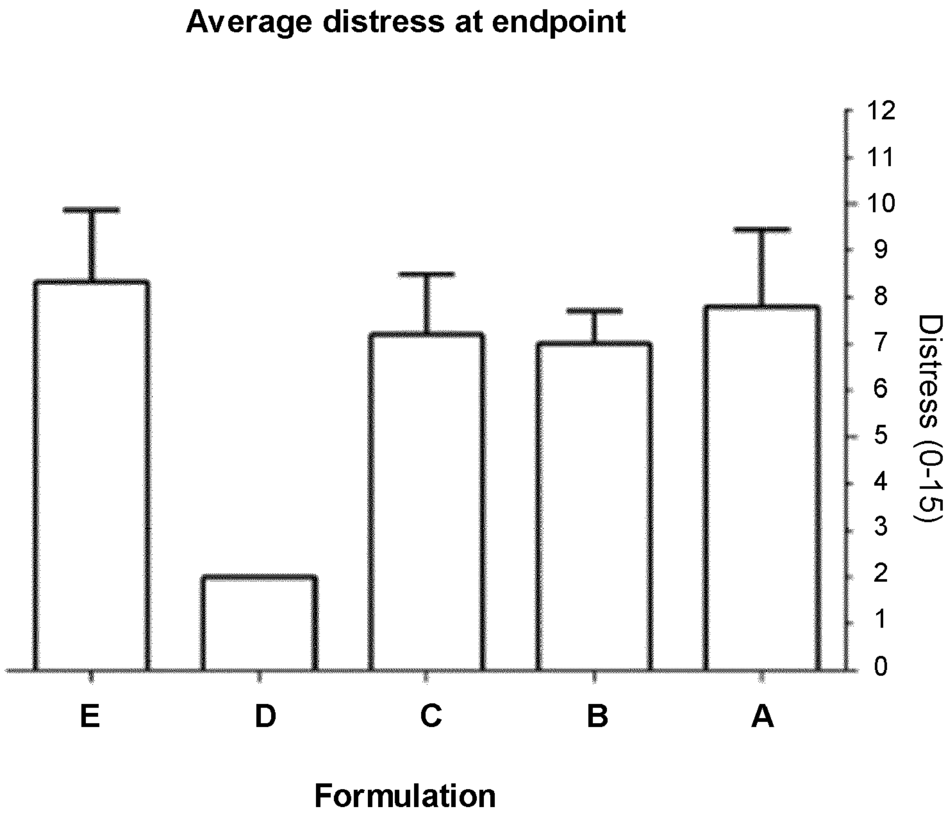


**A** 90:10 DMSO/Ethanol (20% (w/v) cholecalciferol) (1% (w/v) methyl cellulose)

**B** 90:10 DMSO/Oleic acid (20% (w/v) cholecalciferol) (0.75% (w/v) methyl cellulose)

**C** 70:30 DMSO/Ethanol (40% (w/v) cholecalciferol) (1% (w/v) methyl cellulose)

**D** 100 Ethanol (20% (w/v) cholecalciferol)

**E** 100 Ethanol (40% (w/v) cholecalciferol)

# Fig. 12

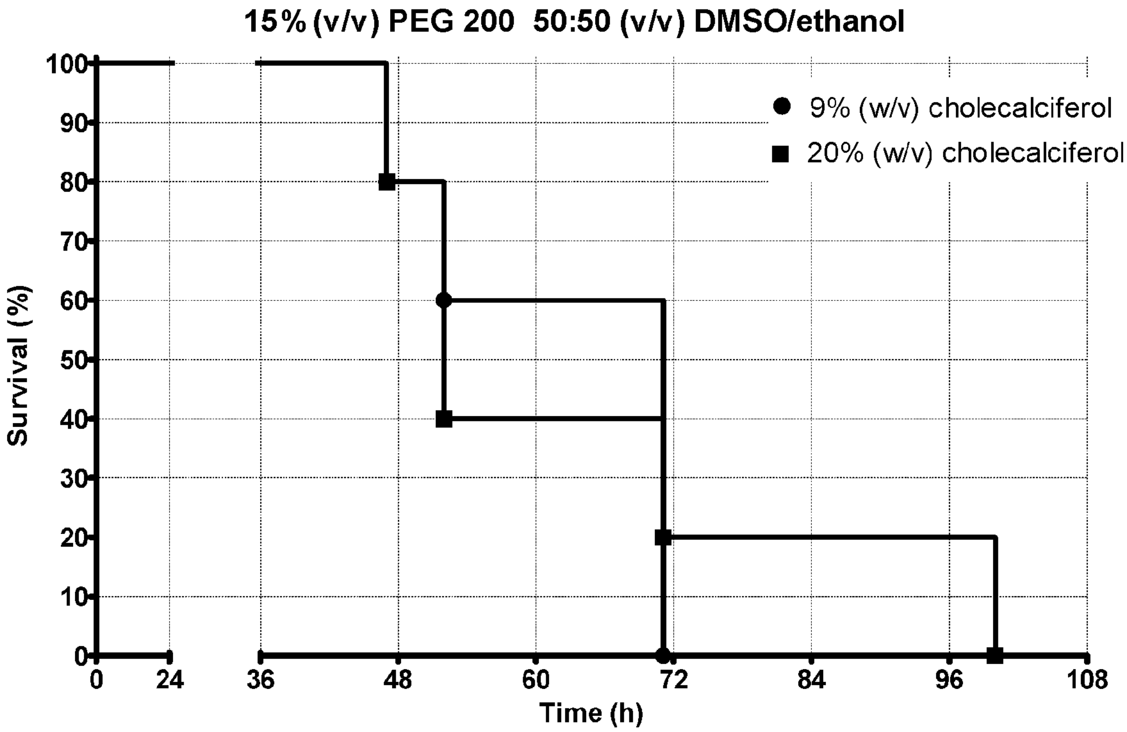


Fig. 13(a)

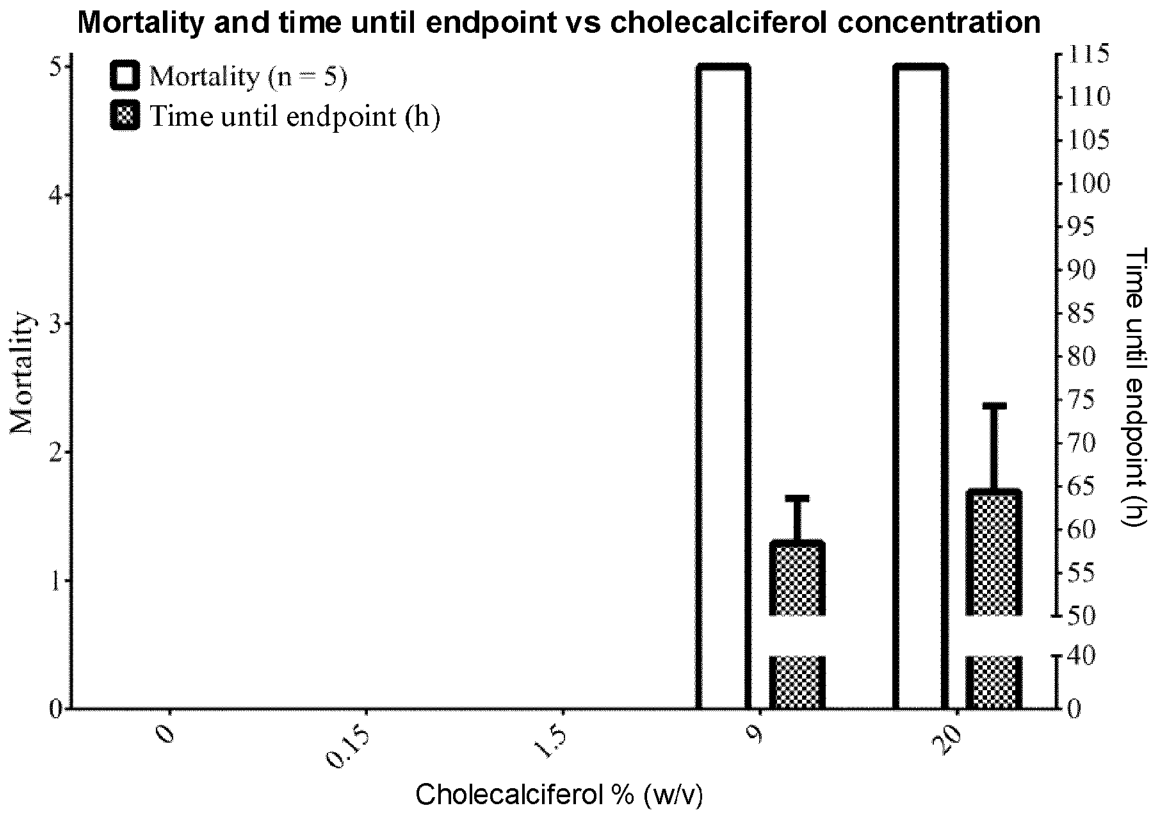


Fig. 13(b)

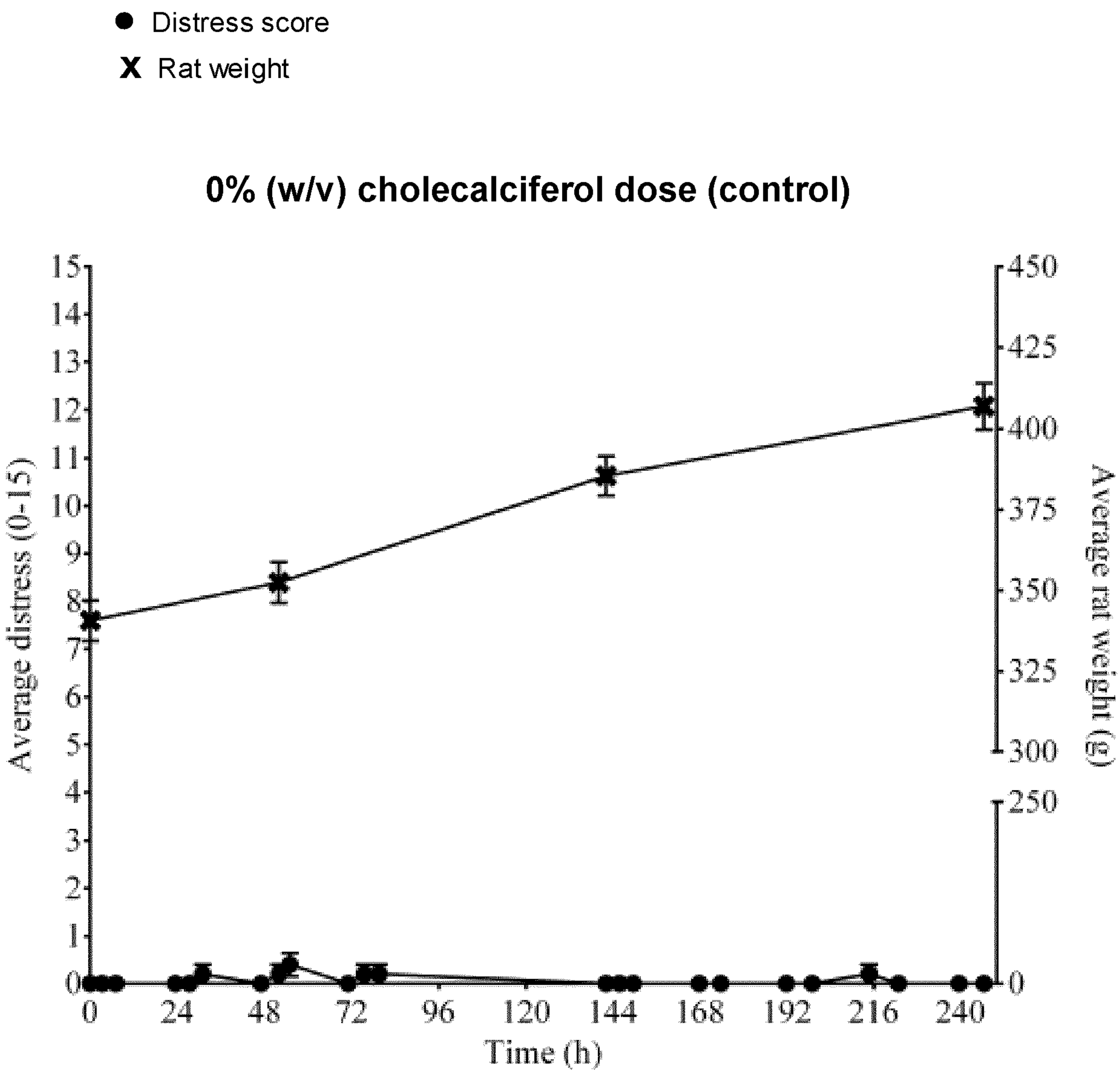
Distress score
Rat weight
0% (w/v) cholecalciferol dose (control)
Average distress (0-15)
Average rat weight (g)
Time (h)
0
24
48
72
96
120
144
168
192
216
240
450
425
400
375
350
325
300
250

Fig. 14(a)

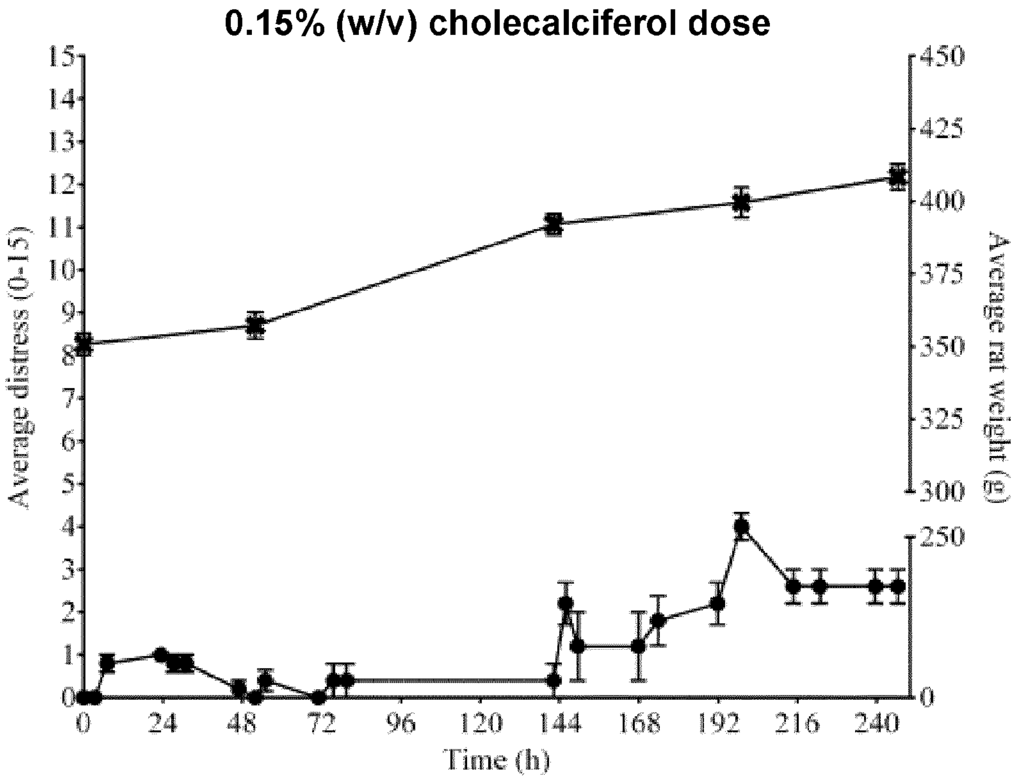


Fig. 14(b)

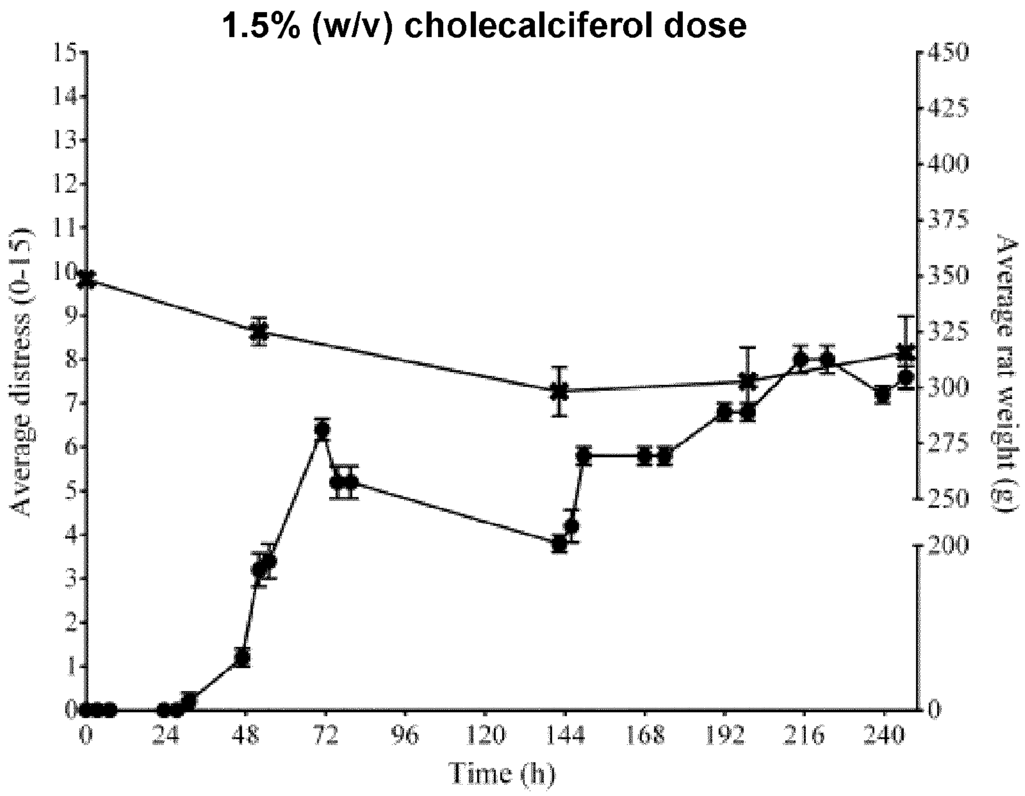


Fig. 14(c)

9% (w/v) cholecalciferol dose

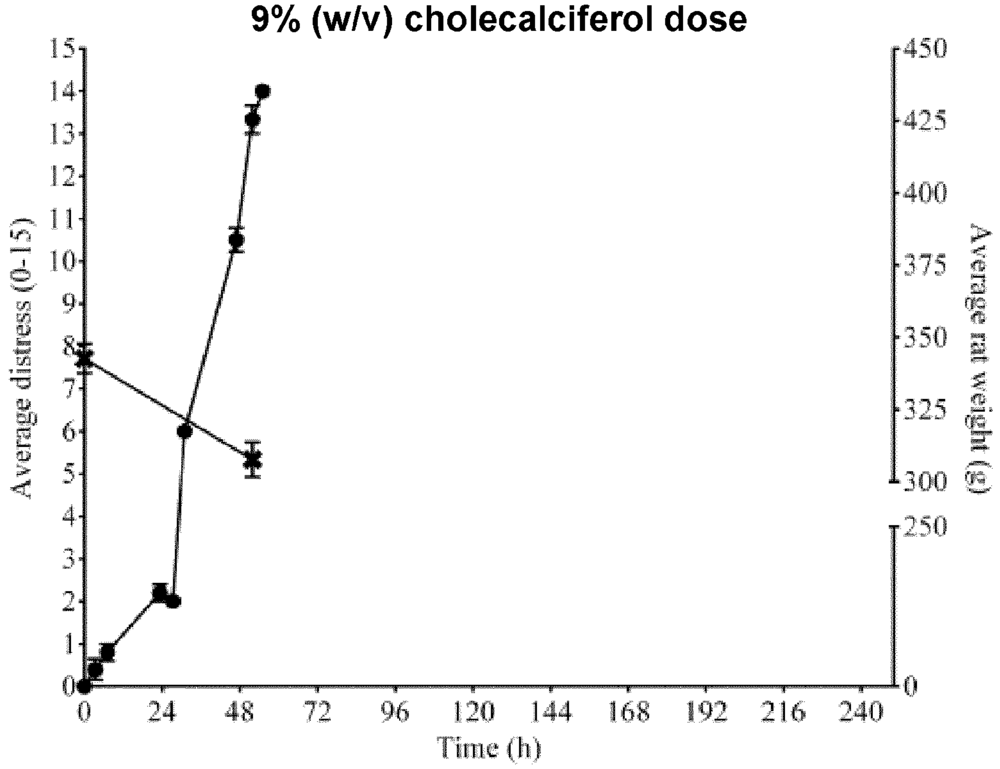


Fig. 14(d)

20% (w/v) cholecalciferol dose

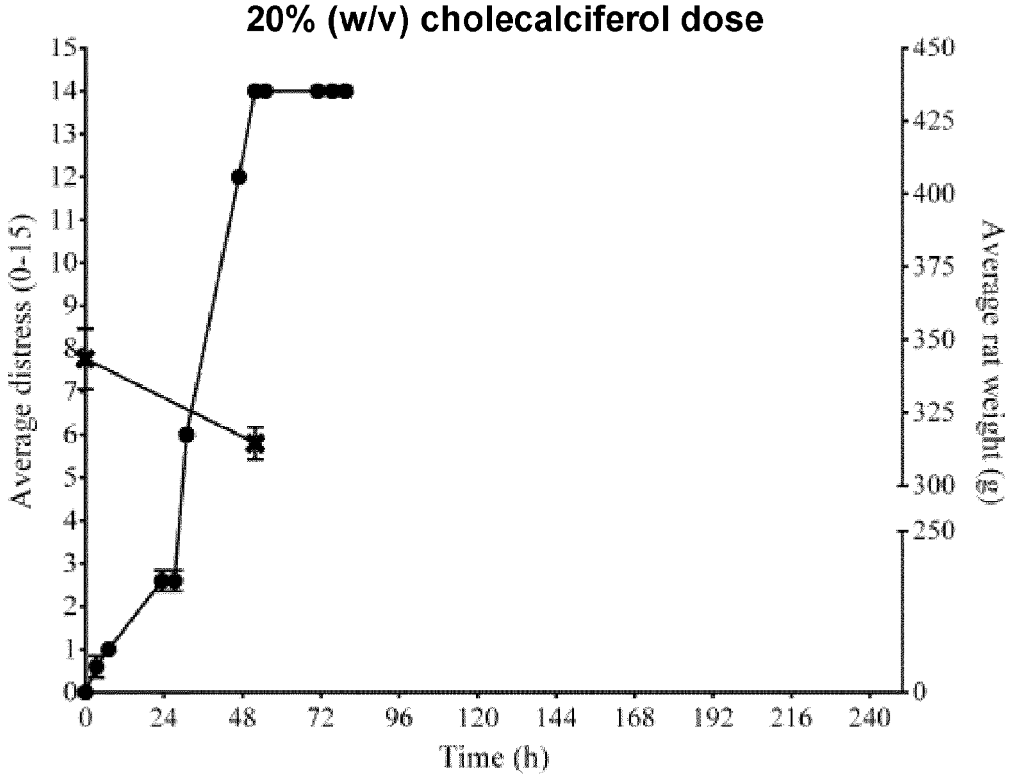


Fig. 14(e)

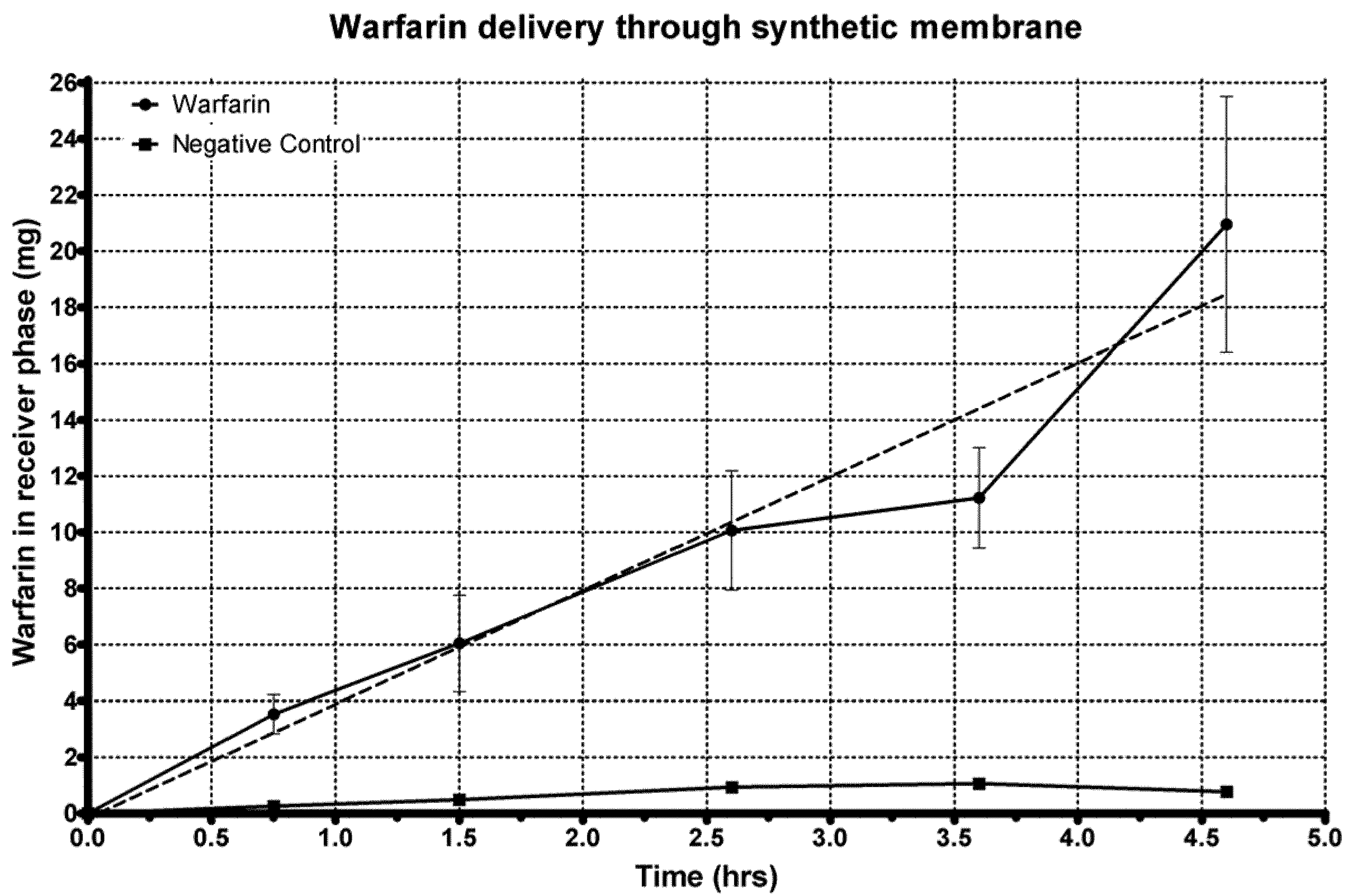


2.5% (w/v) Warfarin and 15% (v/v) PEG200 in 50:50 DMSO/ethanol
5 ml added to donor chamber (total dose of 125 mg (acute oral $LD_{50}$ 323 mg/kg)
Receiver phase consists of 90:10 ethanol water 6% PEG200

Fig. 15

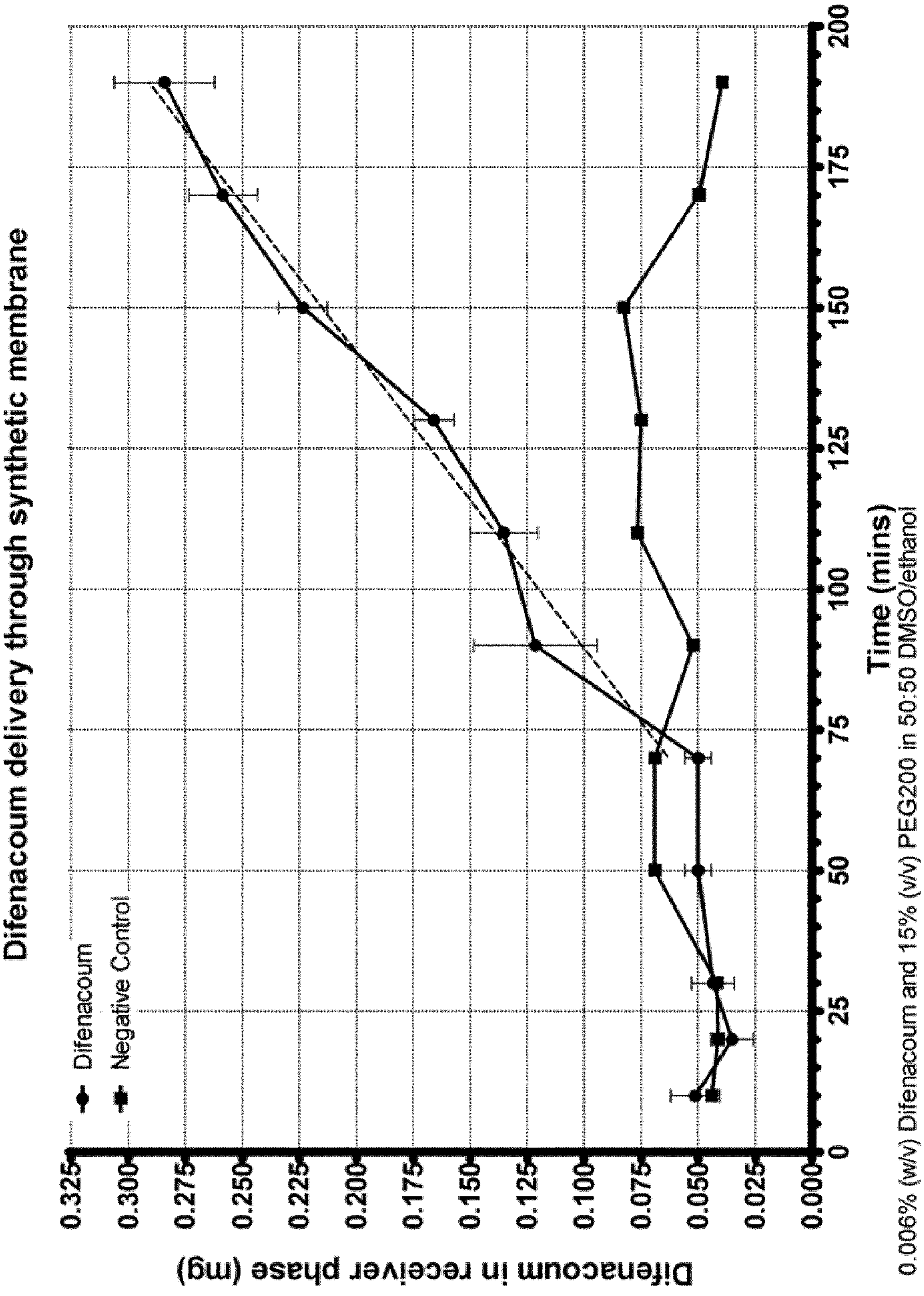


0.006% (w/v) Difenacoum and 15% (v/v) PEG200 in 50:50 DMSO/ethanol
5 ml added to donor chamber (total dose of 0.3 mg (acute oral $LD_{50}$ 1.8 mg/kg)
Receiver phase consists of 90:10 ethanol water 6% PEG200

**Fig. 16**

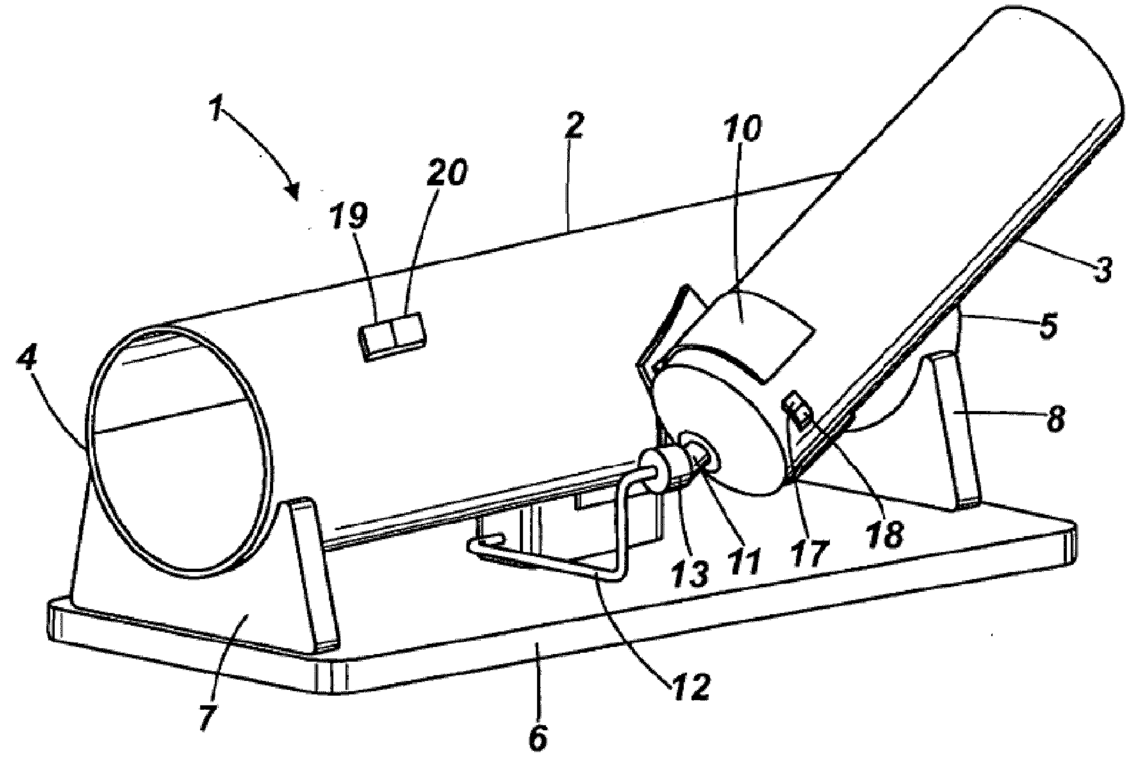


Fig. 17

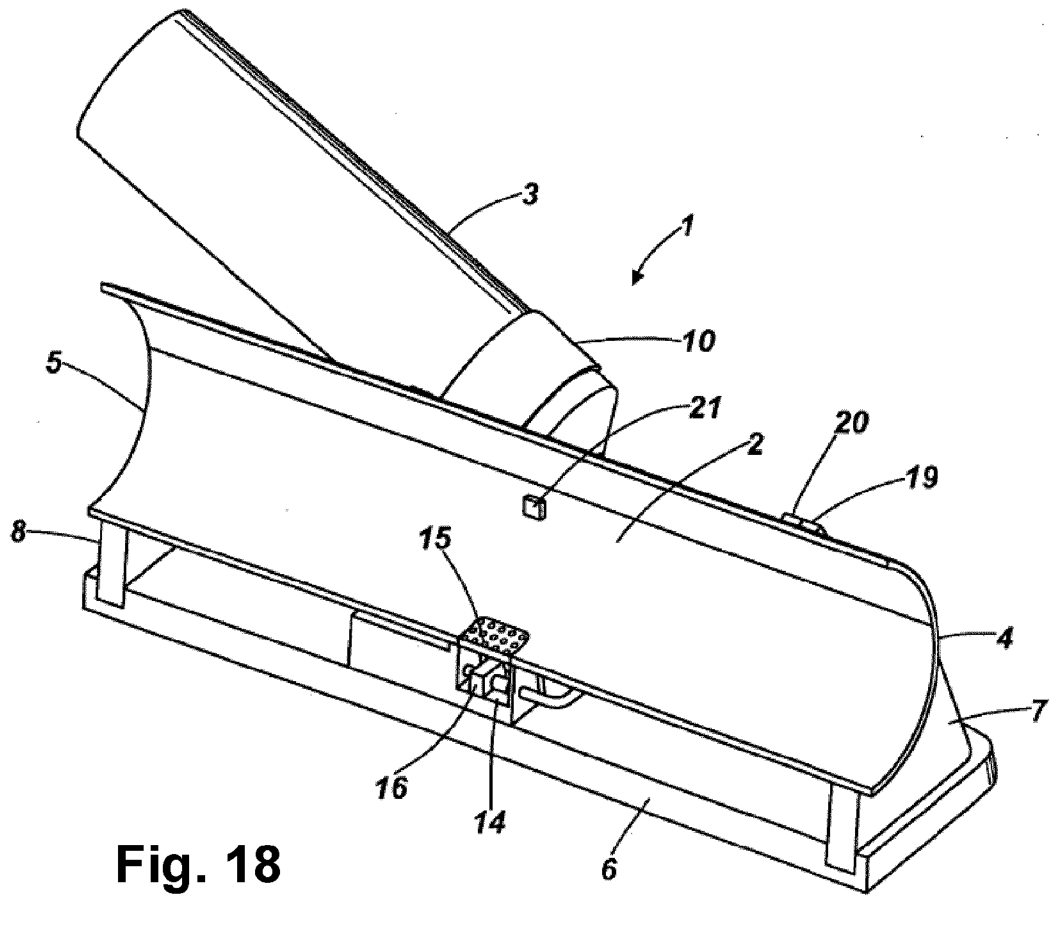


Fig. 18

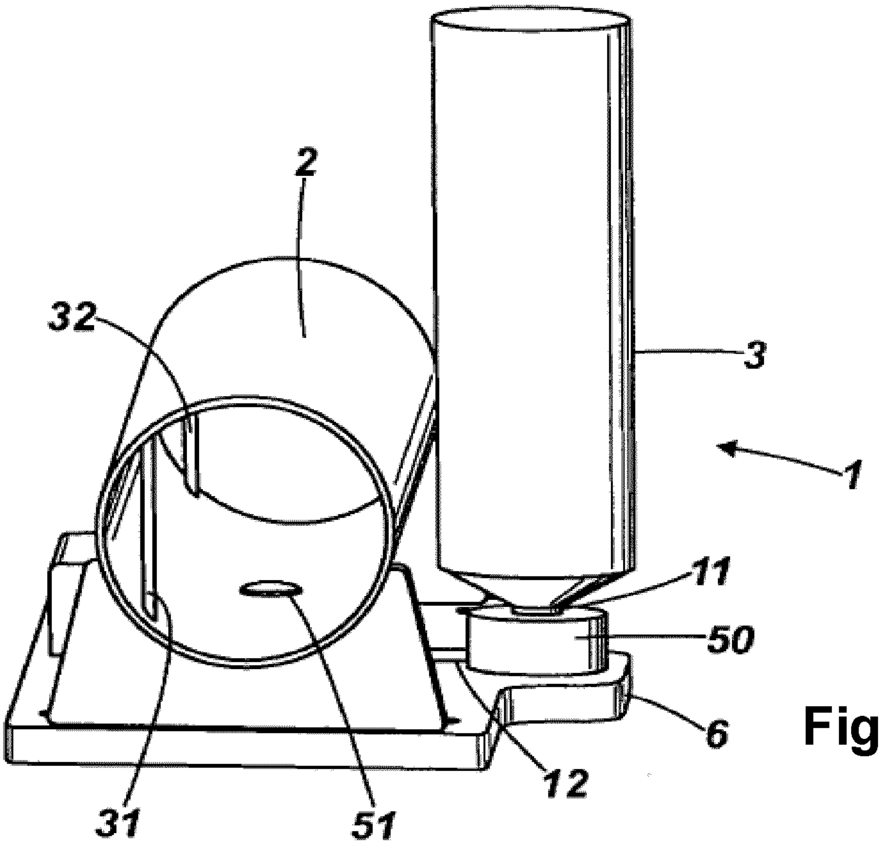


Fig. 19

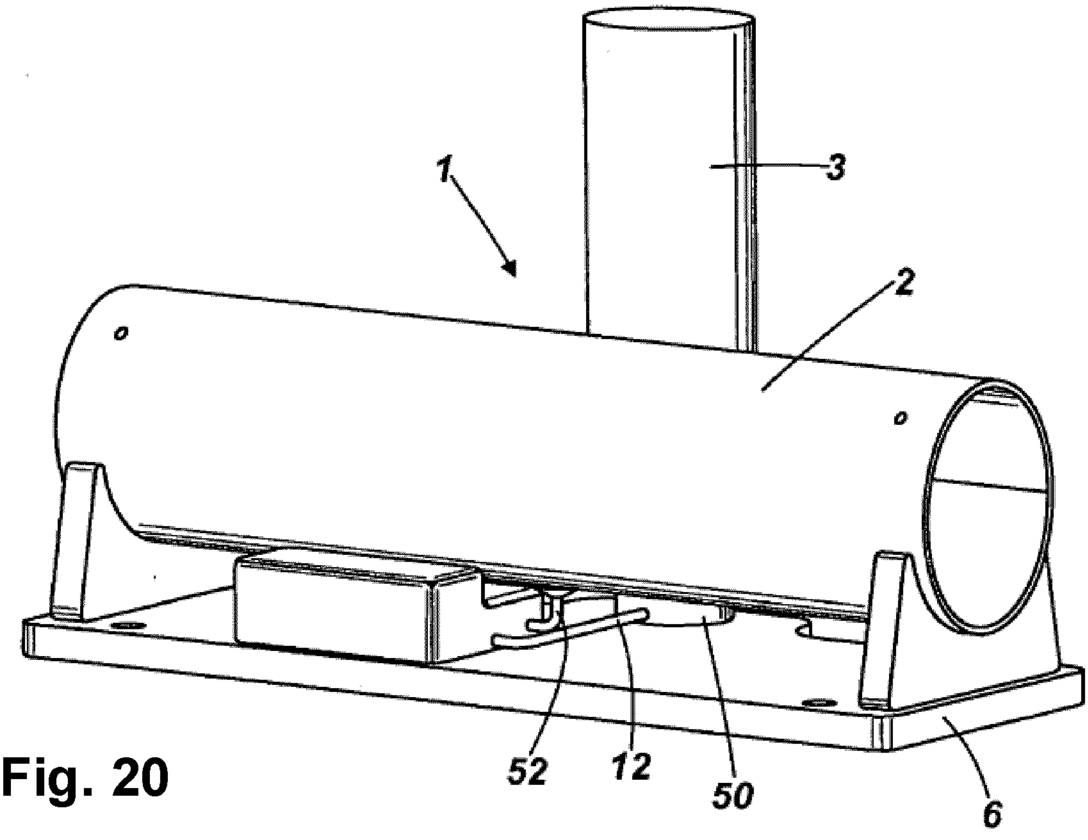


Fig. 20

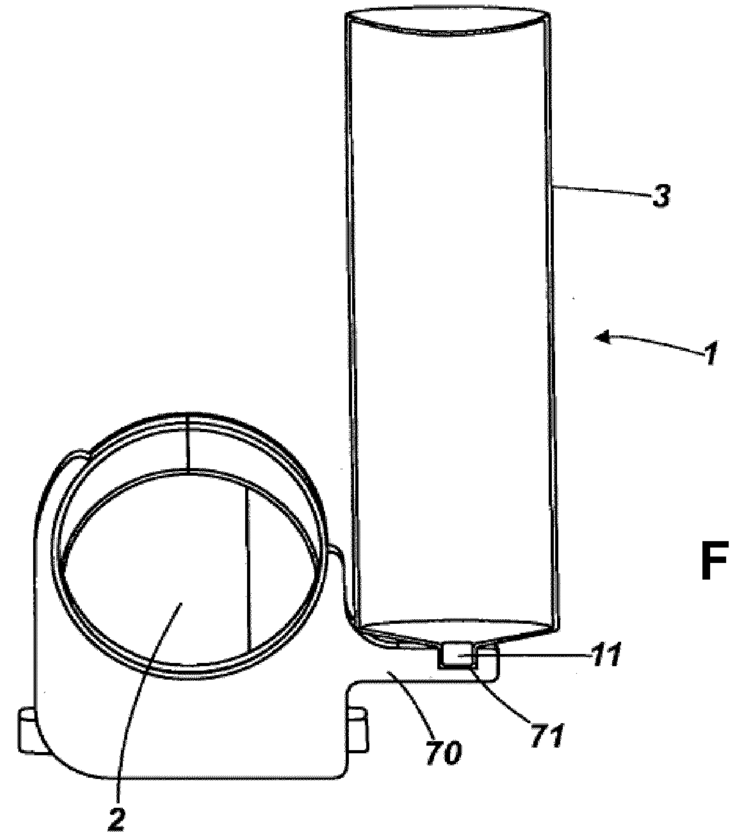


Fig. 21

Fig. 22

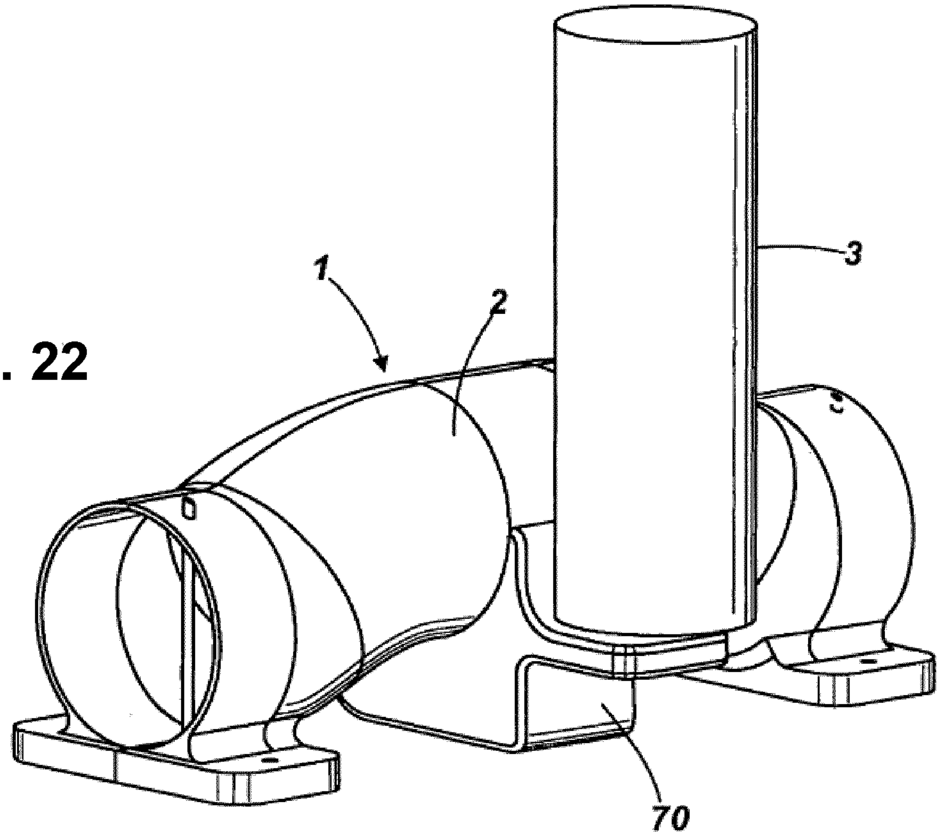

Europäisches Patentamt
European Patent Office
Office européen des brevets

# EUROPEAN SEARCH REPORT

Application Number
EP 20 15 7281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | DAVIES J ET AL: "Anin-vitro-in-vivomodel for the transdermal delivery of cholecalciferol for the purposes of rodent manage", INTERNATIONAL JOURNAL OF PHARMACEUTICS, ELSEVIER, NL, vol. 487, no. 1, 30 March 2015 (2015-03-30), pages 101-109, XP029158436, ISSN: 0378-5173, DOI: 10.1016/J.IJPHARM.2015.03.055 * the whole document * | | INV. A01N49/00 A01N25/02 A01P1/00 A01M25/00 |
| X | CN 103 340 198 A (PLANT PROT RES INST GUANGDONG ACADEMY AGRICULTURAL SCIENCES) 9 October 2013 (2013-10-09) * examples 1-5 * * claims 1-4 * | 1-3, 6-11,13, 14 | |
| X,D | NZ 548 082 A (WARREN ROY AGNEW) 26 June 2009 (2009-06-26) * claims 1, 12, 14, 21-24 * | 1-15 | TECHNICAL FIELDS SEARCHED (IPC) |
| X | WO 2010/071450 A1 (AGNEW WARREN ROY [NZ]) 24 June 2010 (2010-06-24) * claims 1-4, 8, 12 * * "Preferred Embodiments"; pages 7-8 * | 1-15 | A01N |

-/--

The present search report has been drawn up for all claims

2

| Place of search | Date of completion of the search | Examiner |
|---|---|---|
| Munich | 7 July 2020 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 15 7281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MAJELLA E. LANE: "Skin penetration enhancers", INTERNATIONAL JOURNAL OF PHARMACEUTICS, vol. 447, no. 1-2, 1 April 2013 (2013-04-01), pages 12-21, XP055171893, ISSN: 0378-5173, DOI: 10.1016/j.ijpharm.2013.02.040 * abstract * * 4.8 Sulphoxides; page 18 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 7 July 2020 | Davies, Maxwell |

2

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 2 of 2

**ANNEX TO THE EUROPEAN SEARCH REPORT ON EUROPEAN PATENT APPLICATION NO.** EP 20 15 7281

This annex lists the patent family members relating to the patent documents cited in the above-mentioned European search report. The members are as contained in the European Patent Office EDP file on
The European Patent Office is in no way liable for these particulars which are merely given for the purpose of information.

07-07-2020

| Patent document cited in search report | Publication date | Patent family member(s) | Publication date |
|---|---|---|---|
| CN 103340198 A | 09-10-2013 | NONE | |
| NZ 548082 A | 26-06-2009 | NONE | |
| WO 2010071450 A1 | 24-06-2010 | US 2011257135 A1<br>WO 2010071450 A1 | 20-10-2011<br>24-06-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010106352 A
- NZ 548082
- WO 2010071450 A1
- US 20110257135 A1
- WO 2010106352 A1


### Non-patent literature cited in the description


- **CORRIGAN, O. I. ; FARVAR, M. A. ; HIGUCHI, W. I.** Drug membrane transport enhancement using high energy drug polyvinylpyrrolidone (PVP) co precipitates. *International Journal of Pharmaceutics,* 1980, vol. 5, 229-238
- **HAIGH, J. M. ; SMITH, E. W.** The selection and use of natural and synthetic membranes for in vitro diffusion experiments. *European Journal of Pharmaceutical Sciences,* 1994, vol. 2 (5-6), 311-330
- **WANG, T. ; KASICHAYANULA, S. ; GU, X.** In vitro permeation of repellent DEET and sunscreen oxybenzone across three artificial membranes. *International Journal of Pharmaceutics,* 2006, vol. 310 (1-2), 110-7
- **WISSING, S. A ; MÜLLER, R. H.** Solid lipid nanoparticles as carrier for sunscreens: in vitro release and in vivo skin penetration. *Journal of Controlled Release: official journal of the Controlled Release Society,* 2002, vol. 81 (3), 225-33
- **STOUGHTON, R. B. ; FRITSCH, W.** Influence of Dimethylsulfoxide (DMSO) on Human Percutaneous Absorption. *Arch Dermatol,* 1964, vol. 90 (5), 512-517
- **WILLIAMS, A. C. ; BARRY, B. W.** Penetration enhancers. *Advanced Drug Delivery Reviews,* 2012, vol. 64, 128-137
- **LARRUCEA, E. ; ARELLANO, A ; SANTOYO, S. ; YGARTUA, P.** Combined effect of oleic acid and propylene glycol on the percutaneous penetration of tenoxicam and its retention in the skin. *European Journal of Pharmaceutics and Bio pharmaceutics: Official Journal of Arbeitsgemeinschaft für Pharmazeutische Verfahrenstechnik e.V.,* 2001, vol. 52 (2), 113-9
- **MESHULAM, Y. ; KADAR, T. ; WENGIER, A. ; DACHIR, S. ; LEVY, A.** Transdermal penetration of physostigmine: Effects of oleic acid enhancer. *Drug Development Research,* 1993, vol. 28 (4), 510-515
- **MOREIRA, T. S. ; DE SOUSA, V. P. ; PIERRE, M. B. R.** A novel transdermal delivery system for the anti-inflammatory lumiracoxib: influence of oleic acid on in vitro percutaneous absorption and in vivo potential cutaneous irritation. *AAPS PharmSciTech,* 2010, vol. 11 (2), 621-9
- **BARRY, B. W.** Dermatological Formulations. Marcel Dekker Inc, 1983, 49-94
- **GWAK, H. S. ; CHUN, I. K.** Effect of vehicles and penetration enhancers on the in vitro percutaneous absorption of tenoxicam through hairless mouse skin. *International Journal of Pharmaceutics,* 2002, vol. 236 (1-2), 57-64
- Cholecalciferol. *British Pharmacopoeia,* 2012
- **HUBER, W. ; BARLOW, O. W.** Chemical and biological stability of crystalline vitamins D2 and D3 and their derivatives. *Journal of Biological Chemistry,* 1943, vol. 149, 125-137
- **GRADY, L. T. ; THAKKER, K. D.** Stability of solid drugs: Degradation of ergocalciferol and cholecalciferol at high humidity and elevated temperatures. *Journal of Pharmaceutical Sciences,* 1980, vol. 69 (9), 1099-1102
- **AULTON, M. E.** Aulton's Pharmaceutics: the design and manufacture of medicines. *Churchill Livingstone,* 2007
- Ethanol (96 per cent). *British Pharmacopiea,* 29 January 2013
- **AGNEW, W. R.** *Topical Pesticide Formulation,* 2011
- Co. *British Pharmacopoeia,* 30 January 2013
- **LARRUCEA, E. ; ARELLANO, A ; SANTOYO, S. ; YGARTUA, P.** Combined effect of oleic acid and propylene glycol on the percutaneous penetration of tenoxicam and its retention in the skin. *European Journal of Pharmaceutics and Biopharmaceutics: Official Journal of Arbeitsgemeinschaft für Pharmazeutische Verfahrenstechnik e.V,* 2001, vol. 52 (2), 113-9

- **CORRIGAN, O. I. ; FARVAR, M. A. ; HIGUCHI, W. I.** Drug membrane transport enhancement using high energy drug polyvinylpyrrolidone (PVP) co-precipitates. *International Journal of Pharmaceutics,* 1980, vol. 5, 229-238
- **WISSING, S. A ; MÜLLER, R. H.** Solid lipid nanoparticles as carrier for sunscreens: in vitro release and in vivo skin penetration. *Journal of Controlled Release: Official Journal of the Controlled Release Society,* 2002, vol. 81 (3), 225-33
- **STOUGHTON, R. B. ; FRITSCH, W.** Influence of dimethylsulfoxide (DMSO) on human percutaneous absorption. *Arch Dermatol,* 1964, vol. 90 (5), 512-517
- **WILLIAMS, A. C. ; BARRY, B. W.** Penetration Enhancers. *Advanced Drug Delivery Reviews,* 2012, vol. 64, 128-137
- **LARRUCEA, E. ; ARELLANO, A. ; SANTOYO, S. ; YGARTUA, P.** Combined effect of oleic acid and propylene glycol on the percutaneous penetration of tenoxicam and its retention in the skin. *European Journal of Pharmaceutics and Biopharmaceutics,* 2001, vol. 52 (2), 113-9
- **WOLFENSOHN, S. ; LLOYD, M.** Handbook of Laboratory Animal Management and Welfare. Blackwell Publishing Ltd, 2003
- Colecalciferol. *British Pharmacopoeia,* 2012
- **AULTON, M. E.** Aulton's Pharmaceutics: The design and manufacture of medicines. Churchill Livingstone, 2007
- Efficacy evaluation of rodenticides Laboratory tests for evaluation of the toxicity and acceptability of rodenticides and rodenticide preparations. *EPPO,* 1998